(19) **Europäisches Patentamt / European Patent Office / Office européen des brevets**

(11) **EP 4 586 154 A1**

(12) **EUROPEAN PATENT APPLICATION**
published in accordance with Art. 153(4) EPC

(43) Date of publication:
**16.07.2025 Bulletin 2025/29**

(21) Application number: **23863018.0**

(22) Date of filing: **29.08.2023**

(51) International Patent Classification (IPC):
***G06N 20/00*** *(2019.01)*

(52) Cooperative Patent Classification (CPC):
**G06N 20/00**

(86) International application number:
**PCT/JP2023/031153**

(87) International publication number:
**WO 2024/053479 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.09.2022 JP 2022141020**

(71) Applicant: **Sony Semiconductor Solutions Corporation**
**Atsugi-shi, Kanagawa 243-0014 (JP)**

(72) Inventors:
- **MATSUMOTO, Nana**
  **Atsugi-shi, Kanagawa 243-0014 (JP)**
- **FUJITA, Takafumi**
  **Atsugi-shi, Kanagawa 243-0014 (JP)**

(74) Representative: **2SPL Patentanwälte PartG mbB**
**Landaubogen 3**
**81373 München (DE)**

(54) **INFORMATION PROCESSING DEVICE, INFORMATION PROCESSING METHOD, COMPUTER-READABLE NON-TRANSITORY STORAGE MEDIUM, AND TERMINAL DEVICE**

(57) An information processing device includes a control unit. The control unit evaluates equivalence between a first learning model before weight reduction by a weight reduction method and a second learning model after the weight reduction by the weight reduction method. The control unit determines the second learning model on the basis of a result of the evaluation.

FIG.1

**Description**

Field

The present disclosure relates to an information processing device, an information processing method, a computer-readable non-transitory storage medium, and a terminal device.

Background

With the spread of artificial intelligence (AI), provision of various services using an AI model such as a convolutional neural network (CNN) model or a deep neural network (DNN) model is spreading.

In general, it is known that an operation amount of the AI model is large and a load on a processor is high. Thus, in order to reduce the load applied to the processor, a technology of reducing the operation amount of the AI model is known.

Citation List

Patent Literature

Patent Literature 1: Japanese Patent Application Laid-open No. 2022-14569

Summary

Technical Problem

Recognition accuracy is mainly used as an index of weight reduction of an AI model. For example, the weight reduction of the AI model is performed in such a manner that the recognition accuracy of the AI model after the weight reduction becomes equal to or greater than a predetermined value.

However, in conventional weight reduction processing, although performance of the AI model after the weight reduction is evaluated, a change in the AI model before and after the weight reduction is not evaluated. That is, there is a possibility that the AI model itself changes before and after the weight reduction.

Thus, the present disclosure provides a mechanism capable of further controlling a change in an AI model before and after weight reduction processing.

Note that the above problem or object is merely one of a plurality of problems or objects that can be solved or achieved by a plurality of embodiments disclosed in the present specification.

Solution to Problem

An information processing device of the present disclosure includes a control unit. The control unit evaluates equivalence between a first learning model before weight reduction by a weight reduction method and a second learning model after the weight reduction by the weight reduction method. The control unit determines the second learning model on the basis of a result of the evaluation.

Brief Description of Drawings

FIG. 1 is a view for describing an example of weight reduction processing according to a proposed technology of the present disclosure.

FIG. 2 is a view for describing an example of the weight reduction processing.

FIG. 3 is a view for describing a feature amount extracted by a neuron of a pre-compression model.

FIG. 4 is a view for describing a feature amount extracted by a neuron of a post-compression model.

FIG. 5 is a view for describing another example of the weight reduction processing.

FIG. 6 is a block diagram illustrating a configuration example of an information processing device according to an embodiment of the present disclosure.

FIG. 7 is a view illustrating an example of first XAI processing according to the embodiment of the present disclosure.

FIG. 8 is a view illustrating an example of first equivalence evaluation processing according to the embodiment of the present disclosure.

FIG. 9 is a view illustrating another example of the first equivalence evaluation processing according to the embodiment of the present disclosure.

FIG. 10 is a view illustrating an example of second XAI processing according to the embodiment of the present disclosure.

FIG. 11 is a view illustrating an example of second equivalence evaluation processing according to the embodiment of the present disclosure.

FIG. 12 is a view illustrating an example of third XAI processing according to the embodiment of the present disclosure.

FIG. 13 is a view illustrating an example of third equivalence evaluation processing according to the embodiment of the present disclosure.

FIG. 14 is a view illustrating an example of the third XAI processing and the third equivalence evaluation processing according to the embodiment of the present disclosure.

FIG. 15 is a view illustrating another example of the third XAI processing and the third equivalence evaluation processing according to the embodiment of the present disclosure.

FIG. 16 is a view for describing an example of first determination processing according to the embodiment of the present disclosure.

FIG. 17 is a view for describing another example of the first determination processing according to the embodiment of the present disclosure.

FIG. 18 is a view for describing another example of the first determination processing according to the embodiment of the present disclosure.

FIG. 19 is a flowchart illustrating an example of a flow of second determination processing according to the embodiment of the present disclosure.

FIG. 20 is a view for describing another example of the second determination processing according to the embodiment of the present disclosure.

FIG. 21 is a view for describing an example of third determination processing according to the embodiment of the present disclosure.

FIG. 22 is a view for describing another example of the third determination processing according to the embodiment of the present disclosure.

FIG. 23 is a view for describing another example of the third determination processing according to the embodiment of the present disclosure.

FIG. 24 is a view for describing another example of the third determination processing according to the embodiment of the present disclosure.

FIG. 25 is a view for describing an example of presentation information presented by the information processing device according to the embodiment of the present disclosure.

FIG. 26 is a view illustrating an example of a presentation image presented by the information processing device according to the embodiment of the present disclosure.

FIG. 27 is a view for describing another example of the presentation information presented by the information processing device according to the embodiment of the present disclosure.

FIG. 28 is a flowchart illustrating an example of a flow of model generation processing according to the embodiment of the present disclosure.

FIG. 29 is a view illustrating a configuration example of an information processing system according to the embodiment of the present disclosure.

FIG. 30 is a view for describing an example of an application function registration method according to the embodiment of the present disclosure.

FIG. 31 is a sequence diagram illustrating an example of a flow of information processing executed in the information processing system according to the embodiment of the present disclosure.

FIG. 32 is a sequence diagram illustrating an example of a flow of the information processing executed in the information processing system according to the embodiment of the present disclosure.

FIG. 33 is a view for describing connection between a cloud-side information processing device and an edge-side information processing device according to the embodiment of the present disclosure.

FIG. 34 is a block diagram illustrating a configuration example of the cloud-side information processing device according to the embodiment of the present disclosure.

FIG. 35 is a block diagram illustrating an internal configuration example of a camera according to the embodiment of the present disclosure.

FIG. 36 is a view illustrating an example of a structure of an image sensor according to the embodiment of the present disclosure.

FIG. 37 is a view illustrating a deployment example of an AI model and an AI application according to the embodiment of the present disclosure.

FIG. 38 is a view illustrating a configuration example of a cluster according to the embodiment of the present disclosure.

FIG. 39 is a view illustrating an example of a hardware configuration of the information processing device according to the embodiment of the present disclosure.

FIG. 40 is a view for describing an example of a flow of relearning processing/update processing according to the embodiment of the present disclosure.

FIG. 41 is a view illustrating an example of a login screen of a marketplace according to the embodiment of the present disclosure.

FIG. 42 is a view illustrating an example of a marketplace developer screen according to the embodiment of the present disclosure.

FIG. 43 is a view illustrating an example of a marketplace user screen according to the embodiment of the present disclosure.

Description of Embodiments

In the following, embodiments of the present disclosure will be described in detail with reference to the accompanying drawings. Note that in the present specification and the drawings, substantially the same elements are denoted by the same reference sign, and overlapped description will be omitted.

Furthermore, although description may be made with specific values in the present specification and the drawings, the values are merely examples and other values may be applied.

Each of one or a plurality of embodiments (including examples and modification examples) described in the following can be performed independently. On the other hand, at least a part of the plurality of embodiments described in the following may be appropriately combined and performed with at least a part of the other embodiments. The plurality of embodiments may include novel features different from each other. Thus, the plurality of embodiments can contribute to solving objects or problems different from each other, and can exhibit effects different from each other.

<<1. Introduction>>

<1.1. Outline of a proposed method>

As described above, with the spread of AI, various services using a learning model (also referred to as an AI model) generated by machine learning are being provided.

The learning model is deployed, for example, in a personal computer (PC) or a terminal device such as a camera in addition to a cloud server, and is used for image recognition processing or the like. In a case where the learning model is deployed in the PC or the terminal device, there is a case where weight reduction processing is performed on the learning model in order to reduce an operation amount and a size of the learning model.

Hereinafter, the learning model before the weight reduction processing may be referred to as a pre-compression model M0, and the learning model after the weight reduction processing may be referred to as a post-compression model M1.

In a case where the weight reduction processing is performed in such a manner, it is desired to be able to confirm whether performance of the learning model is equivalent to a certain degree before and after the processing. Alternatively, it is desired to generate the post-compression model M1 in which the performance of the learning model is equivalent to a certain degree before and after the processing.

Note that how much the performance is equivalent before and after the weight reduction processing varies depending on processing in which the learning model is used (such as image recognition processing, speech recognition processing, and the like).

Conventionally, the weight reduction processing has been performed with recognition accuracy of the post-compression model M1 as an index. That is, the weight reduction processing has been performed in such a manner that the recognition accuracy of the post-compression model M1 becomes high. However, in the conventional weight reduction processing, whether the learning model has changed before and after the processing has not been considered.

Thus, in a proposed technology of the present disclosure, an information processing device evaluates a change in a learning model before and after weight reduction processing as equivalence.

For example, the information processing device evaluates equivalence between a pre-compression model M0 before weight reduction by a weight reduction method (example of a first learning model) and a post-compression model M1 after the weight reduction by the weight reduction method (example of a second learning model). The information processing device determines the post-compression model M1 (also referred to as a final model MF) on the basis of a result of the evaluation.

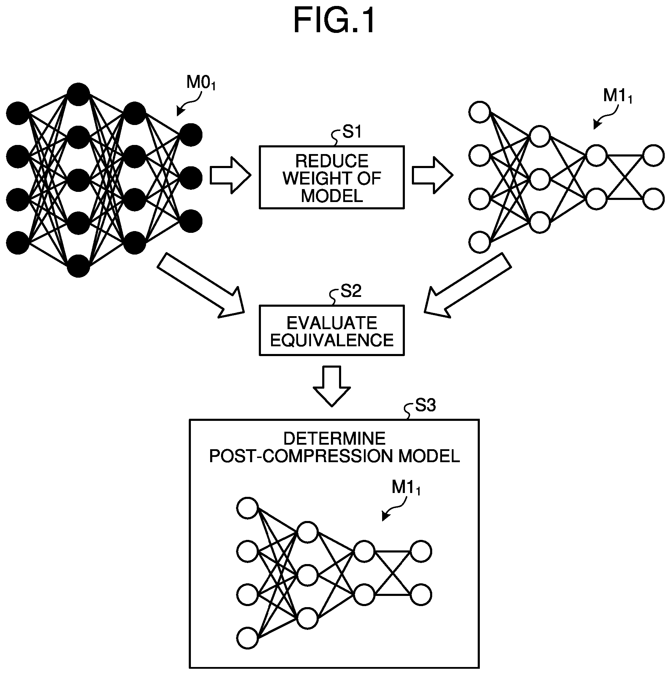

FIG. 1 is a view for describing an example of the weight reduction processing according to the proposed technology of the present disclosure. The weight reduction processing illustrated in FIG. 1 is executed by, for example, the information processing device.

As illustrated in FIG. 1, the information processing device executes model weight reduction on a pre-compression model $M0_1$ (Step S1), and generates a post-compression model $M1_1$.

Then, the information processing device evaluates equivalence between the pre-compression model $M0_1$ and the post-compression model $M1_1$ (Step S2). The information processing device determines the post-compression model $M1_1$ (final model MF) on the basis of a result of the equivalence evaluation (Step S3).

Here, the equivalence is an index indicating how much the pre-compression model $M0_1$ and the post-compression model $M1_1$ are the same (are not changed), for example, in terms of performance and fairness. The equivalence can be calculated by utilization of, for example, an eXplainable AI (XAI) technology.

<1.2. Problem>

Here, a problem of the weight reduction processing will be described in detail. As described above, in the conventional weight reduction processing, the equivalence of the learning model is not considered before and after the processing.

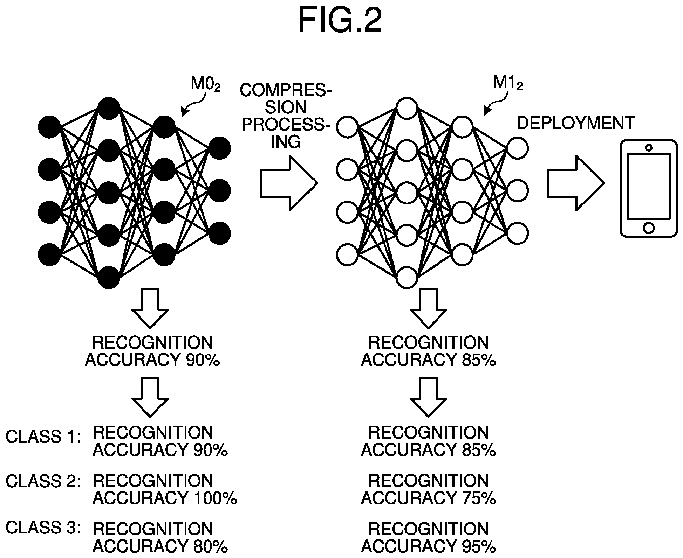

FIG. 2 is a view for describing an example of the weight reduction processing. As illustrated in FIG. 2, for example, the weight reduction processing can be executed to deploy the learning model to a terminal device. Here, a description will be made on the assumption that the information processing device (not illustrated) performs the weight reduction processing.

In the example of FIG. 2, the information processing device executes the weight reduction processing by performing quantization on a pre-compression model $M0_2$ that performs class classification, and generates a post-compression model $M1_2$. At this time, for example, the information processing device generates the post-compression model $M1_2$ by using recognition accuracy of the post-compression model $M1_2$ as an index.

In the example of FIG. 2, the recognition accuracy of the pre-compression model $M0_2$ is 90%, and the recognition accuracy of the post-compression model $M1_2$ is 85%. As described above, the pre-compression model $M0_2$ and the post-compression model $M1_2$ have substantially equivalent performance in terms of the recognition accuracy.

However, regarding the recognition accuracy of each individual class, for example, in a class 2, the recognition accuracy of the pre-compression model $M0_2$ is 100%, and the recognition accuracy of the post-compression model $M1_2$ is 75%.

As described above, even when there is no large difference in the recognition accuracy in all the classes before and after the weight reduction processing, there is a possibility that a large difference is generated in the recognition accuracy in the individual classes before and after the weight reduction processing.

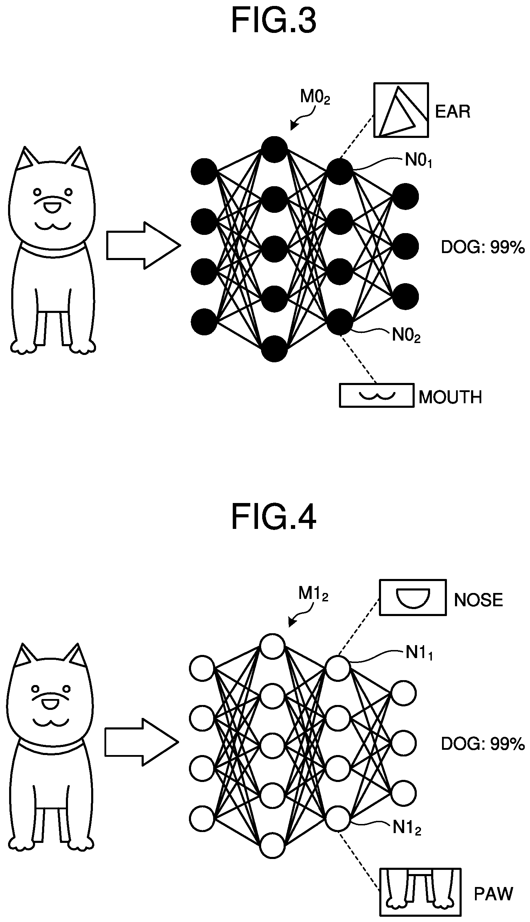

In addition, there is a possibility that a difference is generated in feature amounts extracted by individual neurons. This point will be described with reference to FIG. 3 and FIG. 4.

FIG. 3 is a view for describing feature amounts extracted by neurons of the pre-compression model $M0_2$. FIG. 4 is a view for describing feature amounts extracted by neurons of the post-compression model $M1_2$.

As illustrated in FIG. 3, it is assumed that a neuron $N0_1$ of the pre-compression model $M0_2$ extracts an "ear" as a feature amount, and a neuron $N0_2$ extracts a "mouth" as a feature amount. As a result, the pre-compression model $M0_2$ outputs a result that a probability of being a "dog" is 99% with respect to an input image.

As illustrated in FIG. 4, it is assumed that a neuron $N1_1$ of the post-compression model $M1_2$ extracts a "nose" as a feature amount, and a neuron $N1_2$ extracts "paws" as a feature amount. Note that the neuron $N1_1$ of the post-compression model $M1_2$ corresponds to the neuron $N0_1$ of the pre-compression model $M0_2$. The neuron $N1_2$ of the post-compression model $M1_2$ corresponds to the neuron $N0_2$ of the pre-compression model $M0_2$. As a result, the post-compression model $M1_2$ outputs a result that a probability of being a "dog" is 99% with respect to the input image.

As described above, there is a possibility that the feature amounts extracted by the individual neurons are different between the pre-compression model $M0_2$ and the post-compression model $M1_2$ even when the results of the class classification are the same.

As described above, even when the difference in the recognition accuracy in all the classes is small before and after the weight reduction processing, there is a possibility that the difference in the recognition accuracy in the individual classes is large or there is a change in the feature amounts extracted by the individual neurons.

As described above, even when there is no change in the recognition accuracy before and after the weight reduction processing, there is a possibility that the model is changed between the pre-compression model $M0_2$ and the post-compression model $M1_2$, that is, the equivalence is deteriorated.

In addition, there is a possibility that the equivalence is not secured in terms of fairness before and after the weight reduction processing.

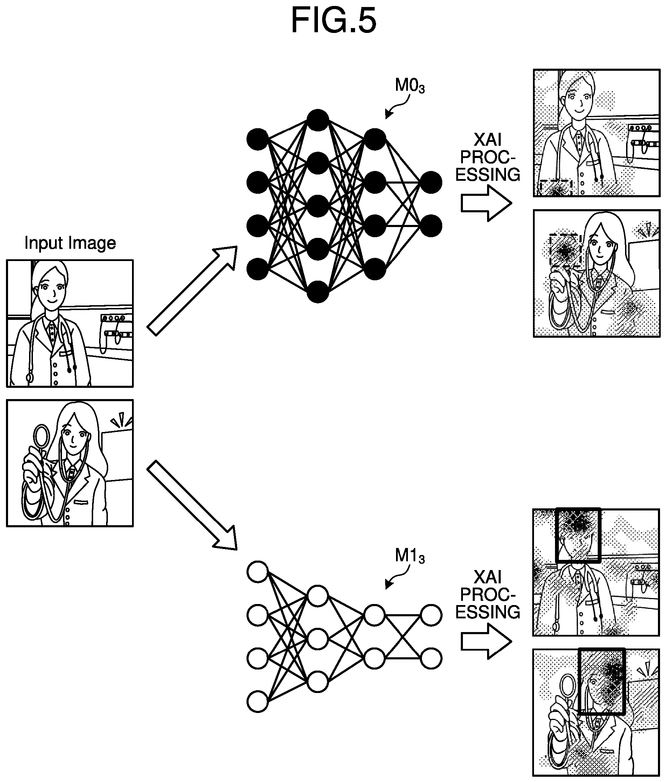

FIG. 5 is a view for describing another example of the weight reduction processing. Processing of reducing weight of a learning model of classifying whether a person included in an input image is a "nurse" or a "doctor" is illustrated in FIG. 5. Note that here, a description will be made on the assumption that the information processing device (not illustrated) performs the weight reduction processing and the like.

As illustrated in FIG. 5, for example, it is assumed that the information processing device executes XAI processing on a pre-compression model $M0_3$ by using the input image. Here, it is assumed that the information processing device generates a heat map on the basis of a feature amount as the XAI processing by using a technology such as "Grad-CAM" or "Grad-CAM++", for example. As a result, the information processing device can visualize a determination basis of a classification result of the pre-compression model $M0_3$.

From a heat map $HM0_3$ in FIG. 5, it can be seen that the pre-compression model $M0_3$ has performed classification on the basis of a medical instrument, a color of clothes, a length of a sleeve, and the like included in the input image.

From the above, it can be seen that no bias is applied to the pre-compression model $M0_3$, and fairness is secured for the pre-compression model $M0_3$.

On the other hand, for example, it is assumed that the information processing device executes the XAI processing on a post-compression model $M1_3$ by using an input image $IM0_3$. Here, similarly to a case of the pre-compression model $M0_3$, it is assumed that the information processing device generates a heat map on the basis of a feature amount as the XAI processing by using the technology such as "Grad-CAM" or "Grad-CAM++", for example.

From the heat map in FIG. 5, it can be seen that the post-compression model $M1_3$ performs classification on the basis of a face, a hairstyle, and the like of a person included in the input image.

From the above, there is a possibility that the post-compression model $M1_3$ is biased by the person, and there is a possibility that fairness is not secured for the post-processing model $M1_3$.

As described above, even when there is no change in the recognition accuracy by test data before and after the weight reduction processing, there is a possibility that the model is changed between the pre-compression model $M0_3$ and the post-compression model $M1_3$, that is, the equivalence is deteriorated in terms of fairness.

As described above, in the conventional weight reduction processing, although the recognition accuracy of the post-compression model M1 can be secured to desired accuracy or more, a change in the equivalence of the learning model before and after the weight reduction processing is not considered.

Thus, in the proposed technology of the present disclosure, as described above, the information processing device evaluates the equivalence between the pre-compression model M0 and the post-compression model M1. The information processing device determines the post-compression model M1 (final model MF) on the basis of a result of the evaluation of the equivalence. As a result, the information processing device can execute the weight reduction processing in consideration of the change in the equivalence of the learning model before and after the weight reduction processing.

<<2. Configuration example of the information processing device>>

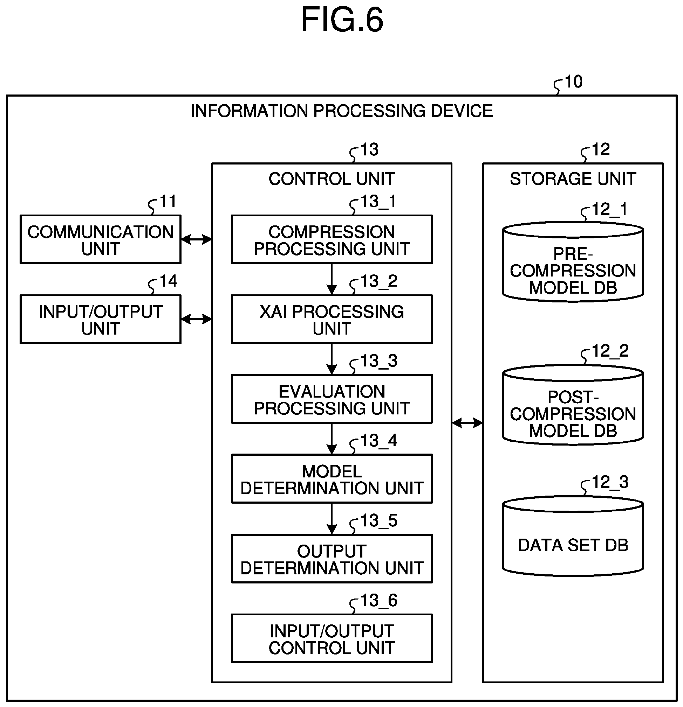

FIG. 6 is a block diagram illustrating a configuration example of an information processing device 10 according to the embodiment of the present disclosure. The information processing device 10 is a device that performs the weight reduction processing and equivalence evaluation processing.

As illustrated in FIG. 6, the information processing device 10 includes a communication unit 11, a storage unit 12, a control unit 13, and an input/output unit 14.

[Communication unit 11]

The communication unit 11 is realized, for example, by a network interface card (NIC) or the like. Then, the communication unit 11 is connected to a network in a wired or wireless manner, and transmits and receives information to and from another information processing device.

[Storage unit 12]

The storage unit 12 is realized by a semiconductor memory element such as a random access memory (RAM) or a flash memory, or a storage device such as a hard disk or an optical disk, for example. As illustrated in FIG. 6, the storage unit 12 according to the embodiment includes a pre-compression model data base (DB) 12_1, a post-compression model DB 12_2, and a data set DB 12_3.

The pre-compression model DB 12_1 stores the pre-compression model M0 before the weight reduction processing is performed. The post-compression model DB 12_2 stores the post-compression model M1 after the weight reduction processing is performed. The data set DB 12_3 stores a data set used for the XAI processing (described later). In a case where the information processing device 10 learns the pre-compression model M0, the data set DB 12_3 may store a data set used for learning of the pre-compression model M0.

[Input/output unit 14]

The input/output unit 14 is a user interface to exchange information with a user. For example, the input/output unit 14 is an operation device for the user to perform various kinds of operation, such as a keyboard, mouse, operation key, and touch panel. Alternatively, the input/output unit 14 is a display device such as a liquid crystal display or an organic electroluminescence display (organic EL display). The input/output unit 14 may be an acoustic device such as a speaker or buzzer. Furthermore, the input/output unit 14 may be a lighting device such as a light emitting diode (LED) lamp.

[Control unit 13]

The control unit 13 is realized, for example, when a program (such as information processing program according to the present disclosure) stored in the information processing device 10 is executed by a central processing unit (CPU), a micro processing unit (MPU), or the like with a random access memory (RAM) or the like as a work area. Also, the control unit 13 is a controller, and can be realized by an integrated circuit such as an application specific integrated circuit (ASIC) or a field programmable gate array (FPGA), for example.

As illustrated in FIG. 6, the control unit 13 includes a compression processing unit 13_1, an XAI processing unit 13_2, an evaluation processing unit 13_3, a model determination unit 13_4, an output determination unit 13_5, and an input/output control unit 13_6, and realizes or executes a function and an action of information processing described below. Note that an internal configuration of the control unit 13 is not limited to the configuration illustrated in FIG. 6, and may be another configuration as long as being a configuration of performing the information processing described later. Also, a connection relationship of each processing unit included in the control unit 13 is not limited to the connection relationship illustrated in FIG. 6, and may be another connection relationship.

(Compression processing unit 13_1)

The compression processing unit 13_1 compress a size of the pre-compression model M0 by performing the weight reduction processing on the pre-compression model M0, and generates the post-compression model M1. The compression processing unit 13_1 acquires the pre-compression model M0 from, for example, the pre-compression model DB 12_1. The compression processing unit 13_1 stores the generated post-compression model M1 in the post-compression model DB 12_2.

The compression processing unit 13_1 executes at least one kind of the weight reduction processing such as pruning, quantization, distillation, and neural architecture search (NAS).

Pruning is a weight reduction method of removing a redundant connection relationship of the pre-compression model M0. The compression processing unit 13_1 reduces parameters of the post-compression model M1 or reduces a calculation amount by deleting a part of a network structure of the pre-compression model M0 by pruning.

Quantization is, for example, a weight reduction method of replacing a floating point parameter of the pre-compression model M0 or calculation performed by utilization of a floating point with an integer having a small bit length. Note that mixed precision quantization in which a bit length is changed for each layer of the pre-compression model M0 is also known.

Distillation is a method of reducing weight by causing a new model (post-compression model M1) to newly learn a relationship between an input and an output in the learned pre-compression model M0.

NAS is a method of automatically searching for a network structure. By using NAS, the compression processing unit 13_1 can create a lighter network without being restricted to an existing network structure.

As described above, the compression processing unit 13_1 executes the weight reduction of the pre-compression model M0 by using at least one of the various weight reduction methods. The compression processing unit 13_1 can perform the weight reduction processing by combining a plurality of the weight reduction methods, for example, by performing distillation after performing pruning and quantization.

For example, the compression processing unit 13_1 can perform weight reduction processing having different parameters on the one pre-compression model M0 and generate a plurality of the post-compression models M1. Alternatively, the compression processing unit 13_1 can perform the weight reduction processing of different methods on the one pre-compression model M0 and generate the plurality of post-compression models M1.

Note that the post-compression models M1 generated by the compression processing unit 13_1 are also referred to as candidate models (example of a first candidate learning model and a second candidate learning model).

(XAI Processing Unit 13_2)

The XAI processing unit 13_2 performs processing using an XAI technology on the pre-compression model M0 and the post-compression model M1. Examples of the XAI technology include the following technologies.

- Gradient-weighted class activation mapping (Grad-CAM)
- Grad-CAM++

- Local interpretable model-agnostic explanations (LIME)
- Anchor
- Influence
- Activation maximization
- Network dissection

Note that the XAI technology described above is an example, and the XAI processing unit 13_2 may execute the XAI processing by using another XAI technology other than the XAI technology described above.

The XAI processing unit 13_2 performs the XAI processing on the pre-compression model M0, and outputs a result of the processing to the evaluation processing unit 13_3. The XAI processing unit 13_2 performs the XAI processing on the post-compression model M1, and outputs a result of the processing to the evaluation processing unit 13_3.

The XAI processing unit 13_2 may execute the XAI processing by applying each of a plurality of the XAI technologies to the pre-compression model M0 and the post-compression model M1.

(Evaluation processing unit 13_3)

The evaluation processing unit 13_3 evaluates the equivalence of the pre-compression model M0 and the post-compression model M1 on the basis of a processing result of the XAI processing performed by the XAI processing unit 13_2. The evaluation processing unit 13_3 quantitatively evaluates the equivalence of the pre-compression model M0 and the post-compression model M1 by calculating a difference between the pre-compression model M0 and the post-compression model M1 as the equivalence (example of an evaluation value).

The evaluation processing unit 13_3 outputs an evaluation result to the model determination unit 13_4.

Note that details of the equivalence evaluation processing executed by the evaluation processing unit 13_3 will be described later.

(Model determination unit 13_4)

The model determination unit 13_4 determines the final model MF on the basis of the evaluation result of the equivalence by the evaluation processing unit 13_3. For example, in a case where the compression processing unit 13_1 generates a plurality of the post-compression models M1, the final model MF is determined by selection of one of the plurality of post-compression models M1.

For example, the model determination unit 13_4 outputs the final model MF to the post-compression model DB 12_2. The model determination unit 13_4 outputs, for example, information related to the final model MF to the output determination unit 13_5.

Note that details of determination processing executed by the model determination unit 13_4 will be described later.

(Output determination unit 13_5)

The output determination unit 13_5 determines whether to output the final model MF from the information processing device 10. For example, the output determination unit 13_5 determines whether to deploy the final model MF to a terminal device (not illustrated). Alternatively, the output determination unit 13_5 can determine whether the final model MF can be sold on a website for sale, such as a marketplace.

The output determination unit 13_5 determines whether to output the final model MF from the information processing device 10 on the basis of, for example, an evaluation result of the equivalence by the evaluation processing unit 13_3, more specifically, on the basis of the evaluation result of the equivalence which evaluation result indicates whether the equivalence is equal to or greater than a predetermined value. For example, when receiving at least one of selling on the marketplace and deploying on the terminal device with respect to the final model MF in which the evaluation of the equivalence is the first or more, the output determination unit 13_5 makes a determination.

As described above, the information processing device 10 according to the present embodiment uses the evaluation result of the equivalence separately from the recognition accuracy as an evaluation index of the model (such as an evaluation index of whether to perform deploying). For example, the evaluation result of the equivalence can be used as a standard quality index of a product of deployment of the final model MF.

(Input/output control unit 13_6)

The input/output control unit 13_6 controls the input/output unit 14, presents information to the user, and receives an input from the user. The input/output control unit 13_6 presents, for example, the evaluation result of the equivalence by the evaluation processing unit 13_3 to the user. Details of the evaluation result of the equivalence which result is presented to the user by the input/output control unit 13_6 will be described later.

<<3. Example of information processing>>

Next, an example of information processing executed by the information processing device 10 will be described.

<3.1. Equivalence evaluation processing>

As described above, the information processing device 10 performs the equivalence evaluation processing of evaluating the equivalence of the pre-compression model M0 and the post-compression model M1 by using an XAI processing result. For example, the information processing device 10 calculates, as the equivalence, a value corresponding to a difference between an analysis result (such as the XAI processing result) of a model, the analysis being performed on the pre-compression model M0, and an analysis result (such as the XAI processing result) of a model, the analysis being performed on the post-compression model M1.

Hereinafter, the equivalence evaluation processing performed by the information processing device 10 for each kind of the XAI processing will be described.

<3.1.1. First equivalence evaluation processing>

The first equivalence evaluation processing is processing of performing equivalence evaluation using a heat map as basis information. In this case, the XAI processing unit 13_2 generates a heat map (saliency map) on the basis of the feature amounts (such as feature maps) of the pre-compression model M0 and the post-compression model M1, and estimates an image region to be a determination basis of the model. First, the XAI processing by the XAI processing unit 13_2 (hereinafter, also referred to as first XAI processing) will be described.

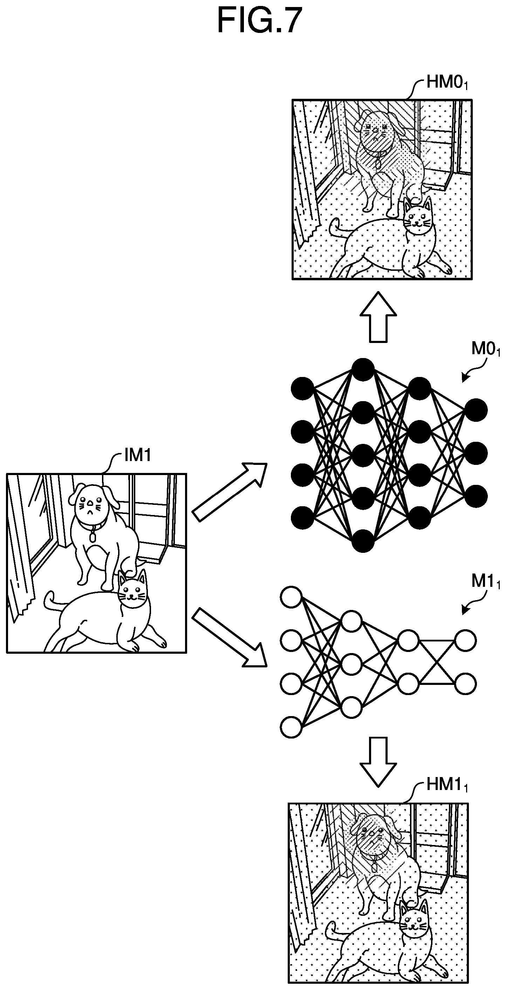

FIG. 7 is a view illustrating an example of the first XAI processing according to the embodiment of the present disclosure. The XAI processing unit 13_2 visualizes determination bases of the pre-compression model M0 and the post-compression model M1 by using the XAI technology such as "Grad-CAM" or "Grad-CAM++", for example.

-    Grad-CAM: Visual Explanations from Deep Networks via Gradient-based Localization <https://arxiv.org/abs/1610.02391>
-    Grad-CAM++: Improved Visual Explanations for Deep Convolutional Networks <https://arxiv.org/abs/1710.11063>

Note that although description of the technologies of "Grad-CAM" and "Grad-CAM++" is omitted as appropriate, the XAI processing unit 13_2 generates heat maps $HM0_1$ and $HM1_1$ as the basis information by the methods of "Grad-CAM" and "Grad-CAM++" (see the above literature).

In the example of FIG. 7, the XAI processing unit 13_2 generates the heat map $HM0_1$ that is the basis information indicating a basis related to an output of the pre-compression model $M0_1$ after an input of an input image IM1. The heat map $HM0_1$ is the basis information visualizing a contribution degree in which a pixel of the input image IM1 contributes to a prediction result of the pre-compression model $M0_1$.

In addition, the XAI processing unit 13_2 generates the heat map $HM1_1$ that is the basis information indicating a basis related to an output of the post-compression model $M1_1$ after the input of the input image IM1. The heat map $HM1_1$ is the basis information visualizing a contribution degree in which the pixel of the input image IM1 contributes to a prediction result of the post-compression model $M1_1$.

Note that in the example of FIG. 7, it is assumed that the contribution degree of contributing to the prediction result is higher as hatching of the heat maps $HM0_1$ and $HM1_1$ is deeper.

When the heat maps $HM0_1$ and $HM1_1$ are acquired as processing results from the XAI processing unit 13_2, the evaluation processing unit 13_3 executes the first equivalence evaluation processing on the basis of the heat maps $HM0_1$ and $HM1_1$.

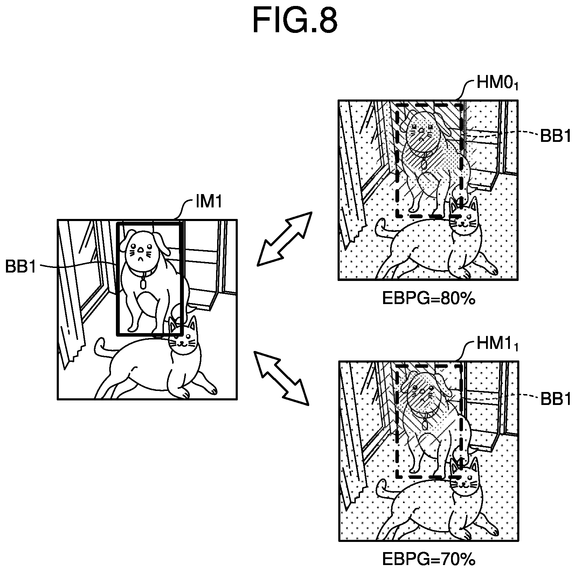

FIG. 8 is a view illustrating an example of the first equivalence evaluation processing according to the embodiment of the present disclosure. Here, it is assumed that there is a correct answer corresponding to the input image IM1.

For example, as illustrated in FIG. 8, it is assumed that the correct answer of the input image IM1 is given as a bounding box BB1. In this case, the evaluation processing unit 13_3 evaluates the equivalence by using, for example, the energy-based pointing game (EBPG) as an evaluation index.

The EBPG is an index indicating how much energy of a heat map (here, the heat maps $HM0_1$ and $HM1_1$) fits in a bounding box of a target object (here, the bounding box BB1 of the input image IM1). The EBPG is calculated, for example, on the basis of the following expression (1).

$$Proportion = \frac{\sum L_{(i,j)\in bbox}^{c}}{\sum L_{(i,j)\in bbox}^{c} + \sum L_{(i,j)\notin bbox}^{c}} \quad \cdots (1)$$

As illustrated in FIG. 8, the evaluation processing unit 13_3 calculates, for example, the EBPG of the heat map $HM0_1$ for the bounding box BB1 of the input image IM1. Here, it is assumed that the EBPG of the heat map $HM0_1$ is 80%.

Similarly, the evaluation processing unit 13_3 calculates, for example, the EBPG of the heat map $HM1_1$ for the bounding box BB1 of the input image IM1. Here, it is assumed that the EBPG of the heat map $HM1_1$ is 70%.

In this case, for example, the evaluation processing unit 13_3 calculates a difference between the EBPG of the heat map $HM0_1$ and the EBPG of the heat map $HM1_1$ as a difference between the pre-compression model $M0_1$ and the post-compression model $M1_1$. That is, the evaluation processing unit 13_3 calculates 80 - 70 = 10% as the difference between the pre-compression model $M0_1$ and the post-compression model $M1_1$.

Alternatively, for example, the evaluation processing unit 13_3 may calculate a value acquired by subtraction of the calculated difference from 100% (100 - 10 = 90) as a matching degree (equivalence) between the pre-compression model $M0_1$ and the post-compression model $M1_1$.

For example, the evaluation processing unit 13_3 calculates the difference (or matching degree) between the pre-compression model $M0_1$ and the post-compression model $M1_1$ by using a plurality of pieces of test data, and sets an overall average of absolute values of the calculated differences as a change amount of the pre-compression model $M0_1$ and the post-compression model $M1_1$.

The evaluation processing unit 13_3 outputs the calculated change amount to the model determination unit 13_4 as an evaluation result of the equivalence of the pre-compression model $M0_1$ and the post-compression model $M1_1$. Alternatively, the evaluation processing unit 13_3 may output a value acquired by subtraction of the calculated change amount from 100% to the model determination unit 13_4 as the evaluation result of the equivalence of the pre-compression model $M0_1$ and the post-compression model $M1_1$.

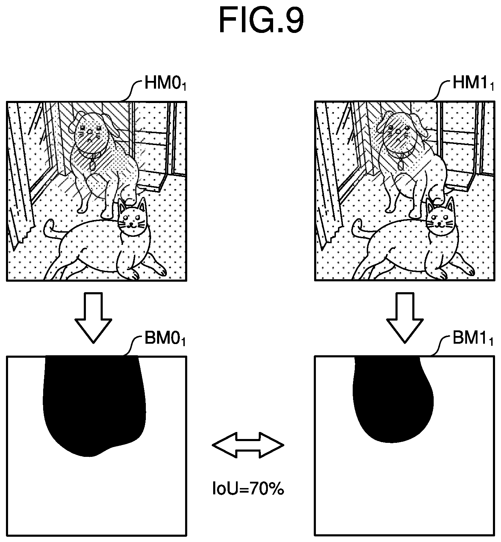

FIG. 9 is a view illustrating another example of the first equivalence evaluation processing according to the embodiment of the present disclosure. Here, it is assumed that there is no correct answer corresponding to the input image IM1.

In this case, the evaluation processing unit 13_3 evaluates the equivalence on the basis of the matching degree of the heat maps $HM0_1$ and $HM1_1$.

For example, the evaluation processing unit 13_3 binarizes the heat maps $HM0_1$ and $HM1_1$ by setting a value of a pixel having the contribution degree equal to or higher than a predetermined threshold to "1" and setting a value of the others to "0" in the heat maps $HM0_1$ and $HM1_1$, and generates binarized images $BM0_1$ and $BM1_1$. Note that in FIG. 9, regions $R_1$ and $R_2$ indicated in black in the binarized images $BM0_1$ and $BM1_1$ are regions in which pixel values are "1".

The evaluation processing unit 13_3 calculates an overlap of the regions where the pixel values are "1" in the binarized images $BM0_1$ and $BM1_1$ by using Intersection over Union (IoU). Here, IoU is an index indicating how much the two regions overlap.

As illustrated in FIG. 8, the evaluation processing unit 13_3 calculates that IoU in the regions $R_1$ and $R_2$ is 70%.

The evaluation processing unit 13_3 sets the value of IoU (here, 70%) as the matching degree (equivalence) of the pre-compression model $M0_1$ and the post-compression model $M1_1$. Alternatively, the evaluation processing unit 13_3 sets a difference of IoU (value acquired by subtraction of the value of IoU from 100%. Here, 100 - 70 = 30%) as the change amount of the pre-compression model $M0_1$ and the post-compression model $M1_1$.

For example, the evaluation processing unit 13_3 calculates the matching degree (or difference) between the pre-compression model $M0_1$ and the post-compression model $M1_1$ by using a plurality of pieces of test data, and sets an (overall average of absolute values of the calculated matching degrees as the matching degree (equivalence) of the pre-compression model $M0_1$ and the post-compression model $M1_1$.

The evaluation processing unit 13_3 outputs the calculated equivalence to the model determination unit 13_4 as an evaluation result of the equivalence of the pre-compression model $M0_1$ and the post-compression model $M1_1$. Alternatively, the evaluation processing unit 13_3 may output a value acquired by subtraction of the calculated equivalence from 100% to the model determination unit 13_4 as the evaluation result of the equivalence of the pre-compression model $M0_1$ and the post-compression model $M1_1$.

In such a manner, the information processing device 10 evaluates the equivalence of the pre-compression model $M0_1$ and the post-compression model $M1_1$ on the basis of the heat maps $HM0_1$ and $HM1_1$. That is, the information processing device 10 evaluates the equivalence of the pre-compression model $M0_1$ and the post-compression model $M1_1$ on the basis of a difference in locations of the focused data between the pre-compression model $M0_1$ and the post-compression model $M1_1$.

As a result, the information processing device 10 can more easily confirm a change in the learning model, such as a change in the locations of the focused data before and after the weight reduction processing.

<3.1.2. Second equivalence evaluation processing>

The second equivalence evaluation processing is processing of performing the equivalence evaluation by using an image patch as basis information.

In this case, the XAI processing unit 13_2 generates the image patch to be a model determination basis on the basis of the feature amounts of the pre-compression model M0 and the post-compression model M1. That is, the XAI processing unit 13_2 generates the basis information indicating which feature (image patch) is important for prediction by the model.

For example, the XAI processing unit 13_2 approximates the model with a linear model around description target data. The XAI processing unit 13_2 measures an importance of each feature (image patch) by magnitude of a coefficient of the linear model.

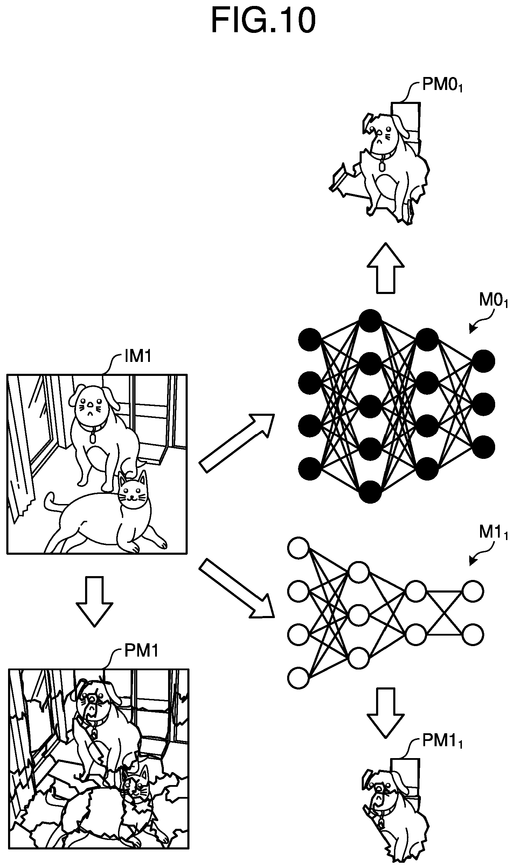

FIG. 10 is a view illustrating an example of second XAI processing according to the embodiment of the present disclosure. The XAI processing unit 13_2 visualizes determination bases of the pre-compression model M0 and the post-compression model M1 by using the XAI technology such as "LIME" or "Anchor".

- LIME: "Why Should I Trust You?": Explaining the Predictions of AnyClassifier
  <https://arxiv.org/abs/1602.04938>
- Anchors: High-Precision Model-Agnostic Explanations <https://homes.cs.washington.edu/~marcotcr/aaail8.pdf>

Note that although description of the technologies of "LIME" and "Anchor" is omitted as appropriate, the XAI processing unit 13_2 generates image patches $PM0_1$ and $PM1_1$ as the basis information by the method of "LIME" or "Anchor" (see the above literature).

In the example of FIG. 10, the XAI processing unit 13_2 first divides the input image IM1 into superpixels and generates a divided image PM1.

On the basis of the divided image PM1, the XAI processing unit 13_2 generates the image patch $PM0_1$ that is the basis information indicating a basis related to an output of the pre-compression model $M0_1$ after the input of the input image IM1. The image patch $PM0_1$ is an image indicating an image patch important for inference of the input image IM1 in the inference using the pre-compression model $M0_1$.

On the basis of the divided image PM1, the XAI processing unit 13_2 generates the image patch $PM1_1$ that is the basis information indicating a basis related to an output of the post-compression model $M1_1$ after the input of the input image IM1. The image patch $PM1_1$ is an image indicating an image patch important for inference of the input image IM1 in the inference using the post-compression model $M1_1$.

The XAI processing unit 13_2 outputs the generated image patches $PM0_1$ and $PM1_1$ to the evaluation processing unit 13_3 as processing results.

When the image patches $PM0_1$ and $PM1_1$ are acquired as the processing results from the XAI processing unit 13_2, the evaluation processing unit 13_3 executes the second equivalence evaluation processing on the basis of the image patches $PM0_1$ and $PM1_1$.

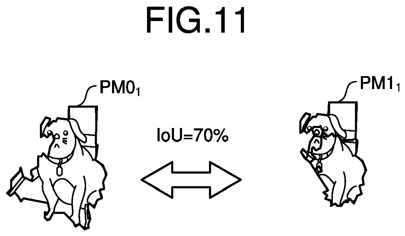

FIG. 11 is a view illustrating an example of the second equivalence evaluation processing according to the embodiment of the present disclosure.

As illustrated in FIG. 11, the evaluation processing unit 13_3 evaluates the equivalence on the basis of a matching degree of the image patches $PM0_1$ and $PM1_1$, for example. For example, the evaluation processing unit 13_3 calculates an overlap of the image patches $PM0_1$ and $PM1_1$ by using IoU.

As illustrated in FIG. 11, the evaluation processing unit 13_3 calculates that IoU of the image patches $PM0_1$ and $PM1_1$ is 70%.

The evaluation processing unit 13_3 sets the value of IoU (here, 70%) as the matching degree (equivalence) of the pre-compression model $M0_1$ and the post-compression model $M1_1$. Alternatively, the evaluation processing unit 13_3 sets a difference of IoU (value acquired by subtraction of the value of IoU from 100%. Here, 100 - 70 = 30%) as a change amount of the pre-compression model $M0_1$ and the post-compression model $M1_1$.

For example, the evaluation processing unit 13_3 calculates the matching degree (or difference) between the pre-compression model $M0_1$ and the post-compression model $M1_1$ by using a plurality of pieces of test data, and sets an (overall average of absolute values of the calculated matching degrees as the matching degree (equivalence) of the pre-compression model $M0_1$ and the post-compression model $M1_1$.

The evaluation processing unit 13_3 outputs the calculated equivalence to the model determination unit 13_4 as an evaluation result of the equivalence of the pre-compression model $M0_1$ and the post-compression model $M1_1$. Alternatively, the evaluation processing unit 13_3 may output a value acquired by subtraction of the calculated equivalence from 100% to the model determination unit 13_4 as the evaluation result of the equivalence of the pre-compression model $M0_1$ and the post-compression model $M1_1$.

In such a manner, the information processing device 10 evaluates the equivalence of the pre-compression model

M0$_1$ and the post-compression model M1$_1$ on the basis of the image patches PM0$_1$ and PM1$_1$. That is, the information processing device 10 evaluates the equivalence of the pre-compression model M0$_1$ and the post-compression model M1$_1$ on the basis of a difference in locations of the focused data between the pre-compression model M0$_1$ and the post-compression model M1$_1$.

As a result, the information processing device 10 can more easily confirm a change in the learning model, such as a change in the locations of the focused data before and after the weight reduction processing.

<3.1.3. Third equivalence evaluation processing>

The third equivalence evaluation processing is processing of performing equivalence evaluation by using an image of a data set as basis information.

In this case, the XAI processing unit 13_2 generates influence information related to influence data that effectively influences learning in learning data held by the data set DB 12_3, for example. That is, the XAI processing unit 13_2 generates basis information indicating which piece of the learning data (such as image data) has caused a large change in prediction by the model.

For example, in the learning of the pre-compression model M0 and the post-compression model M1, the XAI processing unit 13_2 calculates influence (degree of influence) of individual piece of the learning data that influences the learning.

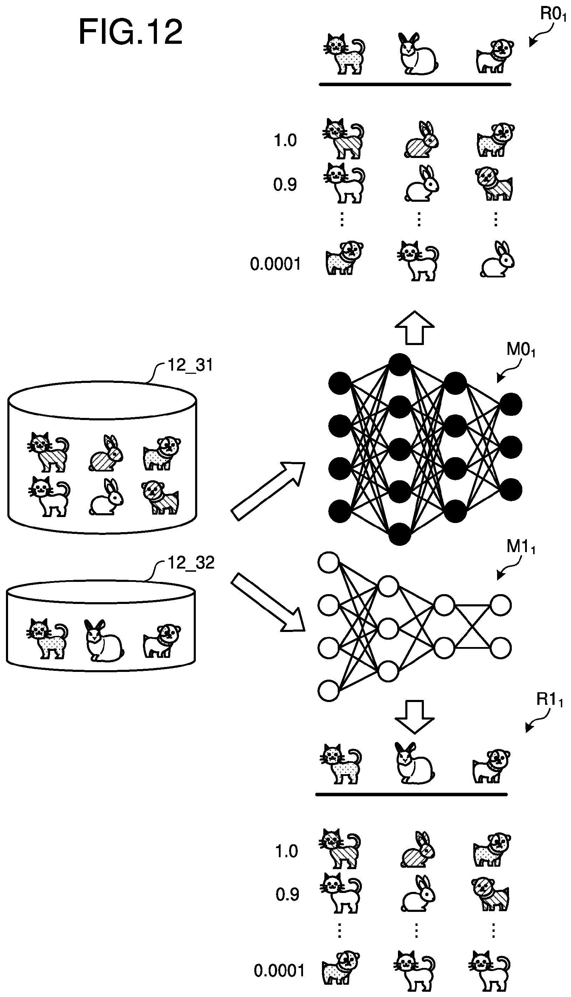

FIG. 12 is a view illustrating an example of third XAI processing according to the embodiment of the present disclosure. The XAI processing unit 13_2 calculates the degree of influence of the learning data on the pre-compression model M0$_1$ and the post-compression model M1$_1$ by using, for example, the XAI technology of "Influence".

- Understanding Black-box Predictions via Influence Functions <https://arxiv.org/abs/1703.04730>

Note that although description of the technology of "Influence" is omitted as appropriate, the XAI processing unit 13_2 calculates the degree of influence (importance) of the learning data by the method of "Influence" (see the above literature).

In the example of FIG. 12, the XAI processing unit 13_2 calculates the importance of the learning data in each piece of the test data included in the test data set 12_32 (such as image data of a cat, a rabbit, and a dog in FIG. 12) for each of the pre-compression model M0$_1$ and the post-compression model M1$_1$.

Note that the learning data is included in the learning data set 12_31. Furthermore, the learning data set 12_31 and the test data set 12_32 are included in the data set DB 12_3, for example.

As illustrated in FIG. 12, the XAI processing unit 13_2 generates importance ranking R0$_1$ and R1$_1$ of the learning data according to the calculated importance. The importance ranking R0$_1$ is ranking generated on the basis of the degree of influence of the learning data with respect to the pre-compression model M0$_1$. The importance ranking R1$_1$ is ranking generated on the basis of the degree of influence of the learning data with respect to the post-compression model M1$_1$.

The XAI processing unit 13_2 outputs the generated importance ranking R0$_1$ and R1$_1$ to the evaluation processing unit 13_3 as a processing result.

When the importance ranking R0$_1$ and R1$_1$ is acquired as the processing result from the XAI processing unit 13_2, the evaluation processing unit 13_3 executes the third equivalence evaluation processing on the basis of the importance ranking R0$_1$ and R1$_1$.

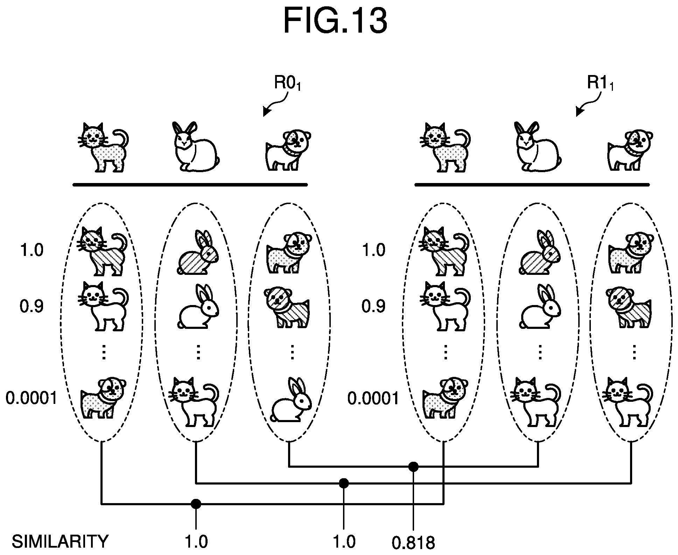

FIG. 13 is a view illustrating an example of the third equivalence evaluation processing according to the embodiment of the present disclosure.

As illustrated in FIG. 13, the evaluation processing unit 13_3 evaluates the equivalence on the basis of similarity between the importance ranking R0$_1$ and R1$_1$, for example. For example, the evaluation processing unit 13_3 calculates the Jaccard index as the similarity (matching degree) of the importance ranking R0$_1$ and R1$_1$.

The evaluation processing unit 13_3 calculates similarity (Jaccard index) of the importance ranking R0$_1$ and R1$_1$ for each piece of the test data, for example. In the example of FIG. 13, the similarity (Jaccard index) of the importance ranking R0$_1$ and R1$_1$ in which the test data is a "cat" is 1.0. The similarity (Jaccard index) of the importance ranking R0$_1$ and R1$_1$ in which the test data is a "rabbit" is 1.0. The similarity (Jaccard index) of the importance ranking R0$_1$ and R1$_1$ in which the test data is a "dog" is 0.818.

For example, the evaluation processing unit 13_3 sets an average value of the similarity in the test data set as the similarity (equivalence) between the pre-compression model M0$_1$ and the post-compression model M1$_1$. In the example of FIG. 13, the evaluation processing unit 13_3 sets (1.0 + 1.0 + 0.818)/3 = 0.939, which is the average value of the test data set, as the similarity (equivalence) between the pre-compression model M0$_1$ and the post-compression model M1$_1$.

Alternatively, the evaluation processing unit 13_3 sets a difference of the average value (value acquired by subtraction of the average value from 1. Here, 1 - 0.939 = 0.061) as the change amount of the pre-compression model M0$_1$ and the post-compression model M1$_1$.

The evaluation processing unit 13_3 outputs the calculated equivalence to the model determination unit 13_4 as an evaluation result of the equivalence of the pre-compression model $M0_1$ and the post-compression model $M1_1$. Alternatively, the evaluation processing unit 13_3 may output a value acquired by subtraction of the calculated equivalence from 1 to the model determination unit 13_4 as the evaluation result of the equivalence of the pre-compression model $M0_1$ and the post-compression model $M1_1$.

In such a manner, the information processing device 10 evaluates the equivalence of the pre-compression model $M0_1$ and the post-compression model $M1_1$ on the basis of the importance ranking $R0_1$ and $R1_1$ for each piece of the test data. That is, the information processing device 10 evaluates the equivalence of the pre-compression model $M0_1$ and the post-compression model $M1_1$ on the basis of a difference in the learning data that has an important influence on the pre-compression model $M0_1$ and the post-compression model $M1_1$.

As a result, the information processing device 10 can more easily confirm a change in the learning model, such as a change in the influence data has an effective influence on the learning before and after the weight reduction processing.

Note that although the XAI processing unit 13_2 here uses the Jaccard index to calculate the similarity of the importance ranking $R0_1$ and $R1_1$, the XAI processing unit 13_2 may calculate the similarity by using another method. For example, the XAI processing unit 13_2 may regard the importance included in the importance ranking $R0_1$ and $R1_1$ as vectors for each piece of the test data, and calculate similarity between the vectors as the similarity of the importance ranking $R0_1$ and $R1_1$. For example, the Euclidean distance, cosine similarity, or the like can be used as the similarity between the vectors.

<3.1.4. Fourth equivalence evaluation processing>

The third equivalence evaluation processing is processing of performing equivalence evaluation by using a feature amount extracted in a neuron or a layer.

In this case, the XAI processing unit 13_2 generates, for example, the feature amount extracted by the neuron or the layer as a feature amount image.

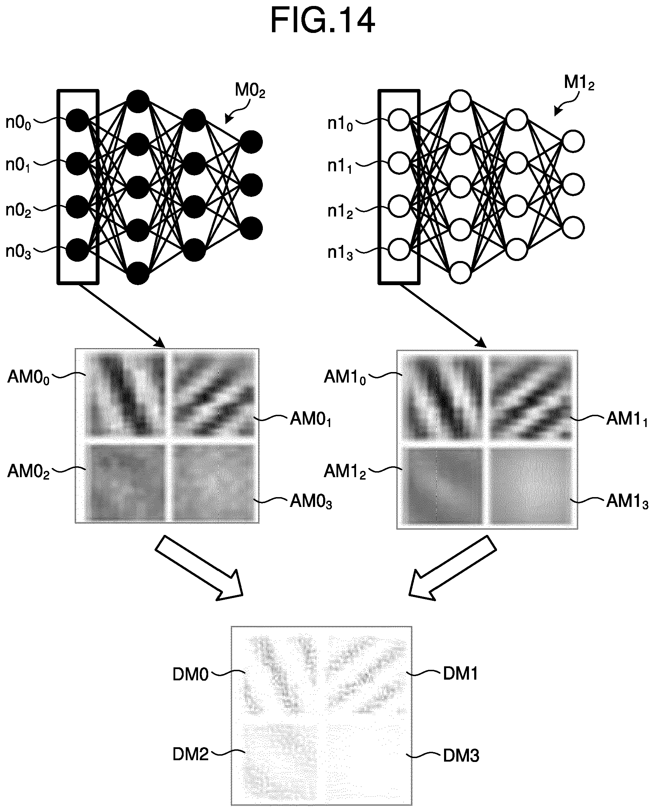

FIG. 14 is a view illustrating an example of the third XAI processing and the third equivalence evaluation processing according to the embodiment of the present disclosure.

The XAI processing unit 13_2 visualizes feature amounts extracted by neurons or layers of the pre-compression model $M0_2$ and the post-compression model $M1_2$ by using the XAI technology such as "activation maximization", for example.

- Understanding Neural Networks Through Deep Visualization <https://arxiv.org/abs/1506.06579>
- Understanding Deep Image Representations by Inverting Them <https://arxiv.org/abs/1412.0035>

Note that although description of the technology such as "Activation Maximization" is omitted as appropriate, the XAI processing unit 13_2 generates a feature amount image visualizing a feature amount by the method such as "Activation Maximization" (see the above literature).

In the example of FIG. 14, the XAI processing unit 13_2 visualizes feature amounts extracted by neurons $n0_0$ to $n0_3$ of the pre-compression model $M0_2$, and generates feature amount images $AM0_0$ to $AM0_3$. For example, the XAI processing unit 13_2 generates the feature amount images $AM0_0$ to $AM0_3$ by combining input images that maximize outputs of the neurons $n0_0$ to $n0_3$.

Similarly, the XAI processing unit 13_2 visualizes feature amounts extracted by neurons $n1_0$ to $n1_3$ of the post-compression model $M1_2$, and generates feature amount images $AM1_0$ to $AM1_3$. Note that the neurons $n1_0$ to $n1_3$ of the post-compression model $M1_2$ are respectively neurons corresponding to the neurons $n0_0$ to $n0_3$ of the pre-compression model $MO_2$.

The XAI processing unit 13_2 outputs the generated feature amount images $AM0_0$ to $AM0_3$ and $AM1_0$ to $AMl1_3$ to the evaluation processing unit 13_3 as processing results.

When the feature amount images $AM0_0$ to $AM0_3$ and $AM1_0$ to $AM1_3$ are acquired as the processing results from the XAI processing unit 13_2, the evaluation processing unit 13_3 executes fourth equivalence evaluation processing on the basis of the feature amount images $AM0_0$ to $AM0_3$ and $AM1_0$ to $AM1_3$.

As illustrated in FIG. 14, the evaluation processing unit 13_3 evaluates the equivalence on the basis of, for example, differences between the feature amount images $AM0_0$ to $AM0_3$ and $AM1_0$ to $AM1_3$.

First, the evaluation processing unit 13_3 generates difference images DM0 to DM3 of, for example, the feature amount images $AM0_0$ to $AM0_3$ and the feature amount images $AM1_0$ to $AM1_3$. The evaluation processing unit 13_3 generates the difference images DM0 to DM3 for each corresponding neuron, for example.

Then, the evaluation processing unit 13_3 performs comparison whether pixel values included in the difference images DM0 to DM3 are equal to or larger than a predetermined threshold, and sets a ratio of pixels having the pixel values of the predetermined threshold or larger to all the pixels as a change amount of the difference images DMO to DM3.

For example, the evaluation processing unit 13_3 generates a difference image DM3 between the feature amount image $AM0_3$ and the feature amount image $AM1_3$. The evaluation processing unit 13_3 counts the number of pixels having the pixel values equal to or larger than the predetermined threshold among all the pixels included in the difference image DM3 (here, for example, 36 pixels). Here, it is assumed that there are four pixels having the pixel values equal to or larger than the predetermined threshold.

In this case, the evaluation processing unit 13_3 assumes that the change amount of the neurons $n0_3$ and $n1_3$ with respect to the difference image DM3 is 4/36 = 0.111.

Alternatively, the evaluation processing unit 13_3 sets a difference in the change amount (value acquired by subtraction of the change value from 1. Here, 1 - 0.111 = 0.899) as equivalence of the neurons $n0_3$ and $n1_3$.

For example, the evaluation processing unit 13_3 calculates the change amount for all the neurons. For example, the evaluation processing unit 13_3 sets at least one of a total or an average value of the calculated change amounts as the change amount of the pre-compression model $M0_2$ and the post-compression model $M1_2$.

Alternatively, for example, the evaluation processing unit 13_3 calculates the equivalence for all the neurons. For example, the evaluation processing unit 13_3 sets at least one of a total or average values of the calculated equivalence as the equivalence of the pre-compression model $M0_2$ and the post-compression model $M1_2$.

Alternatively, the evaluation processing unit 13_3 may set, for example, a difference in the change amount of the pre-compression model $M0_2$ and the post-compression model $M1_2$ (value acquired by subtraction of the change value from 1) as the equivalence of the pre-compression model $M0_2$ and the post-compression model $M1_2$.

For example, the evaluation processing unit 13_3 can output at least one of the calculated equivalence or change amount to the model determination unit 13_4 as an evaluation result of the equivalence of the pre-compression model $M0_2$ and the post-compression model $M1_2$.

Note that although it is assumed here that the XAI processing unit 13_2 generates the feature amount images AM0 and AM1, the XAI processing unit 13_2 may generate a feature amount extracted by a neuron or a layer as a "semantic concept", for example.

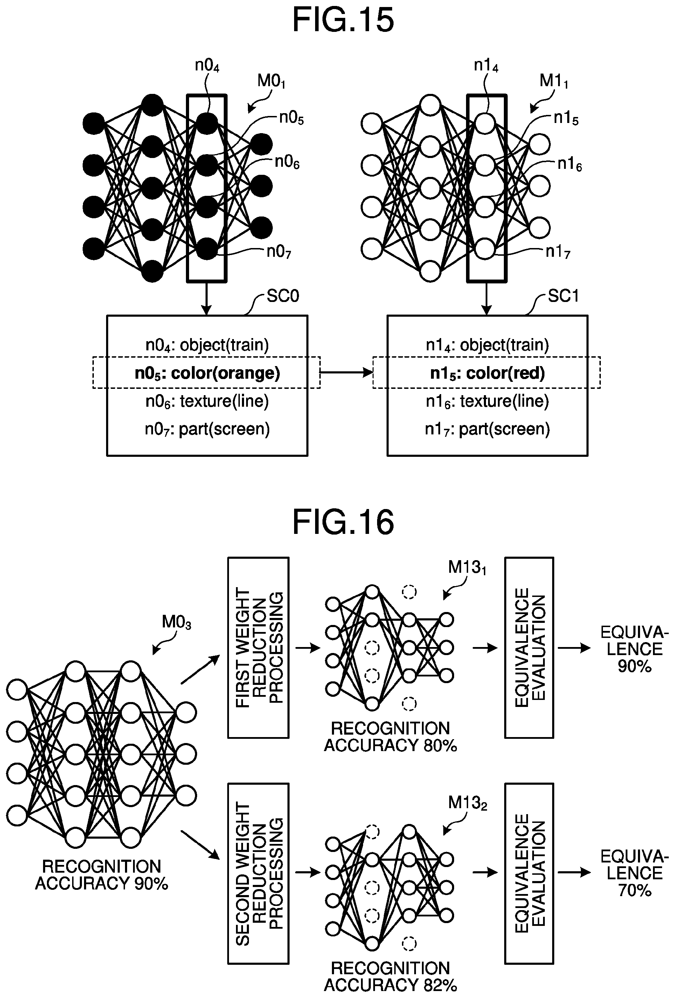

FIG. 15 is a view illustrating another example of the third XAI processing and the third equivalence evaluation processing according to the embodiment of the present disclosure.

The XAI processing unit 13_2 visualizes feature amounts extracted by neurons or layers of the pre-compression model $M0_2$ and the post-compression model $M1_2$, for example, by using the XAI technology of "Network Dissection".

- Network Dissection: Quantifying Interpretability of Deep Visual Representations <https://arxiv.org/abs/1704.05796>

Note that although description of the technology of the "Network Dissection" is appropriately omitted, the XAI processing unit 13_2 generates a semantic concept visualizing a feature amount by the method of the "Network Dissection" (see the above literature).

In the example of FIG. 15, the XAI processing unit 13_2 visualizes feature amounts extracted by neurons $n0_4$ to $n0_7$ of the pre-compression model $M0_2$, and generates a semantic concept SC0. In addition, the XAI processing unit 13_2 visualizes feature amounts extracted by neurons $n1_4$ to $n1_7$ of the post-compression model $M1_2$, and generates a semantic concept SC1. Note that although the XAI processing unit 13_2 illustrates semantic concepts SCO and SC1 corresponding to the neurons $n0_4$ to $n0_7$ and $n1_4$ to $n1_7$ in FIG. 15, the XAI processing unit 13_2 generates semantic concepts SCO and SC1 for all the neurons n0 and n1.

The XAI processing unit 13_2 outputs the generated semantic concepts SC0 and SC1 to the evaluation processing unit 13_3 as processing results.

When acquiring the semantic concepts SC0 and SC1 as the processing results from the XAI processing unit 13_2, the evaluation processing unit 13_3 executes the fourth equivalence evaluation processing on the basis of the semantic concepts SC0 and SC1.

The evaluation processing unit 13_3 evaluates the equivalence on the basis of similarity between the semantic concepts SC0 and SC1. For example, the evaluation processing unit 13_3 calculates the Jaccard index as the similarity (equivalence) between the semantic concepts SC0 and SC1.

Alternatively, the evaluation processing unit 13_3 sets a difference in the similarity (value acquired by subtraction of the similarity from 1) as a change amount of the semantic concepts SC0 and SC1.

For example, the evaluation processing unit 13_3 can output at least one of the calculated equivalence or change amount to the model determination unit 13_4 as an evaluation result of the equivalence of the pre-compression model $M0_2$ and the post-compression model $M1_2$.

In such a manner, the information processing device 10 evaluates the equivalence of the pre-compression model $M0_2$ and the post-compression model $M1_2$ on the basis of the feature amount extracted by each of the neurons. That is, the information processing device 10 evaluates the equivalence on the basis of a change in the internal structures of the pre-compression model M0 and the post-compression model M1.

As a result, the information processing device 10 can more easily confirm a change in the learning model, such as a change in the feature amount extracted by each of the neurons before and after the weight reduction processing.

Note that here, the XAI processing unit 13_2 uses the Jaccard index to calculate the similarity between the semantic concepts SC0 and SC1. However, the XAI processing unit 13_2 may calculate the similarity by using another method. For example, the XAI processing unit 13_2 may regard the semantic concepts SC0 and SC1 as vectors and calculate similarity between the vectors as similarity between the semantic concepts SC0 and SC1. For example, the Euclidean distance, cosine similarity, or the like can be used as the similarity between the vectors.

<3.2. Determination processing>

As described above, the information processing device 10 executes determination processing of selecting (determining) the final model MF by using a result of the equivalence evaluation processing.

For example, the information processing device 10 selects the post-compression model M1 (final model MF) from among a plurality of candidate models. Alternatively, the information processing device 10 generates the final model MF by repeatedly executing the weight reduction processing, the XAI processing, and the equivalence evaluation processing according to the result of the equivalence evaluation processing.

Here, first to third determination processing will be described as an example of the determination processing executed by the information processing device 10.

<3.2.1. First determination processing>

The first determination processing is processing of selecting the final model MF from among a plurality of candidate models. In this case, for example, the compression processing unit 13_1 executes the weight reduction processing with different weight reduction parameters and generates a plurality of candidate models from one pre-compression model M0. That is, the plurality of candidate models is models generated by the weight reduction processing in which the weight reduction method is the same and the weight reduction parameters are different.

FIG. 16 is a view for describing an example of the first determination processing according to the embodiment of the present disclosure.

In the example illustrated in FIG. 16, the compression processing unit 13_1 performs first weight reduction processing on the pre-compression model $M0_3$, and generates a candidate model $M1_{31}$. In addition, the compression processing unit 13_1 performs second weight reduction processing on the pre-compression model $M0_3$, and generates a candidate model $M1_{32}$.

The first weight reduction processing and the second weight reduction processing are the same weight reduction method (pruning in the example of FIG. 16), and have different weight reduction parameters (compression ratio in each layer, for example). For example, the compression processing unit 13_1 performs the first and second weight reduction processing in such a manner that the candidate models $M1_3$, and $M1_{32}$ have the same size.

The XAI processing unit 13_2 performs the XAI processing on the candidate models $M1_{31}$ and $M1_{32}$. In addition, the evaluation processing unit 13_3 performs the equivalence evaluation on the basis of a result of the XAI processing, and calculates equivalence for each of the candidate models $M1_{31}$ and $M1_{32}$.

In the example of FIG. 16, it is assumed that the equivalence of the candidate model $M1_{31}$ is 90% and the equivalence of the candidate model $M1_{32}$ is 70%. In addition, it is assumed that the recognition accuracy of the candidate model $M1_{31}$ is 80% and the recognition accuracy of the candidate model $M1_{32}$ is 82%.

In this case, for example, when the model is determined on the basis of the recognition accuracy, the candidate model $M1_{32}$ is determined as the final model MF. However, the equivalence of the candidate model $M1_{32}$ is 70%, and is lower than the equivalence of the candidate model $M1_{31}$. In addition, the recognition accuracy of the candidate model $M1_{31}$ is not greatly different from the recognition accuracy of the candidate model $M1_{32}$.

Thus, for example, the model determination unit 13_4 of the present embodiment sets the candidate model $M1_{31}$ having the high equivalence as the final model MF.

As described above, the model determination unit 13_4 of the present embodiment determines the final model MF on the basis of the equivalence instead of (or in addition to) the recognition accuracy. As a result, the information processing device 10 can set the candidate model $M1_{31}$ having a smaller change in the model before and after the processing as the final model MF.

Note that although it is assumed here that the model determination unit 13_4 sets the candidate model $M1_{31}$ having the high equivalence as the final model MF, the determination method by the model determination unit 13_4 is not limited thereto. The model determination unit 13_4 only needs to determine the final model MF in consideration of the equivalence.

For example, the model determination unit 13_4 may set, as the final model MF, a candidate model M1 having the highest recognition accuracy (or equivalence) among the candidate models M1 having the recognition accuracy equal to or greater than a predetermined threshold and the equivalence equal to or greater than a predetermined threshold. Note that the threshold of determining the recognition accuracy and the threshold of determining the equivalence may be different values or the same value.

In addition, although the number of candidate models M1 is two in FIG. 16, the number of candidate models M1 is not limited to two. The number of candidate models M1 may be one or three or more. In addition, although the weight reduction method used in the weight reduction processing is pruning in FIG. 16, the weight reduction method is not limited to pruning. The compression processing unit 13_1 can generate the candidate models M1 by using various weight reduction methods such as quantization, for example.

Although the compression processing unit 13_1 generates the candidate models M1 by using the one weight reduction method in FIG. 16, the compression processing unit 13_1 may generate the candidate models M1 by using a plurality of weight reduction methods. Determination processing in which the model determination unit 13_4 determines the final model MF in such a case will be described.

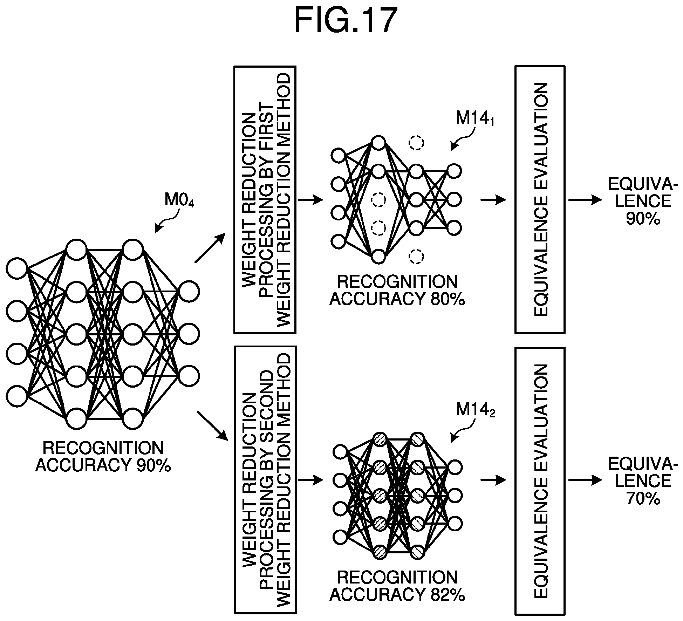

FIG. 17 is a view for describing another example of the first determination processing according to the embodiment of the present disclosure.

In the example illustrated in FIG. 17, the compression processing unit 13_1 performs weight reduction processing on a pre-compression model $M0_4$ by a first weight reduction method, and generates a candidate model $M1_{41}$. In addition, the compression processing unit 13_1 performs weight reduction processing on the pre-compression model $M0_4$ by a second weight reduction method different from the first weight reduction method, and generates a candidate model $M1_{42}$.

The XAI processing unit 13_2 performs the XAI processing on the candidate models $M1_{41}$ and $M1_{42}$. In addition, the evaluation processing unit 13_3 performs the equivalence evaluation on the basis of a result of the XAI processing and calculates the equivalence for each of the candidate models $M1_{41}$ and $M1_{42}$.

In the example of FIG. 17, it is assumed that the equivalence of the candidate model $M1_{41}$ is 90% and the equivalence of the candidate model $M1_{42}$ is 70%. In addition, it is assumed that the recognition accuracy of the candidate model $M1_{41}$ is 80% and the recognition accuracy of the candidate model $M1_{42}$ is 82%.

In this case, for example, when the model is determined on the basis of the recognition accuracy, the candidate model $M1_{42}$ is determined as the final model MF. However, the equivalence of the candidate model $M1_{42}$ is 70%, and is lower than the equivalence of the candidate model $M1_{41}$. In addition, the recognition accuracy of the candidate model $M1_{41}$ is not greatly different from the recognition accuracy of the candidate model $M1_{42}$.

Thus, for example, the model determination unit 13_4 of the present embodiment sets the candidate model $M1_{41}$ having the high equivalence as the final model MF.

As described above, the model determination unit 13_4 of the present embodiment determines the final model MF on the basis of the equivalence instead of (or in addition to) the recognition accuracy. As a result, the information processing device 10 can set the candidate model $M1_{41}$ having a smaller change in the model before and after the processing as the final model MF.

Note that although it is assumed here that the model determination unit 13_4 sets the candidate model $M1_{41}$ having the high equivalence as the final model MF, the determination method by the model determination unit 13_4 is not limited thereto. The model determination unit 13_4 only needs to determine the final model MF in consideration of the equivalence.

For example, the model determination unit 13_4 may set, as the final model MF, a candidate model M1 having the highest recognition accuracy (or equivalence) among the candidate models M1 having the recognition accuracy equal to or greater than a predetermined threshold and the equivalence equal to or greater than a predetermined threshold. Note that the threshold of determining the recognition accuracy and the threshold of determining the equivalence may be different values or the same value.

In addition, although the number of candidate models M1 is two in FIG. 17, the number of candidate models M1 is not limited to two. The number of candidate models M1 may be one or three or more.

In addition, although the compression processing unit 13_1 generates the candidate model M1 by using the two weight reduction methods in FIG. 17, the weight reduction method used by the compression processing unit 13_1 for the weight reduction processing is not limited to two. The compression processing unit 13_1 may generate the candidate model M1 by using three or more weight reduction methods.

In addition, although the compression processing unit 13_1 generates the one candidate model M1 by using the one weight reduction method in FIG. 17, the number of candidate models M1 generated by the compression processing unit 13_1 is not limited to one. For example, the compression processing unit 13_1 may generate a plurality of the candidate models M1 by using one weight reduction method. In this case, it is assumed that weight reduction parameters used for the weight reduction processing vary among the plurality of candidate models M1.

Furthermore, in the first determination processing described above, the compression processing unit 13_1 generates the plurality of candidate models M1 from the one pre-compression model M0. However, there may be a plurality of the pre-compression models M0 on which the weight reduction processing is performed by the compression processing unit 13_1. Determination processing in which the model determination unit 13_4 determines the final model MF in such a case will be described.

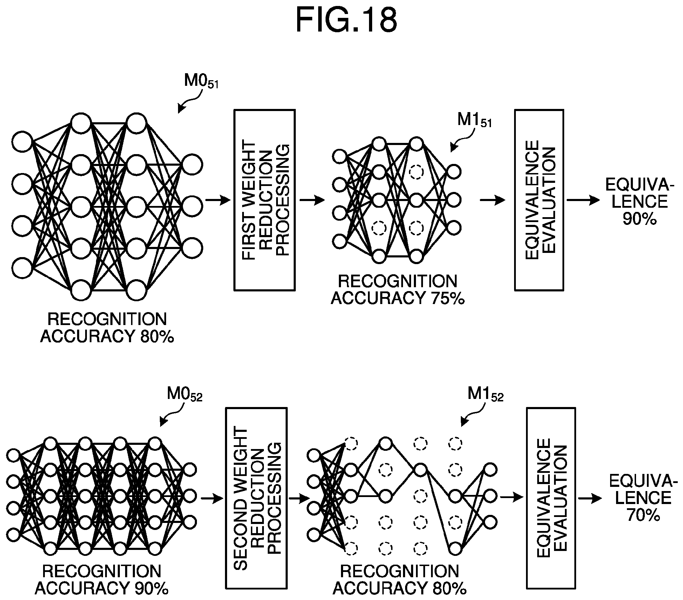

FIG. 18 is a view for describing another example of the first determination processing according to the embodiment of the present disclosure.

In the example illustrated in FIG. 18, the compression processing unit 13_1 performs first weight reduction processing on a pre-compression model $M0_{51}$, and generates a candidate model $M1_{51}$. In addition, the compression processing unit 13_1 performs second weight reduction processing on a pre-compression model $M0_{52}$, and generates a candidate model $M1_{52}$.

The first weight reduction processing and the second weight reduction processing are the same weight reduction method (pruning in the example of FIG. 18). For example, the compression processing unit 13_1 performs the first and second weight reduction processing in such a manner that the candidate models $M1_{51}$ and $M1_{52}$ have the same size.

The XAI processing unit 13_2 performs the XAI processing on the candidate models $M1_{51}$ and $M1_{52}$. In addition, the evaluation processing unit 13_3 performs the equivalence evaluation on the basis of a result of the XAI processing, and calculates the equivalence for each of the candidate models $M1_{51}$ and $M1_{52}$.

In the example of FIG. 18, it is assumed that the equivalence of the candidate model $M1_{51}$ is 90% and the equivalence of the candidate model $M1_{52}$ is 70%. In addition, it is assumed that the recognition accuracy of the candidate model $M1_{51}$ is 75% and the recognition accuracy of the candidate model $M1_{52}$ is 80%.

In this case, for example, when the model is determined on the basis of the recognition accuracy, the candidate model $M1_{52}$ is determined as the final model MF. However, the equivalence of the candidate model $M1_{52}$ is 70%, and is lower than the equivalence of the candidate model $M1_{51}$.

Thus, the model determination unit 13_4 of the present embodiment sets, for example, the candidate model $M1_{51}$ having the high equivalence as the final model MF.

As described above, the model determination unit 13_4 of the present embodiment determines the final model MF on the basis of the equivalence instead of (or in addition to) the recognition accuracy. As a result, the information processing device 10 can set the candidate model $M1_{51}$ having a smaller change in the model before and after the processing as the final model MF.

Note that although it is assumed here that the model determination unit 13_4 sets the candidate model $M1_{51}$ having the high equivalence as the final model MF, the determination method by the model determination unit 13_4 is not limited thereto. The model determination unit 13_4 only needs to determine the final model MF in consideration of the equivalence.

For example, the model determination unit 13_4 may set, as the final model MF, a candidate model M1 having the highest recognition accuracy (or equivalence) among the candidate models M1 having the recognition accuracy equal to or greater than a predetermined threshold and the equivalence equal to or greater than a predetermined threshold. Note that the threshold of determining the recognition accuracy and the threshold of determining the equivalence may be different values or the same value.

In addition, although the number of the pre-compression models M0 and that of the candidate models M1 are two in FIG. 18, the number of the pre-compression models M0 and that of the candidate models M1 are not limited to two. The number of the pre-compression models M0 and that of the candidate models M1 may be one, or three or more. In addition, a plurality of candidate models M1 may be generated from one pre-compression model M0.

In addition, although the weight reduction method used in the weight reduction processing is pruning in FIG. 18, the weight reduction method is not limited to pruning. The compression processing unit 13_1 can generate the candidate models M1 by using various weight reduction methods such as quantization, for example. In addition, the weight reduction processing of different weight reduction methods may be performed on different pre-compression models M0.

<3.2.2. Second determination processing>

The second determination processing is processing of determining the final model MF by adjusting the weight reduction parameters of the weight reduction processing according to the result of the equivalence evaluation processing. In the second determination processing, the weight reduction processing, the XAI processing, and the equivalence evaluation processing are repeatedly executed, and the final model MF is generated.

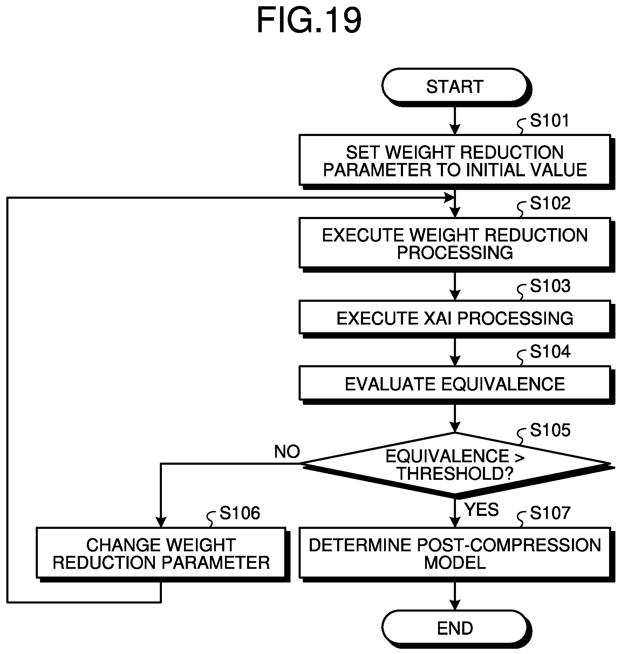

FIG. 19 is a flowchart illustrating an example of a flow of the second determination processing according to the embodiment of the present disclosure. The second determination processing illustrated in FIG. 19 is executed by each unit of the information processing device 10.

As illustrated in FIG. 19, for example, the compression processing unit 13_1 of the information processing device 10 sets a weight reduction parameter to an initial value (Step S101). Such an initial value may be a preset value or a value designated by the user.

The compression processing unit 13_1 executes the weight reduction processing by using the set weight reduction parameter (Step S102). For example, the compression processing unit 13_1 executes the weight reduction processing on the pre-compression model M0, and generates the candidate model M1.

Then, the XAI processing unit 13_2 of the information processing device 10 executes the XAI processing (Step S103). For example, the XAI processing unit 13_2 performs the XAI processing on the pre-compression model M0 and the candidate model M1.

The evaluation processing unit 13_3 of the information processing device 10 performs the equivalence evaluation (Step S104). For example, the evaluation processing unit 13_3 performs the equivalence evaluation by calculating the equivalence of the pre-compression model M0 and the candidate model M1.

The model determination unit 13_4 of the information processing device 10 determines whether the equivalence is greater than a threshold (Step S105). In a case where the equivalence is equal to or less than the threshold (Step S105; No), the model determination unit 13_4 changes the weight reduction parameter (Step S106), the processing returns to Step S103, and the compression processing unit 13_1 executes the weight reduction processing by using the changed weight reduction parameter.

On the other hand, in a case where the equivalence is greater than the threshold (Step S105; Yes), the model determination unit 13_4 determines the candidate model M1 as the final model MF (Step S107).

As described above, the information processing device 10 according to the present embodiment generates the post-compression model M1 (final model MF) in such a manner that the equivalence becomes greater than the threshold instead of (or in addition to) the recognition accuracy. As a result, the information processing device 10 can generate the post-compression model M1 (final model MF) having a smaller change in the model before and after the processing.

Note that although it is assumed here that the information processing device 10 sets the candidate model M1 having the equivalence greater than the threshold as the final model MF, the determination method by the information processing device 10 is not limited thereto. The information processing device 10 only needs to determine the final model MF in consideration of the equivalence.

For example, in a case where the recognition accuracy of the candidate model M1 is greater than a predetermined threshold (that may be different from the threshold used for determination of the equivalence) and the equivalence thereof is greater than the threshold, the information processing device 10 may end the repetitive processing. Alternatively, the information processing device 10 may end the repetitive processing in a case where a change amount in the equivalence is equal to or less than a predetermined threshold. Furthermore, the information processing device 10 may end the repetitive processing in a case where the repetitive processing is performed the predetermined number of times.

Furthermore, although it is assumed here that the information processing device 10 changes the weight reduction parameter in a case where the equivalence is equal to or less than the threshold, the information processing device 10 may change the weight reduction method instead of the weight reduction parameter.

In addition, although it is assumed here that the weight reduction method used in the weight reduction processing is pruning, the weight reduction method is not limited to pruning. The compression processing unit 13_1 can generate the candidate models M1 by using various weight reduction methods such as quantization, for example.

Furthermore, although it is assumed that the information processing device 10 changes the weight reduction parameter on the basis of the equivalence of the pre-compression model M0 and the candidate model M1, the information processing device 10 may change the weight reduction parameter on the basis of an index other than the equivalence of the pre-compression model M0 and the candidate model M1.

For example, the information processing device 10 may change the weight reduction parameter on the basis of the equivalence of each layer of the pre-compression model M0 and the candidate model M1.

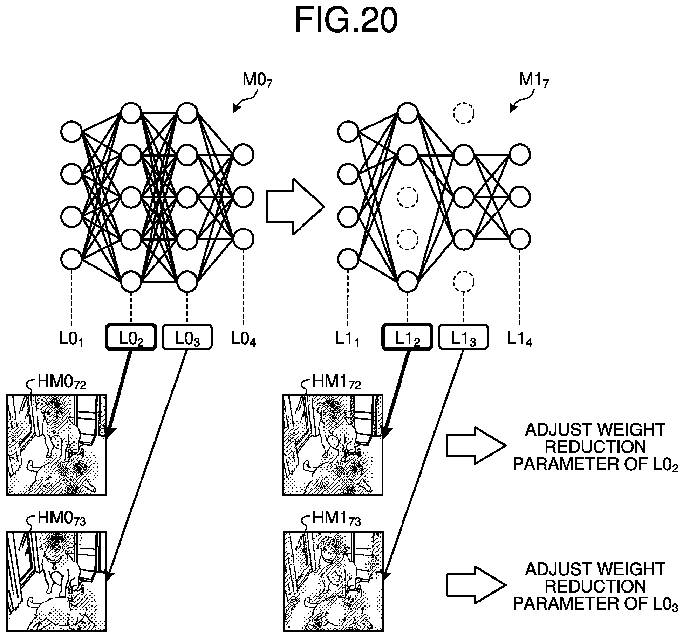

FIG. 20 is a view for describing another example of the second determination processing according to the embodiment of the present disclosure. Here, it is assumed that the compression processing unit 13_1 performs the weight reduction processing on the pre-compression model $M0_7$ and generates a candidate model $M1_7$.

The evaluation processing unit 13_3 calculates the equivalence for each layer of the pre-compression model $M0_7$ and the candidate model $M1_7$. In the example of FIG. 20, for example, the XAI processing unit 13_2 generates heat maps $HM0_{72}$ and $HM0_{73}$ respectively for layers $L0_2$ and $L0_3$ of the pre-compression model $M0_7$. In addition, the XAI processing unit 13_2 generates heat maps $HM1_{72}$ and $HM1_{73}$ respectively for layers $L1_2$ and $L1_3$ of the candidate model $M1_7$.

The evaluation processing unit 13_3 calculates the equivalence for each of the layers. For example, it is assumed that the equivalence of the layers $L0_2$ and $L1_2$ is 90% and the equivalence of the layers $L0_3$ and $L1_3$ is 60%.

In this case, for example, the model determination unit 13_4 changes the weight reduction parameter in such a manner as to increase a compression ratio of the layer $L0_2$ and reduce the compression ratio of the layer $L0_3$. The compression processing unit 13_1 performs the weight reduction processing on the pre-compression model $M0_7$ by using the weight reduction parameter changed by the model determination unit 13_4.

For example, the information processing device 10 repeatedly changes the weight reduction parameter and performs the weight reduction processing until the equivalence of each layer becomes equal to or greater than a predetermined value. Alternatively, the information processing device 10 may repeatedly change the weight reduction parameter and perform the weight reduction processing until a difference in the equivalence of each layer becomes equal to or smaller than a predetermined value.

Alternatively, the information processing device 10 may set the number of repetitions and execute the repetitive processing, or may end the repetitive processing in a case where the change amount in the equivalence of each layer becomes equal to or smaller than a predetermined value.

<3.2.3. Third determination processing>

The third determination processing is processing of generating the final model MF by using the evaluation result of the equivalence (such as a result of the XAI processing) as an index used in the weight reduction processing (parameter of an evaluation function).

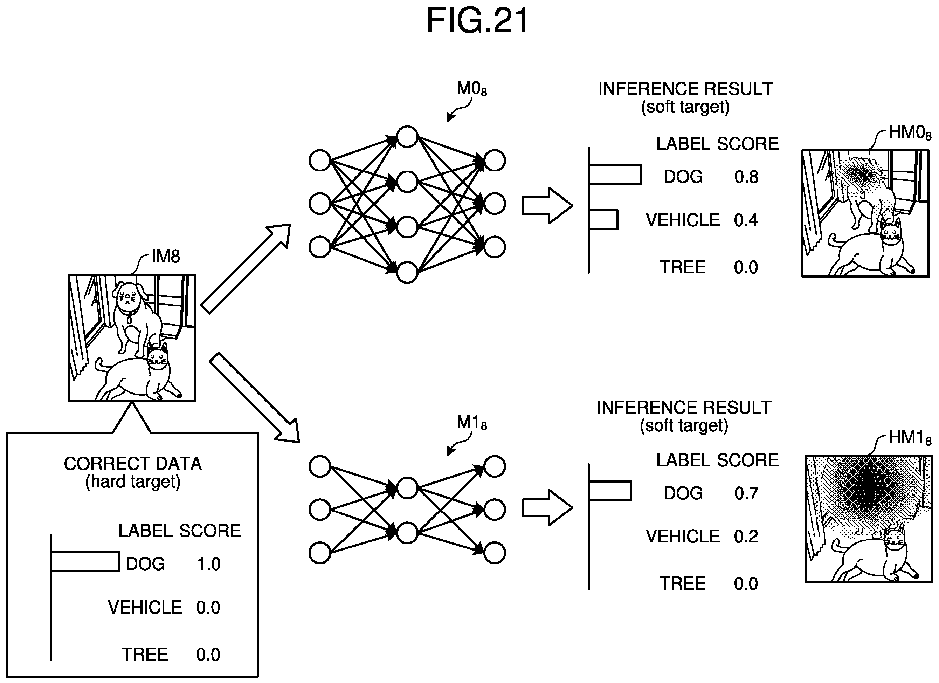

FIG. 21 is a view for describing an example of the third determination processing according to the embodiment of the present disclosure. Here, a case where the compression processing unit 13_1 employs distillation as a weight reduction method will be described.

As the weight reduction processing, for example, the compression processing unit 13_1 learns a candidate model $M1_8$ in such a manner that an inference result of when an input image IM8 is input to the candidate model $M1_8$ becomes closer to correct data of the input image IM8. Here, the correct data of the input image IM8 is a hard target (a score of a correct label is 1.0, and a score of an incorrect label is 0.0).

In addition, for example, the compression processing unit 13_1 learns the candidate model $M1_8$ in such a manner that the inference result of when the input image IM8 is input to the candidate model $M1_8$ becomes closer to an inference result of when the input image IM8 is input to a pre-compression model $M0_8$. The inference result of the pre-compression model $M0_8$ is a soft target (a score has a predetermined distribution).

As described above, in general distillation, learning of the candidate model $M1_8$ is performed with the correct data of the input image IM8 and the inference result of the pre-compression model $M0_8$ as training data.

In the third determination processing according to the present embodiment, the learning of the candidate model $M1_8$ is performed with the XAI processing result as an evaluation index (such as training data) of the learning in addition to the correct data and the inference result described above.

For example, in FIG. 21, the XAI processing unit 13_2 generates a heat map $HM0_8$ of the pre-compression model $M0_8$ and the heat map $HM0_8$ of the candidate model $M1_8$ as the XAI processing. The compression processing unit 13_1 learns the candidate model $M1_8$ in such a manner that the heat map $HM0_8$ of the candidate model $M1_8$ becomes closer to the heat map $HM0_8$ of the pre-compression model $M0_8$.

In such a manner, it is assumed that the information processing device 10 generates the candidate model M1 that is a student model by using the pre-compression model M0 as a teacher model. In this case, the information processing device 10 learns the candidate model M1 with the XAI processing result (here, the heat map HM0) of the pre-compression model M0 as the training data in addition to the correct data for the input image IM8 and the inference result of the pre-compression model M0 for the input image IM.

That is, the information processing device 10 learns the candidate model M1 in such a manner that the inference result of the candidate model M1 becomes closer to the correct data and the inference result of the pre-compression model M0 and the heat map HM1 of the candidate model M1 becomes closer to the heat map HM0 of the pre-compression model M0.

Alternatively, the information processing device 10 may learn the candidate model M1 in such a manner that the equivalence of the pre-compression model M0 and the candidate model M1 becomes greater. That is, the information processing device 10 learns the candidate model M1 in such a manner that the inference result of the candidate model M1 becomes closer to the correct data and the inference result of the pre-compression model M0 and the equivalence of the pre-compression model M0 and the candidate model M1 becomes greater.

The model determination unit 13_4 sets, for example, the candidate model M1 generated by the compression processing unit 13_1 as the final model MF.

Note that although it is assumed here that the information processing device 10 performs the XAI processing and generates the heat map HM, the XAI processing performed by the information processing device 10 is not limited thereto. For example, the information processing device 10 may perform the XAI processing and generate an image patch PM, or may generate a feature amount image. Alternatively, the information processing device 10 may perform the XAI processing and generate a semantic concept.

Furthermore, although it is assumed here that the compression processing unit 13_1 performs the weight reduction processing by using distillation, the weight reduction method used by the compression processing unit 13_1 is not limited thereto. For example, the compression processing unit 13_1 may perform the weight reduction processing by using NAS. In this case as well, the information processing device 10 incorporates the result of the XAI processing into an evaluation function of NAS, performs the weight reduction processing in consideration of the XAI processing result (in other words, equivalence), and generates the final model MF.

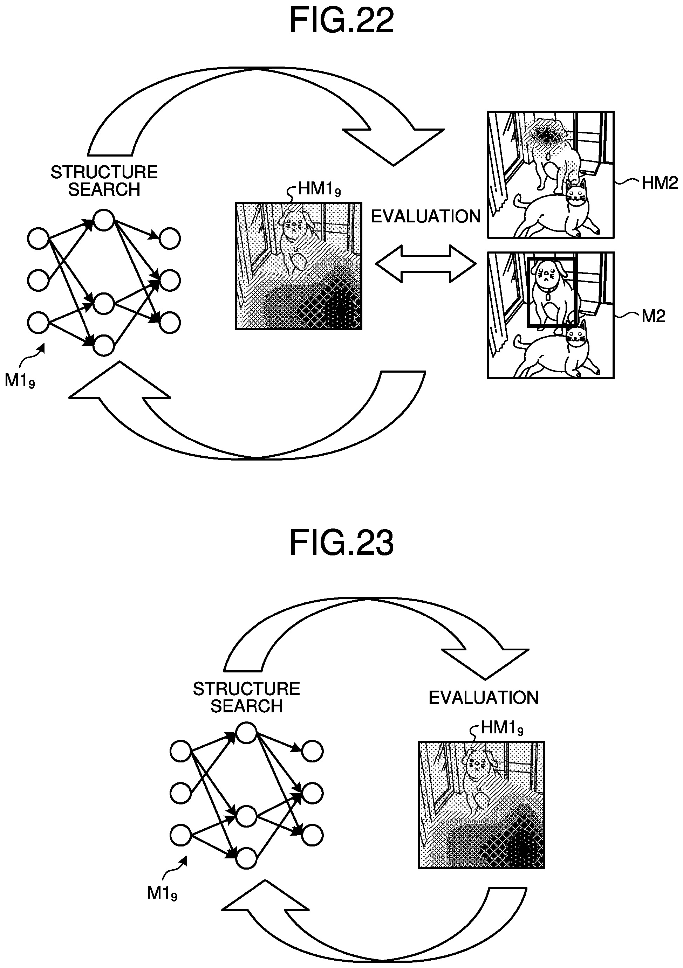

FIG. 22 and FIG. 23 are views for describing another example of the third determination processing according to the embodiment of the present disclosure.

For example, it is assumed that the compression processing unit 13_1 incorporates the XAI processing result (here, the heat map HM) into an evaluation function of reinforcement learning-type NAS.

In this case, as illustrated in FIG. 22, the compression processing unit 13_1 acquires a distance between a correct heat map HM2 for the input image IM and an output heat map (such as a heat map $HM1_9$ of a candidate model $M1_9$), and learns the candidate model $M1_9$ in such a manner that the distance decreases.

Note that in a case where there is no correct heat map HM2, the compression processing unit 13_1 may generate correct data M2 (such as image data including a bounding box including an object recognized to be correct) by using, for example, object recognition or the like. The compression processing unit 13_1 learns the candidate model $M1_9$ in such a manner that a distance between the correct data M2 and the output heat map is decreased.

As illustrated in FIG. 23, in a case where there is no correct heat map HM2, the compression processing unit 13_1 represents goodness of the output heat map by an index such as a degree of approximation with an RGB edge, and performs learning in such a manner that the index becomes better (for example, the value becomes larger).

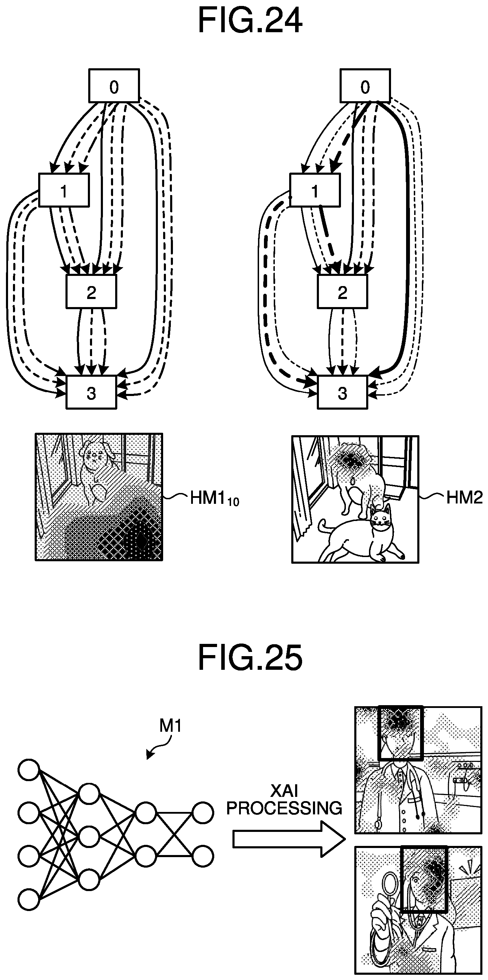

FIG. 24 is a view for describing another example of the third determination processing according to the embodiment of the present disclosure.

For example, it is assumed that the compression processing unit 13_1 incorporates the XAI processing result (here, the heat map HM) in an evaluation function of gradient NAS.

In this case, the compression processing unit 13_1 generates a candidate model $M_{10}$ by causing the network structure to be learned in such a manner that an index such as a degree of approximation between the output heat map (such as a heat map $HM1_{10}$ of a candidate model $M1_{10}$) and the correct heat map HM2.

In such a manner, the information processing device 10 uses the XAI processing result or the equivalence as the evaluation index (evaluation function) of the compression processing of the compression processing unit 13_1. As a result, the information processing device 10 can reduce the weight of the learning model while controlling a change in the model before and after the weight reduction processing.

<<4. Presentation example of information>>

The information processing device 10 can present a processing result of each unit to the user as presentation information. For example, the information processing device 10 can present the XAI processing result of the post-compression model M1 to the user as the presentation information.

FIG. 25 is a view for describing an example of the presentation information presented by the information processing device 10 according to the embodiment of the present disclosure.

As described above, the information processing device 10 according to the present embodiment performs the XAI processing on the post-compression model M1. Thus, the information processing device 10 presents a processing result of the XAI processing performed on the post-compression model M1 to the user as the presentation information.

As illustrated in FIG. 25, for example, it is assumed that the information processing device 10 generates the heat map HM as the XAI processing. In this case, the information processing device 10 presents the heat map HM to the user.

As a result, the user can confirm the fairness of the post-compression model M1 and confirm the determination basis of the inference result.

Note that although it is assumed here that the XAI processing result is the heat map HM, the XAI processing result is not limited to the heat map HM, and may be, for example, the image patch PM or the semantic concept.

Furthermore, the information processing device 10 may present both the XAI processing results of the pre-compression model M0 and the post-compression model M1 to the user.

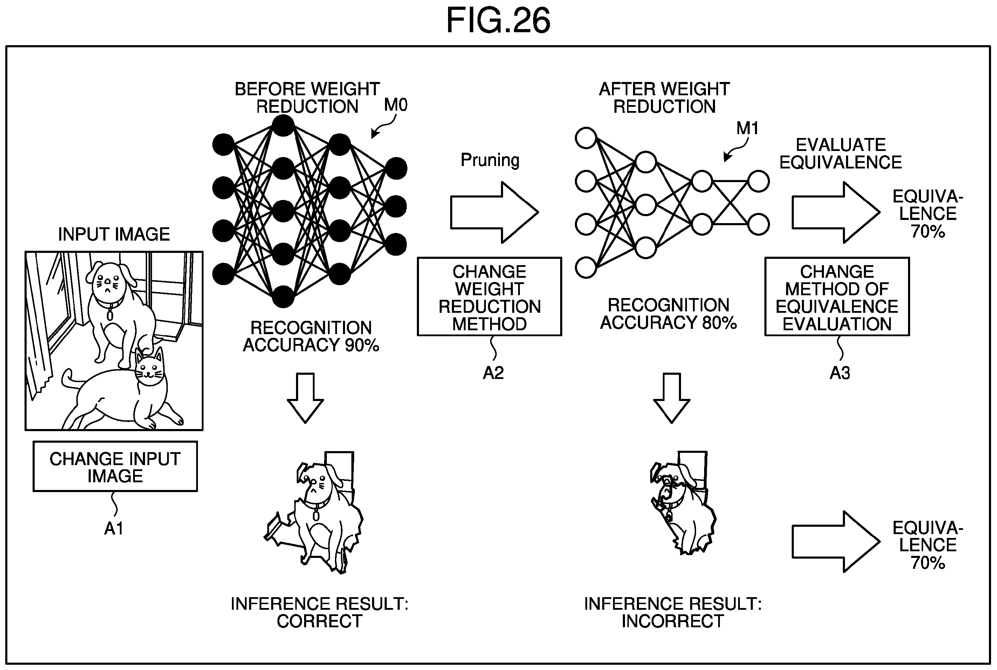

FIG. 26 is a view illustrating an example of a presentation image presented by the information processing device 10 according to the embodiment of the present disclosure.

The presentation image illustrated in FIG. 26 can include, for example, a schematic diagram of a model before the weight reduction (pre-compression model M0) and a schematic diagram of a model after the weight reduction (post-compression model M1). Furthermore, the presentation image may include the XAI processing results of the pre-compression model M0 and the post-compression model M1 (image patch PM in FIG. 26).

As a result, the user can confirm the fairness of the post-compression model M1 and confirm the determination basis of the inference result. In addition, the user can confirm a change in the fairness of the model and a change in the determination basis before and after the weight reduction processing.

Furthermore, the presentation image includes the equivalence and the recognition accuracy calculated by the evaluation processing unit 13_3, correctness/incorrectness of the inference result with respect to the input image, and the like.

Since the equivalence is included in the presentation image, the user can quantitatively confirm the change in the model before and after the weight reduction.

Furthermore, the presentation image may include a button A1 that receives a change in the input image, a button A2 that receives a change in the weight reduction method, and a button A3 that receives a change in the method of the equivalence evaluation (method of the XAI processing).

For example, when the input image is changed, the XAI processing result included in the presentation image changes. As a result, the user can confirm the XAI processing results for various input images.

Furthermore, since the information processing device 10 receives the change in the weight reduction method and the change in the equivalence evaluation method from the user, the user can select the weight reduction method and the method of the equivalence evaluation (or the method of the XAI processing).

Furthermore, although the information processing device 10 presents information (such as the equivalence) related to the one post-compression model M1 to the user in FIG. 26, the information processing device 10 may present information related to a plurality of the post-compression models M1 (candidate models M1 described above) to the user.

In this case, for example, as illustrated in FIG. 16, the information processing device 10 can present, to the user, the plurality of candidate models $M1_{31}$ and $M1_{32}$ and the equivalence in association with each other. Alternatively, the information processing device 10 may present the presentation information related to the plurality of post-compression models M1 to the user by using a graph or the like.

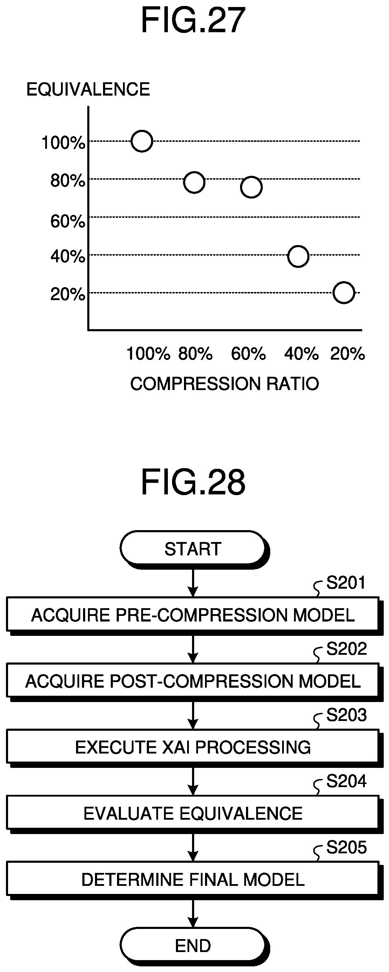

FIG. 27 is a view for describing another example of the presentation information presented by the information processing device 10 according to the embodiment of the present disclosure.

The presentation information illustrated in FIG. 27 is a graph illustrating a relationship between a weight reduction parameter and the equivalence. Here, a case where the weight reduction parameter is a compression ratio is illustrated.

That is, in the example illustrated in FIG. 27, a correspondence relationship between the candidate models M1 reduced in weight with different weight reduction parameters and the equivalence is represented as the graph.

As described above, since the information processing device 10 presents the plurality of candidate models M1 together with the equivalence to the user, the user can determine an appropriate final model MF (or weight reduction parameter) on the basis of the equivalence. In such a manner, the user may determine the final model MF from among the plurality of candidate models M1. In this case, the model determination unit 13_4 determines the final model MF according to an instruction from the user.

Note that although it is assumed here that the information processing device 10 presents the information related to the candidate models M1 reduced in weight with different weight reduction parameters to the user, the information presented by the information processing device 10 is not limited thereto. For example, the information processing device 10 may present information related to the candidate models M1 reduced in weight by different weight reduction methods to the user. For example, the information processing device 10 may present the candidate models M1 reduced in weight by the different weight reduction methods and the corresponding equivalence to the user.

As a result, the user can determine the appropriate final model MF (or weight reduction method) on the basis of the equivalence.

<<5. Model generation processing>>

FIG. 28 is a flowchart illustrating an example of a flow of model generation processing according to the embodiment of the present disclosure. The model generation processing is executed by the information processing device 10 in a case where the final model MF is generated.

As illustrated in FIG. 28, the information processing device 10 acquires the pre-compression model M0 (Step S201). The information processing device 10 acquires the pre-compression model M0 from the pre-compression model DB 12_1, for example. Alternatively, the information processing device 10 may acquire the pre-compression model M0 by learning the pre-compression model M0 with a learning data set acquired from the data set DB 12_3.

The information processing device 10 acquires the post-compression model M1 (Step S202). The information processing device 10 acquires the post-compression model M1 from the post-compression model DB 12_2, for example. Alternatively, the information processing device 10 may acquire the post-compression model M1 by performing the weight reduction processing on the pre-compression model M0.

The information processing device 10 executes the XAI processing (Step S203). The information processing device 10 executes the XAI processing on the pre-compression model M0 and the post-compression model M1.

The information processing device 10 evaluates the equivalence of the pre-compression model M0 and the post-compression model M1 on the basis of an XAI processing result (Step S204).

The information processing device 10 determines the final model MF on the basis of a result of the equivalence evaluation (Step S205).

As described above, since the information processing device 10 determines the final model MF on the basis of the equivalence evaluation, the information processing device 10 can further reduce the change in the model before and after the processing in the weight reduction processing.

<<6. Application example>>

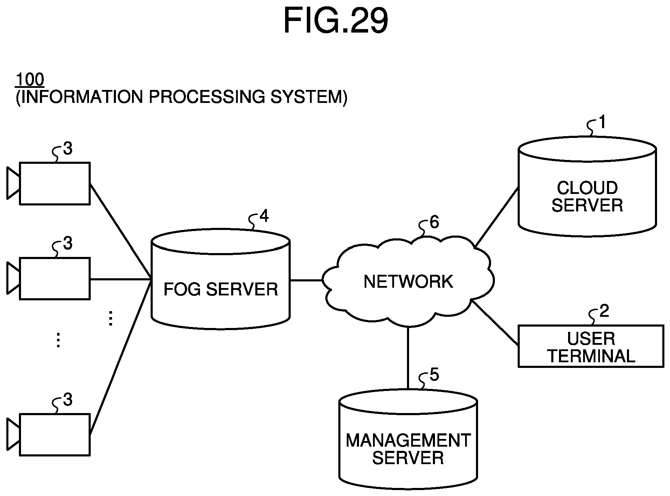

Next, an information processing system 100 to which the information processing device 10 according to the embodiment of the present disclosure is applied will be described with reference to FIG. 29 to FIG. 43.

<6.1. Information processing system>

<6.1.1. Overall configuration of the system>

FIG. 29 is a view illustrating a configuration example of the information processing system 100 according to the embodiment of the present disclosure.

As illustrated in FIG. 29, the information processing system 100 includes a cloud server 1, at least one user terminal 2, at least one camera 3 (three or more cameras in the example of FIG. 29), a FOG server 4, and a management server 5. The cloud server 1, the user terminal 2, the FOG server 4, and the management server 5 can communicate with each other via, for example, a network 6 (such as the Internet).

The cloud server 1, the user terminal 2, the FOG server 4, and the management server 5 can be configured as an information processing device including a microcomputer having a central processing unit (CPU), a read only memory (ROM), a random access memory (RAM), and the like.

The user terminal 2 is an information processing device assumed to be used by a user who is a receiver of a service using the information processing system 100. In addition, the management server 5 is an information processing device assumed to be used by a service provider.

The camera 3 is a terminal device including an image sensor such as a charge coupled device (CCD)-type image sensor or a complementary metal oxide semiconductor (CMOS)-type image sensor. The camera 3 images a subject and acquires image data (captured image data) as digital data.

As described later, the camera 3 also has a function of performing processing using artificial intelligence (AI) (such as image recognition processing, image detection processing, and the like) on a captured image. For example, the final model (AI model) described above can be used for the processing using AI.

In the following description, various kinds of processing on an image, such as the image recognition processing and the image detection processing will be simply referred to as "image processing". For example, various kinds of processing on an image which processing is performed by utilization of AI (or an AI model) will be described as "AI image processing".

The camera 3 is configured to be capable of data communication with the FOG server 4. The camera 3 transmits various kinds of data such as processing result information indicating a result of the processing using AI (such as the image processing) to the FOG server 4, and receives various kinds of data from the FOG server 4, for example.

Here, the information processing system 100 illustrated in FIG. 29 is assumed to be used to let the user view information included in the images captured by the cameras 3 via the user terminal 2, for example. In this case, for example, it is assumed that the FOG server 4 or the cloud server 1 generates analysis information of the subject on the basis of the processing result information acquired by the image processing of each of the cameras 3 and provides the analysis information to the user via the user terminal 2.

In this case, as usage of the cameras 3, usage as various monitoring cameras is conceivable. For example, usage as the monitoring cameras includes the following usage.

- Indoor monitoring camera for a store, office, house, and the like
- Outdoor monitoring camera for monitoring a parking lot, downtown, and the like (including traffic monitoring camera and the like)
- Monitoring camera of a manufacturing line in factory automation (FA) or industrial automation (IA)
- Monitoring camera that monitors an inside or outside of a vehicle

For example, in a case of usage as a monitoring camera in a store, it is conceivable that a plurality of cameras 3 is arranged at predetermined positions in the store and it is made possible for the user to check a customer group (such as sex and age group), an action (flow line) in the store, and the like of a customer.

In that case, it is conceivable that the FOG server 4 or the cloud server 1 generates, as the analysis information described above, information of the customer group of the customer, information of the flow line in the store, information of a congestion state at a checkout register (such as waiting time at the checkout register), and the like.

Alternatively, in a case of usage as a traffic monitoring camera, it is conceivable that a plurality of cameras 3 is arranged at respective positions in the vicinity of a road and it is made possible for the user to recognize information such as a number (vehicle number), vehicle color, and a vehicle type of a passing vehicle.

In that case, it is conceivable that the FOG server 4 or the cloud server 1 generates the information such as the number, the vehicle color, the vehicle type, and the like as the analysis information described above.

In addition, in a case where a traffic monitoring camera is used in a parking lot, it is conceivable that a camera 3 is arranged in such a manner as to be able to monitor each parked vehicle and it is made possible for the user to monitor whether there is a suspicious person who is behaving suspiciously around each vehicle. In this case, in a case where there is a suspicious person, it is conceivable that the information processing system 100 notifies the user of the presence of the suspicious person, attributes (sex and age group) of the suspicious person, and the like.

Furthermore, it is also conceivable that the information processing system 100 monitors an empty space in a downtown or a parking lot and notifies the user of a location of a space where a vehicle can be parked.

It is assumed that the FOG server 4 is arranged for each monitoring target, and is arranged, for example, in the store of the monitoring target together with the cameras 3 in the above-described usage of monitoring the store. When the FOG server 4 is provided for each of the monitoring targets such as the store in such a manner, it becomes unnecessary for the cloud server 1 to directly receive transmission data from the plurality of cameras 3 in the monitoring target and a processing load on the cloud server 1 is reduced.

Note that in a case where there is a plurality of stores to be monitored and all the stores belong to the same group, one FOG server 4 may be provided for the plurality of stores instead of being provided for each of the stores. That is, the FOG server 4 is not necessarily provided for each of the monitoring targets, and one FOG server 4 may be provided for the plurality of monitoring targets.

Note that in a case where the cloud server 1 or the cameras 3 have processing capability, the cloud server 1 or each of the cameras 3 may have the function of the FOG server 4. In this case, the FOG server 4 can be omitted in the information processing system 100. In this case, the cameras 3 may be directly connected to the network 6, and the cloud server 1 may directly receive transmission data from the plurality of cameras 3.

In the following description, the various devices can be roughly divided into a cloud-side information processing device and an edge-side information processing device.

The cloud-side information processing device corresponds to the cloud server 1 and the management server 5, and is a device group that provides a service assumed to be used by a plurality of users. The information processing device 10 described above can be applied to a part of the function of the cloud-side information processing device.

Furthermore, the edge-side information processing device corresponds to the cameras 3 and the FOG server 4, and can be regarded as a device group arranged in an environment prepared by a user who uses a cloud service.

However, both the cloud-side information processing device and the edge-side information processing device may be in an environment prepared by the same user.

Note that the FOG server 4 may be an on-premises server.

<6.1.2. Registration of an AI model and AI software>

As described above, in the information processing system 100 of the embodiment, the image processing using the AI model and AI utilization software is performed in the cameras 3 of the edge-side information processing device. Furthermore, in the cloud server 1 of the cloud-side information processing device, an advanced application function is realized by utilization of result information of the image processing on a side of the cameras 3.

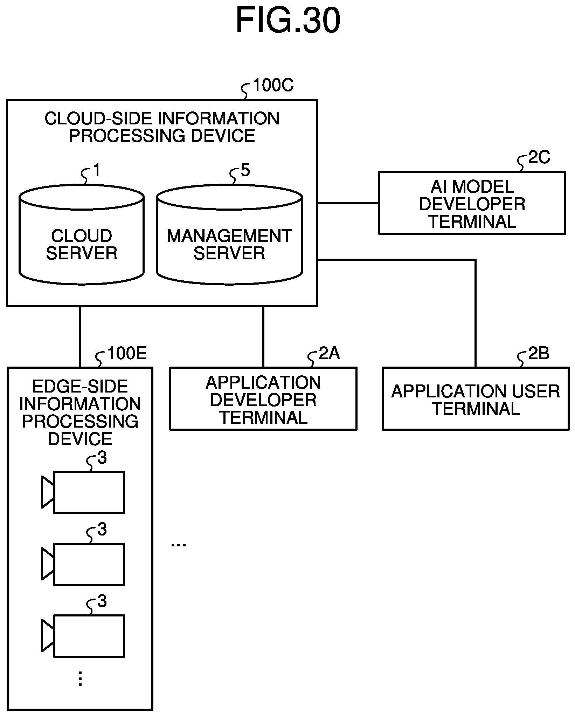

Here, various methods can be considered for registration of the application function in the cloud server 1 (or the FOG server 4) that is the cloud-side information processing device. An example will be described with reference to FIG. 30.

FIG. 30 is a view for describing an example of an application function registration method according to the embodiment of the present disclosure. Note that although illustration of the FOG server 4 is omitted in FIG. 30, the FOG server 4 may be included in the configuration. In this case, the FOG server 4 may share a part of the functions on the edge side.

As illustrated in FIG. 30, a cloud-side information processing device 100C includes the cloud server 1 and the management server 5 described above. Furthermore, an edge-side information processing device 100E includes the cameras 3 described above.

Note that each of the cameras 3 can be regarded as a device including a control unit that performs overall control of the camera 3, and the camera 3 can be regarded as a device including another device as an image sensor 303 including an arithmetic processing unit that performs various kinds of processing including the AI image processing on a captured image. That is, it may be understood that the image sensor 303 that is another edge-side information processing device is mounted inside the camera 3 that is an edge-side information processing device.

Furthermore, the user terminal 2 described above can include an application developer terminal 2A, an application user terminal 2B, an AI model developer terminal 2C, and the like.

As described above, the user terminal 2 is an information processing device used by a user who uses various services provided by the cloud-side information processing device 100C. The application developer terminal 2A is an information processing device used by a user who develops an application used for the AI image processing. The application user terminal 2B is an information processing device used by a user who uses the application. The AI model developer terminal 2C is an information processing device used by a user who develops an AI model used for the AI image processing.

Note that one information processing device may have a plurality of functions (such as the application user terminal 2B, the AI model developer terminal 2C, and the like). That is, for example, one information processing device may be the application user terminal 2B and the AI model developer terminal 2C.

Note that the application developer terminal 2A may be certainly used by a user who develops an application that does not use the AI image processing.

The cloud-side information processing device 100C includes a learning data set (corresponding to the data set DB 12_3 described above, for example) for learning by AI. A user who develops the AI model (hereinafter, also referred to as an AI model developer) can communicate with the cloud-side information processing device 100C by using the AI model developer terminal 2C, and download the learning data set.

At this time, the learning data set may be provided for a fee. For example, the AI model developer may purchase the learning data set in a state of being able to purchase various functions and materials registered in a marketplace (electronic market) prepared as a function of the cloud-side information processing device 100. For example, the AI model developer can purchase the materials and the like by registering personal information in the marketplace.

After developing an AI model by using the learning data set, the AI model developer registers the developed AI model in the marketplace by using the AI model developer terminal 2C. As a result, an incentive may be paid to the AI model developer when the AI model is downloaded.

At this time, the above-described equivalence can be set as a condition for registration in the marketplace. For example, in a case where the developed AI model is the final model MF acquired by the weight reduction of the pre-compression model M0, in a case where the evaluation result (such as the equivalence) by the equivalence evaluation processing is equal to or greater than a preset threshold, the registration of the final model MF in the marketplace is permitted.

As a result, fairness and the like equivalent to those of the pre-compression model M0 are secured for the final model MF registered in the marketplace.

Furthermore, the user who develops an application downloads an AI model from the marketplace by using the application developer terminal 2A, and develops an application using the AI model (hereinafter, referred to as an "AI application"). At this time, as described above, an incentive may be paid to the AI model developer.

The application development user registers the developed AI application in the marketplace by using the application developer terminal 2A. As a result, an incentive may be paid to the user who has developed the AI application when the AI application is downloaded.

At this time, the above-described equivalence can be set as a condition for registration in the marketplace. For example, it is assumed that the application development user performs the weight reduction with the developed AI model as the pre-compression model M0 at the time of creating the AI application, and generates the final model MF. In this case, for example, in a case where the evaluation result (such as the equivalence) by the equivalence evaluation processing of the final model MF is equal to or greater than a preset threshold, registration of the AI application including the final model MF in the marketplace is permitted.

As a result, fairness and the like equivalent to those of the pre-compression model M0 are secured for the final model MF included in the AI application registered in the marketplace.

By using the application user terminal 2B, the user who uses the AI application performs operation of deploying (deploying) at least one of the AI application or the AI model from the marketplace to the edge-side information processing device 100E managed by himself/herself. At this time, an incentive may be paid to the AI model developer.

As a result, the edge-side information processing device 100E, specifically, for example, the camera 3 can perform the AI image processing using at least one of the AI application or the AI model. Furthermore, the edge-side information processing device 100E can not only capture an image but also detect a customer and detect a vehicle by the AI image processing.

Here, the operation of deploying at least one of the AI application or the AI model (hereinafter, also referred to as deployment operation) means operation that enables a target (device) as an execution subject to use the AI application and the AI model. In other words, the deployment operation indicates that the AI application or the AI model is installed on the target as the execution subject in such a manner that at least a part of a program as the AI application can be executed.

Furthermore, in the camera 3, attribute information of a customer may be extractable by the AI image processing from a captured image captured by the camera 3. The attribute information is transmitted from the camera 3 to the cloud-side information processing device via the network 6, for example.

A cloud application is developed in the cloud-side information processing device 100C. The user can use the cloud application via the network 6. Then, as the cloud application, for example, an application of analyzing a flow line of the customer by using the attribute information of the customer and the captured image is prepared. Such a cloud application is uploaded by, for example, the application development user or the like.

The application utilization user uses, for example, a cloud application for a flow line analysis by using the application user terminal 2B. As a result, the application utilization user can perform the flow line analysis of the customer of the own store and view an analysis result.

As the viewing of the analysis result, the application utilization user checks, for example, a video in which flow lines of customers are graphically presented on a map of the store. Alternatively, density of the customers or the like may be presented by a display of the result of the flow line analysis in a form of a heat map and the analysis result may be viewed. In addition, these pieces of information may be sorted in the display for each piece of attribute information of the customers.

In the cloud-side marketplace, an AI model optimized for each user may be registered. For example, a captured image captured by a camera 3 arranged in a store managed by a certain user is appropriately uploaded and accumulated in the cloud-side information processing device 100C.

In the cloud-side information processing device 100C, relearning processing of the AI model is performed every time the certain number of uploaded captured images are accumulated, and processing of updating the AI model and performing re-registration into the marketplace is executed.

Note that the relearning processing of the AI model may be selected by the user as an option on the marketplace, for example.

For example, when the AI model relearned by utilization of a dark image from a camera 3 arranged in the store is deployed in the camera 3, a recognition rate or the like of the image processing on the captured image captured in a dark place can be improved. In addition, when the AI model relearned by utilization of a bright image from a camera 3 arranged outside the store is deployed in the camera 3, the recognition rate or the like of the image processing on the image captured in a bright place can be improved.

That is, the application utilization user can constantly acquire optimized processing result information by re-deploying the updated AI model in the camera 3.

Note that the relearning processing of the AI model will be described later again.

Furthermore, in a case where personal information is included in the information (such as the captured image) uploaded from the camera 3 to the cloud-side information processing device 100C, data from which information related to privacy is deleted may be uploaded in terms of privacy protection. Alternatively, the data from which the information related to privacy is deleted may be made available to the AI model development user or the application development user.

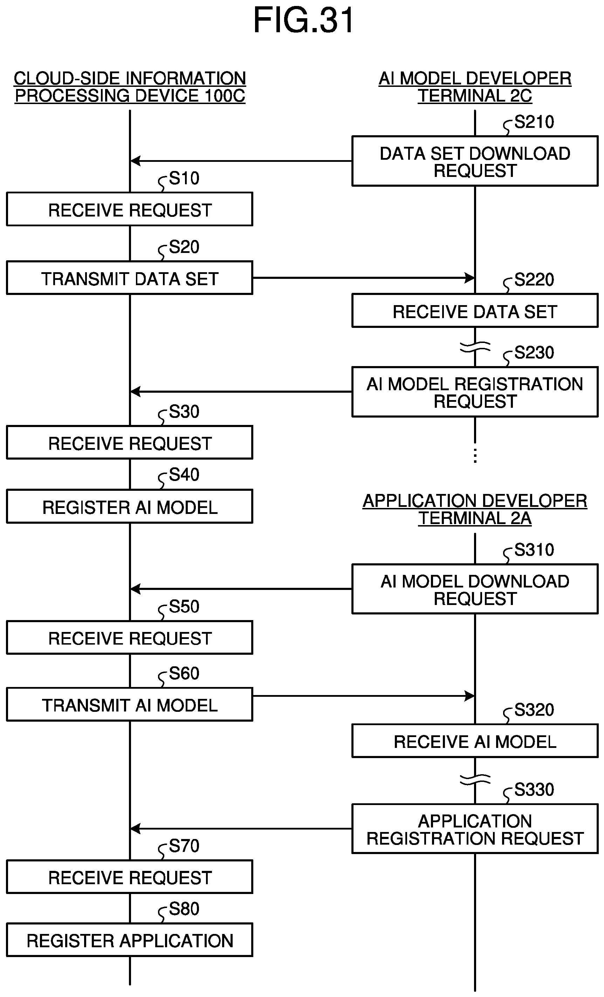

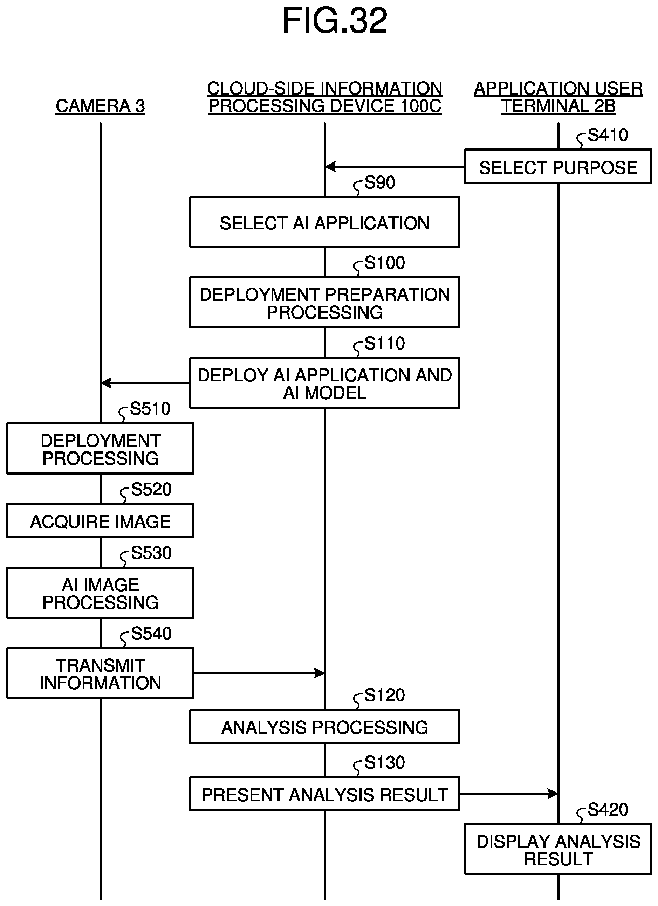

A flow of the above-described processing is illustrated in flowcharts in FIG. 31 and FIG. 32. FIG. 31 and FIG. 32 are sequence diagrams illustrating an example of a flow of the information processing executed by the information processing system 100 according to the embodiment of the present disclosure.

The AI model developer views a list of data sets registered in the marketplace by using the AI model developer terminal 2C having a display unit including, for example, a liquid crystal display (LCD), an organic electro luminescence (EL) panel, or the like. The AI model developer selects a desired data set by using the AI model developer terminal 2C. In response to this, the AI model developer terminal 2C transmits a download request for the selected data set to the cloud-side information processing device 100C (Step S210).

In response to this, the cloud-side information processing device 100 receives the request (Step S10), and transmits the requested data set to the AI model developer terminal 2C (Step S20).

The AI model developer terminal 2C receives the data set (Step S220). As a result, the AI model developer can develop the AI model using the data set.

After the AI model developer finishes developing the AI model, the AI model developer performs operation of registering the developed AI model in the marketplace (designates a name of the AI model, an address at which the AI model is placed, and the like, for example). As a result, the AI model developer terminal 2C transmits a request for registering the AI model into the marketplace to the cloud-side information processing device 100C (Step S230).

In response to this, the cloud-side information processing device 100C receives the registration request (Step S30), and performs registration processing of the AI model (Step S40). As a result, for example, the AI model is displayed on the marketplace. Thereafter, a user other than the AI model developer can download the AI model from the marketplace.

For example, an application developer who intends to develop an AI application views a list of AI models registered in the marketplace by using the application developer terminal 2A. The application developer terminal 2A transmits a download request of the selected AI model to the cloud-side information processing device 100C in response to operation (such as an operation of selecting one of the AI models on the marketplace) by the application developer (Step S310).

The cloud-side information processing device receives the request (Step S50) and transmits the AI model to the application developer terminal 2A (Step S60).

The application developer terminal 2A receives the AI model (Step S320). As a result, the application developer can develop an AI application using the AI model developed by another person.

When finishing developing the AI application, the application developer performs operation of registering the AI application in the marketplace (such as operation of designating a name of the AI application, an address at which the AI model is placed, and the like). The application developer terminal 2A transmits a registration request for the AI application to the cloud-side information processing device (Step S330).

The cloud-side information processing device 100C receives the registration request (Step S70) and registers the AI application (Step S80). As a result, for example, the AI application is displayed on the marketplace. Thereafter, a user other than the application developer can select and download the AI application on the marketplace.

Then, as illustrated in FIG. 32, for example, the application user terminal 2B performs purpose selection according to an instruction from the user who intends to use the AI application (Step S410). In the purpose selection, the selected purpose is transmitted to the cloud-side information processing device 100C.

In response to this, the cloud-side information processing device 100C selects an AI application corresponding to the purpose (Step S90), and performs preparation processing (deployment preparation processing) to deploy the AI application and the AI model to each device (Step S100).

As the deployment preparation processing, the cloud-side information processing device 100C determines the AI model and the like. The cloud-side information processing device 100C performs determination of the AI model, or the like in accordance with, for example, information of a device targeted for the deployment processing of the AI model or the AI application (such as information of the camera 3 and the FOG server 4), performance requested by the user, and the like.

As the deployment preparation processing, on the basis of performance information of each device and request information from the user, the cloud-side information processing device 100C determines which device is to execute each software (SW) component included in the AI application for realizing the function desired by the user.

Each SW component may be a container (described later) or may be a microservice. Note that the SW component can also be realized by utilization of the WebAssembly technology.

As each SW component, for example, in a case of an AI application that counts the number of customers for each of attributes such as sex and age, the following SW components and the like can be included.

- SW component that detects a face of a person from a captured image by using an AI model
- SW component that extracts attribute information of a person from a face detection result
- SW component that aggregates results
- SW component that visualizes an aggregation result

Some examples of the deployment preparation processing will be described later again.

The cloud-side information processing device 100C performs processing of deploying each of the SW components in each device (Step S110). In this processing, the AI application and the AI model are transmitted to each device such as the camera 3.

In response to this, the camera 3 performs the deployment processing of the AI application and the AI model (Step S510). As a result, the AI image processing can be performed on the captured image captured by the camera 3.

Note that although not illustrated in FIG. 32, the deployment processing of the AI application and the AI model is performed as necessary in the FOG server 4 in a similar manner.

However, in a case where all kinds of processing are executed in the camera 3, the deployment processing with respect to the FOG server 4 is not performed.

The camera 3 acquires an image by performing an imaging operation (Step S520). Then, the camera 3 performs the AI image processing on the acquired image (Step S530), and acquires, for example, an image recognition result.

The camera 3 transmits the captured image and result information of the AI image processing (Step S540). In this information transmission, the camera 3 may transmit both the captured image and the result information of the AI image processing, or may transmit either one thereof.

The cloud-side information processing device 100C that receives these pieces of information performs analysis processing (Step S120). For example, the flow line analysis of a customer, vehicle analysis processing for traffic monitoring, and the like are performed as the analysis processing.

The cloud-side information processing device 100C performs presentation processing of an analysis result (Step S130). This processing is realized, for example, when the user uses the cloud application described above.

In response to the presentation processing of the analysis result, the application user terminal 2B performs processing of displaying the analysis result on a monitor or the like (Step S420).

With the processing so far, the user who is the user of the AI application can acquire the analysis result corresponding to the purpose selected in Step S410.

Note that the cloud-side information processing device 100C may update the AI model after Step S130. By updating and deploying the AI model, it is possible to acquire the analysis result suitable for a use environment of the user.

<6.1.3. Functional outline of the system>

In the present embodiment, as a service using the information processing system 100, a service in which a user as a customer can select a type of a function with respect to the AI image processing of each camera 3 is assumed. The selection of the type of the function is, for example, selection of the image recognition function, the image detection function, and the like. Alternatively, the selection of the type of the function may include selection of a more detailed type in such a manner that the image recognition function or the image detection function is exhibited for a specific subject.

For example, as a business model, the service provider sells the camera 3 and the FOG server 4 having an image recognition function by AI to the user, and causes the camera 3 and the FOG server 4 to be installed at a place to be monitored. Then, a service for providing the above-described analysis information to the user is developed.

At this time, usage required for the system, such as usage of store monitoring and usage of traffic monitoring varies among users. Thus, the information processing system 100 can selectively set the AI image processing function of the camera 3 in such a manner that the analysis information corresponding to the usage desired by the customer is acquired.

In the present embodiment, it is assumed that the management server 5 has a function of selectively setting such an AI image processing function of the camera 3.

Note that the cloud server 1 or the FOG server 4 may have the function of the management server 5.

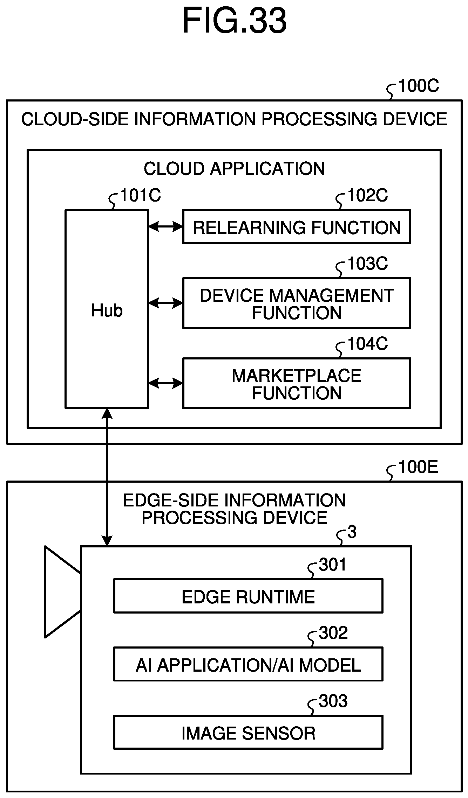

Here, connection between the cloud server 1 and the management server 5 that are the cloud-side information processing device 100C and the camera 3 that is the edge-side information processing device 100E will be described with reference to FIG. 33.

FIG. 33 is a view for describing connection between the cloud-side information processing device 100C and the edge-side information processing device 100E according to the embodiment of the present disclosure.

In the cloud-side information processing device 100C, a relearning function 102C, a device management function 103C, and a marketplace function 104C that are functions available via a Hub 101C are implemented.

The Hub 101C performs highly reliable communication protected with security with respect to the edge-side information processing device 100E. As a result, the Hub 101C can provide various functions to the edge-side information processing device 100E.

The relearning function 102C is a function of performing relearning and providing a newly optimized AI model. As a result, an appropriate AI model based on a new learning material is provided.

The device management function 103C is a function of managing the camera 3 and the like as the edge-side information processing device 100E. The device management function 103C provides, for example, functions such as management and monitoring of the AI model deployed in the camera 3, and trouble detection and troubleshooting.

The device management function 103C is also a function of managing information of the camera 3 and the FOG server 4. The information of the camera 3 and the FOG server 4 is information of a chip used as an arithmetic processing unit, information such as a memory capacity, a storage capacity, and a usage rate of a CPU and a memory, and information of software such as an operating system (OS) installed in each device.

Furthermore, the device management function 103C protects secure access by an authenticated user.

The marketplace function 104C provides a function of registering the AI model developed by the AI model developer and the AI application developed by the application developer. The marketplace function 104C provides a function of deploying these developed objects in the permitted edge-side information processing device 100E, and the like. In addition, the marketplace function 104C also provides a function related to payment of an incentive corresponding to deployment of the developed objects.

The camera 3 as the edge-side information processing device 100E includes edge runtime 301, an AI application/AI model 302, and an image sensor 303.

The edge runtime 301 functions as embedded software for managing an application deployed in the camera 3 and communicating with the cloud-side information processing device 100C.

As described above, the AI application/AI model 302 is acquired by deployment of an AI application/AI model registered in the marketplace in the cloud-side information processing device 100C. As a result, the camera 3 acquires result information of the AI image processing corresponding to a purpose by using the captured image.

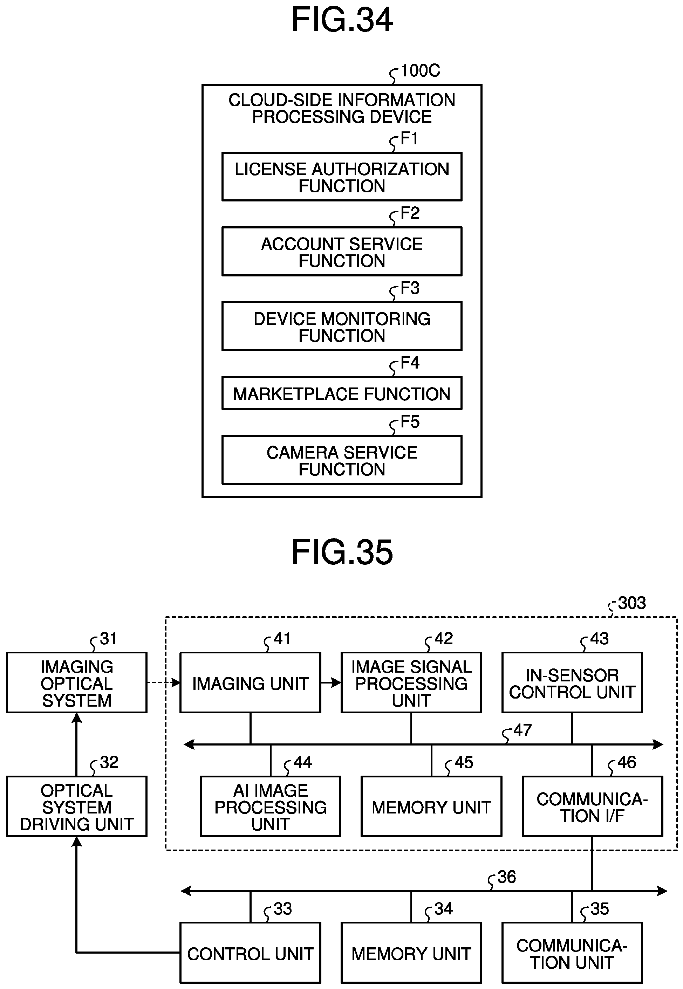

FIG. 34 is a block diagram illustrating a configuration example of the cloud-side information processing device 100C according to the embodiment of the present disclosure. An outline of functions of the cloud-side information processing device 100C will be described with reference to FIG. 34. Note that devices such as the cloud server 1 and the management server 5 are collectively referred to as the cloud-side information processing device 100C.

The cloud-side information processing device 100C includes a license authorization function F1, an account service function F2, a device monitoring function F3, a marketplace function F4, and a camera service function F5.

The license authorization function F1 is a function of performing processing related to various types of authentication. Specifically, in the license authorization function F1, processing related to device authentication of each camera 3 and processing related to authentication of each of the AI model, software, and firmware used in the camera 3 are performed.

The software here means software necessary for appropriately realizing the AI image processing in the camera 3.

In order to appropriately perform the AI image processing based on the captured image and transmit a result of the AI image processing to the FOG server 4 or the cloud server 1 in an appropriate format, it is required to control a data input to the AI model and appropriately process output data of the AI model. The above-described software is software including peripheral processing necessary for appropriately realizing the AI image processing. Such software is software for realizing a desired function by using the AI model, and corresponds to the above-described AI application.

Note that the AI application is not limited to what uses one AI model, and what uses two or more AI models is also conceivable. For example, there may be an AI application having a processing flow of inputting information of a recognition result acquired by an AI model that executes the AI image processing with a captured image as input data (such as image data, and hereinafter referred to as "recognition result information") into another AI model, and causing second AI image processing to be executed.

In the license authorization function F1, for authentication of the camera 3, processing of issuing a device identification (ID) for each camera 3 is performed in a case where the camera 3 is connected via the network 6.

Furthermore, with respect to the authentication of the AI model and software, processing of issuing a unique ID (AI model ID or software ID) is performed for each of the AI model and the AI application registration of which is requested from the AI model developer terminal 2C and a software developer terminal (not illustrated). Note that the software developer terminal is an information processing device used by the developer of the AI application.

Furthermore, in the license authorization function F1, processing of issuing various keys, certificates, and the like to a manufacturer of the camera 3 (specifically, a manufacturer of the image sensor 303 described later), an AI model developer, and a software developer is performed. The various keys, certificates, and the like are used to perform secure communication between the camera 3, the AI model developer terminal 2C, and the software developer terminal (not illustrated) and the cloud server 1. In addition, processing for updating or stopping certificate validity is also performed in the license authorization function F1.

Furthermore, in the license authorization function F1, in a case where user registration (registration of account information accompanied by issuance of a user ID) is performed by the account service function F2 described below, processing of associating the camera 3 purchased by the user (above-described device ID) with the user ID is also performed.

The account service function F2 is a function of generating and managing account information of the user. The account service function F2 receives an input of user information, and generates the account information on the basis of the input user information (generates account information including at least the user ID and password information).

Furthermore, in the account service function F2, registration processing (registration of the account information) of the AI model developer and the developer of the AI application (hereinafter, also abbreviated as a "software developer") is performed.

The device monitoring function F3 is a function of performing processing to monitor a use state of the camera 3. The device monitoring function F3 monitors information such as the above-described usage rate of the CPU and the memory as various elements related to a use state of the camera 3, such as the usage location of the camera 3, an output frequency of the output data of the AI image processing, and a free space of the CPU and the memory used for the AI image processing.

The marketplace function F4 is a function for selling the AI model and the AI application. For example, via a sales web site (sales site) provided by the marketplace function F4, the user can purchase the AI application and the AI model used by the AI application. In addition, the software developer can purchase the AI model for creating the AI application via the sales site described above. Note that the marketplace function F4 may have the same functional configuration as the marketplace function 104C illustrated in FIG. 33.

The camera service function F5 is a function for providing the user with a service related to utilization of the camera 3. As one example of the camera service function F5, there is a function related to generation of the analysis information described above. This function is a function of generating analysis information of a subject on the basis of processing result information of the image processing in the camera 3 and performing processing for allowing the user to view the generated analysis information via the user terminal 2.

In addition, the camera service function F5 includes an imaging setting search function. Specifically, this imaging setting search function is a function of acquiring the recognition result information of the AI image processing from the camera 3 and searching for imaging setting information of the camera 3 by using, for example, AI on the basis of the acquired recognition result information.

Here, the imaging setting information broadly means setting information related to an imaging operation to acquire a captured image. Specifically, the imaging setting information widely includes optical setting, setting related to a readout operation of a captured image signal, setting related to image signal processing on the read captured image signal, and the like. The optical setting includes, for example, setting of a focus, a diaphragm, and the like. The setting related to the readout operation of the captured image signal includes, for example, setting of a frame rate, exposure time, gain, and the like. The setting related to the image signal processing with respect to the read captured image signal include, for example, setting related to gamma correction processing, noise reduction processing, super-resolution processing, and the like.

In addition, the camera service function F5 includes, for example, an AI model search function. This AI model search function is a function of searching for an optimal AI model, which is used for the AI image processing in the camera 3, by using AI on the basis of the recognition result information of the AI image processing by the camera 3. The search for the AI model here includes, for example, processing of optimizing various processing parameters such as a weighting factor, setting information related to a neural network structure (for example, including information of a kernel size), and the like in a case where the AI image processing is realized by the CNN or the like including a convolution operation.

Furthermore, the camera service function F5 includes, for example, a processing share determination function. In the processing share determination function, when the AI application is deployed in the edge-side information processing device 100E, the camera service function F5 performs processing of determining a device of a deployment destination in units of SW components as the deployment preparation processing described above. Note that some SW components may be determined to be executed in the cloud-side information processing device 100C. In this case, the deployment processing may not be performed on the assumption that the deployment is already performed on the cloud-side information processing device 100.

For example, it is assumed that the AI application includes an SW component that detects a face of a person, an SW component that extracts attribute information of the person, an SW component that aggregates extraction results, and an SW component that visualizes an aggregation result.

In this case, the camera service function F5 determines the image sensor 303 of the camera 3 (see FIG. 33) as the device of the deployment destination with respect to the SW component that detects the face of the person. The camera service function F5 determines the camera 3 as the device of the deployment destination with respect to the SW component that extracts the attribute information of the person. The camera service function F5 determines the FOG server 4 as the device of the deployment destination with respect to the SW component that aggregates the extraction result. The camera service function F5 determines to execute the SW component, which visualizes the aggregation result, in the cloud server 1 without newly performing deployment to a device.

In such a manner, the camera service function F5 determines a processing share in each device by determining the deployment destination of each of the SW components.

Note that the determination is made in consideration of specifications and performance of each device and a request from the user.

Since the camera service function F5 has the imaging setting search function and the AI model search function as described above, imaging setting that makes a result of the AI image processing favorable is performed. Furthermore, the camera service function F5 can perform the AI image processing by using an appropriate AI model corresponding to an actual use environment.

In addition, since the camera service function F5 has the processing share determination function, the camera service function F5 can make the AI image processing and the analysis processing thereof executed in an appropriate device.

Note that the camera service function F5 has an application setting function prior to deployment of each of the SW components. The application setting function is a function of setting an appropriate AI application according to a purpose of the user.

For example, the camera service function F5 selects an appropriate AI application in response to the user selecting usage such as store monitoring or traffic monitoring. As a result, the SW component included in the AI application is also automatically determined.

Note that as described later, there may be a plurality of types of combinations of the SW components for realizing the purpose of the user by using the AI application. In this case, one combination is selected according to the information of the edge-side information processing device 100E and a request from the user.

For example, in a case where the purpose of the user is store monitoring, the combination of the SW components may vary between a case where the request from the user focuses on privacy and a case where the request from the user focuses on speed.

Processing of receiving operation by the user to select the purpose (application) in the user terminal 2 (corresponding to the application user terminal 2B in FIG. 30), processing of selecting an appropriate AI application according to the selected application, and the like are performed in the application setting function.

Here, in the above, an example of the configuration in which the cloud-side information processing device 100 alone realizes the license authorization function F1, the account service function F2, the device monitoring function F3, the marketplace function F4, and the camera service function F5 has been described. Note that these functions may be shared and realized by a plurality of information processing devices. For example, it is conceivable that each of the above-described functions is performed by one information processing device. Alternatively, a plurality of information processing devices (such as the cloud server 1 and the management server 5) may share and perform a single function among the above-described functions.

The AI model developer terminal 2C is an information processing device used by the developer of the AI model in FIG. 29. In addition, as described above, the software developer terminal is an information processing device used by the developer of the AI application.

<6.1.4. Configuration of an imaging device>

FIG. 35 is a block diagram illustrating an internal configuration example of the camera 3 according to the embodiment of the present disclosure.

As illustrated in FIG. 35, the camera 3 includes an imaging optical system 31, an optical system driving unit 32, an image sensor 303, a control unit 33, a memory unit 34, and a communication unit 35. The image sensor 303, the control unit 33, the memory unit 34, and the communication unit 35 are connected via a bus 36, and can perform data communication with each other.

The imaging optical system 31 includes lenses such as a cover lens, a zoom lens, and a focus lens, and a diaphragm (iris) mechanism. Light (incident light) from a subject is guided by the imaging optical system 31 and collected on a light receiving surface of the image sensor 303.

The optical system driving unit 32 comprehensively indicates driving units of the zoom lens, the focus lens, and the diaphragm mechanism included in the imaging optical system 31. Specifically, the optical system driving unit 32 includes an actuator for driving each of the zoom lens, the focus lens, and the diaphragm mechanism, and a driving circuit of the actuator.

The control unit 33 includes, for example, a microcomputer including a CPU, a ROM, and a RAM. The control unit 33 performs overall control of the camera 3 by the CPU executing various kinds of processing according to a program stored in the ROM or a program loaded in the RAM.

Furthermore, the control unit 33 instructs the optical system driving unit 32 to drive the zoom lens, the focus lens, the diaphragm mechanism, and the like. The optical system driving unit 32 executes movement of the focus lens and the zoom lens, opening and closing of diaphragm blades of the diaphragm mechanism, and the like according to these driving instructions.

Furthermore, the control unit 33 controls writing and reading of various kinds of data to and from the memory unit 34.

The memory unit 34 is, for example, a nonvolatile storage device such as a hard disk drive (HDD) or a flash memory device and is used as a storage destination (recording destination) of image data output from the image sensor 303.

The communication unit 35 performs various kinds of data communication with an external device under the control of the control unit 33. The communication unit 35 is configured to be able to perform data communication with at least the FOG server 4 (or the cloud server 1) illustrated in FIG. 29.

The image sensor 303 is configured as, for example, a CCD-type or CMOS-type image sensor.

The image sensor 303 includes an imaging unit 41, an image signal processing unit 42, an in-sensor control unit 43, an AI image processing unit 44, a memory unit 45, and a communication I/F 46. The imaging unit 41, the image signal processing unit 42, the in-sensor control unit 43, the AI image processing unit 44, the memory unit 45, and the communication I/F 46 can perform data communication with each other via a bus 47.

The imaging unit 41 includes a pixel array unit in which pixels having a photoelectric conversion element such as a photodiode are two-dimensionally arrayed, and a readout circuit that reads an electric signal acquired by photoelectric conversion from each of the pixels included in the pixel array unit. The imaging unit 41 outputs the electric signal as the captured image signal.

The readout circuit performs, for example, correlated double sampling (CDS) processing, automatic gain control (AGC) processing, and the like on the electric signal acquired by the photoelectric conversion, and further performs analog/digital (A/D) conversion processing.

The image signal processing unit 42 performs preprocessing, synchronization processing, YC generation processing, resolution conversion processing, codec processing, and the like on the captured image signal as digital data after the A/D conversion processing.

In the preprocessing, clamp processing of clamping black levels of R, G, and B to a predetermined level, correction processing between color channels of R, G, and B, and the like are performed on the captured image signal.

In the synchronization processing, color separation processing is performed on the image data of each of the pixels in such a manner that all the R, G, and B color components are included. For example, in a case of an imaging element using a color filter of a Bayer array, demosaic processing is performed as the color separation processing.

In the YC generation processing, a luminance (Y) signal and a color (C) signal are generated (separated) from the R, G, and B image data. In the resolution conversion processing, the resolution conversion processing is executed on the image data on which various kinds of signal processing is performed.

In the codec processing, for example, encoding processing for recording or communication and file generation are performed on the image data on which the above-described various kinds of processing is performed. In the codec processing, the file generation in a format such as Moving Picture Experts Group (MPEG)-2 or H.264 can be performed as a file format of a moving image. Furthermore, as a still image file, a file of a format such as the Joint Photographic Experts Group (JPEG), Tagged Image File Format (TIFF), the Graphics Interchange Format (GIF), or the like can be generated.

The in-sensor control unit 43 performs execution control of the imaging operation by giving an instruction to the imaging unit 41. Similarly, the in-sensor control unit 43 also performs execution control of processing with respect to the image signal processing unit 42.

The AI image processing unit 44 performs the image recognition processing as the AI image processing with respect to the captured image.

The image recognition function using AI may be realized by utilization of a programmable arithmetic processing device such as a CPU, a field programmable gate array (FPGA), or a digital signal processor (DSP).

The function of image recognition that can be realized by the AI image processing unit 44 can be switched by changing of an algorithm of the AI image processing. In other words, a function type of the AI image processing is switched by switching of the AI model used for the AI image processing. Various function types of the AI image processing can be considered, and examples thereof include types described below as examples.

- Class identification
- Semantic segmentation
- Person detection
- Vehicle detection
- Target tracking
- Optical character recognition (OCR)

Among the above-described function types, the class identification is a function of identifying a class of a target. The "class" referred to herein is information indicating a category of an object, and distinguishes, for example, a "person", "automobile", "airplane", "ship", "truck", "bird", "cat", "dog", "deer", "frog", "horse", and the like.

The target tracking is a function of tracking a target subject, and can be said to be a function of acquiring history information of a position of the subject.

The memory unit 45 is used as a storage destination of various kinds of data such as captured image data acquired by the image signal processing unit 42. Furthermore, the memory unit 45 can also be used for temporary storage of data used by the AI image processing unit 44 in a process of the AI image processing.

Furthermore, the memory unit 45 stores information of the AI application and the AI model used in the AI image processing unit 44.

Note that the information of the AI application and the AI model may be deployed in the memory unit 45 as a container or the like by utilization of a container technology (described later), or may be deployed by utilization of a microservice technology.

By deploying the AI model used for the AI image processing in the memory unit 45, the camera 3 can change the function type of the AI image processing or change the AI model to an AI model with improved performance by relearning.

Note that as described above, it is assumed in the present embodiment that the AI model and the AI application are used for the image recognition. However, the AI model and the AI application may be used for a program or the like executed by utilization of the AI technology.

Furthermore, in a case where capacity of the memory unit 45 is small, the camera 3 may deploy the information of the AI application and the AI model as a container or the like to a memory outside the image sensor 303, such as the memory unit 34 by using the container technology. After the deployment, the camera 3 may store the AI model into the memory unit 45 in the image sensor 303 via the communication I/F 46 (described later).

The communication I/F 46 is an interface that communicates with the control unit 33, the memory unit 34, and the like outside the image sensor 303. The communication I/F 46 performs communication for acquiring a program executed by the image signal processing unit 42, an AI application and an AI model used by the AI image processing unit 44, and the like from the outside, and performs storing thereof into the memory unit 45 included in the image sensor 303.

As a result, the AI model is stored in a part of the memory unit 45 included in the image sensor 303, and it becomes possible for the AI image processing unit 44 to use the AI model.

The AI image processing unit 44 recognizes the subject according to the purpose by performing predetermined image recognition processing using the AI application or the AI model acquired in such a manner.

The recognition result information of the AI image processing is output to the outside of the image sensor 303 via the communication I/F 46. That is, the recognition result information of the AI image processing is output from the communication I/F 46 of the image sensor 303 in addition to the image data output from the image signal processing unit 42.

Note that either the image data or the recognition result information can be output from the communication I/F 46 of the image sensor 303.

For example, in a case where the above-described AI model relearning function is used, captured image data used for the relearning function is uploaded from the image sensor 303 to the cloud-side information processing device 100C via the communication I/F 46 and the communication unit 35.

Furthermore, in a case where inference using the AI model is performed, the recognition result information of the AI image processing is output from the image sensor 303 to another information processing device outside the camera 3 via the communication I/F 46 and the communication unit 35.

Various configurations of the image sensor 303 can be considered. Here, an example in which the image sensor 303 has a structure in which two layers are stacked will be described.

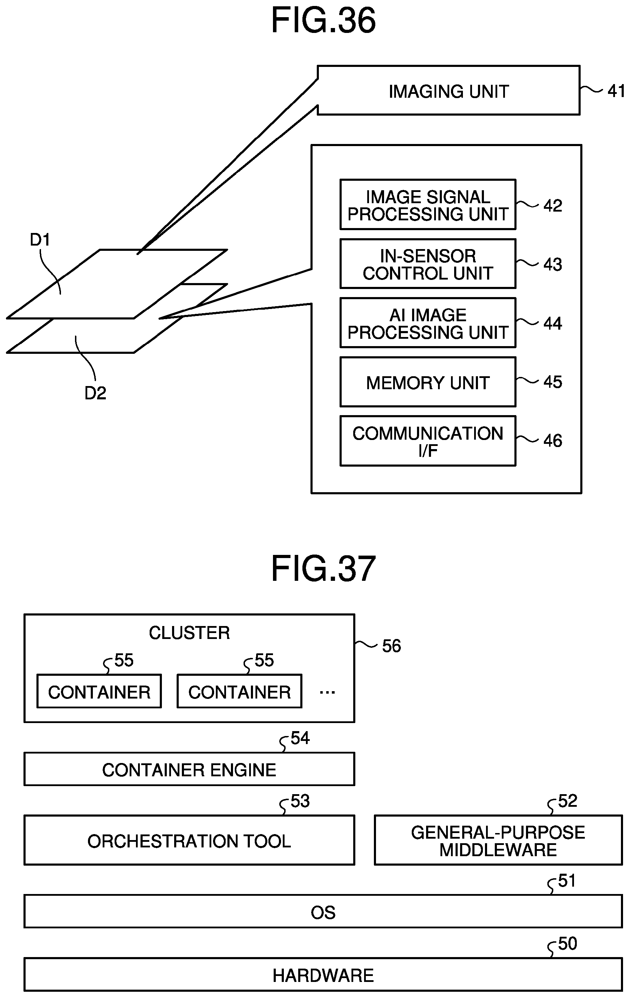

FIG. 36 is a view illustrating an example of the structure of the image sensor 303 according to the embodiment of the present disclosure. As illustrated in FIG. 36, the image sensor 303 is configured as a one-chip semiconductor device in which two dies are stacked.

The image sensor 303 is configured by stacking of a die D1 and a die D2. The die D1 has a function as the imaging unit 41 illustrated in FIG. 35. The die D2 includes the image signal processing unit 42, the in-sensor control unit 43, the AI image processing unit 44, the memory unit 45, and the communication I/F 46.

The die D1 and the die D2 are electrically connected by, for example, Cu-Cu bonding.

Various methods of deploying the AI model, the AI application, and the like in the camera 3 can be considered. As an example, an example of using the container technology will be described.

FIG. 37 is a view illustrating a deployment example of the AI model and the AI application according to the embodiment of the present disclosure. A case where the AI model and the AI application are deployed in the camera 3 is illustrated in FIG. 37.

As illustrated in FIG. 37, in the camera 3, an operation system 51 is installed on various kinds of hardware 50 such as a CPU or a graphics processing unit (GPU) that functions as the control unit 33 (see FIG. 35), a ROM, and a RAM.

The operation system 51 is basic software that performs overall control of the camera 3 in order to realize various functions in the camera 3.

General-purpose middleware 52 is, for example, software to realize basic operations such as a communication function using the communication unit 35 as the hardware 50 and a display function using a display unit (such as a monitor) as the hardware 50.

On the operation system 51, not only the general-purpose middleware 52 but also an orchestration tool 53 and a container engine 54 are installed.

The orchestration tool 53 and the container engine 54 deploy and execute a container 55 by constructing a cluster 56 as an operation environment of the container 55.

Note that the edge runtime 301 illustrated in FIG. 33 corresponds to the orchestration tool 53 and the container engine 54 illustrated in FIG. 37.

The orchestration tool 53 has a function of causing the container engine 54 to appropriately allocate resources of the hardware 50 and the operation system 51 described above. The containers 55 are put together in a predetermined unit (pod described later) by the orchestration tool 53, and are deployed on a worker node (described later) in which pods are respectively in logically different areas.

The container engine 54 is one piece of the middleware installed in the operation system 51, and is an engine that operates the container 55. Specifically, the container engine 54 has a function of allocating resources (such as memory and operation capability) of the hardware 50 and the operation system 51 to the container 55 on the basis of a setting file or the like included in the middleware in the container 55.

Furthermore, the resources allocated here include not only resources such as the control unit 33 included in the camera 3 but also resources such as the in-sensor control unit 43, the memory unit 45, and the communication I/F 46 included in the image sensor 303.

The container 55 includes an application for realizing a predetermined function and middleware such as a library. The container 55 operates to realize a predetermined function by using the resources of the hardware 50 and the operation system 51 which resources are allocated by the container engine 54.

The AI application/AI model 302 illustrated in FIG. 33 corresponds to one of the containers 55. That is, one of the various containers 55 deployed in the camera 3 realizes a predetermined AI image processing function using the AI application/AI model 302.

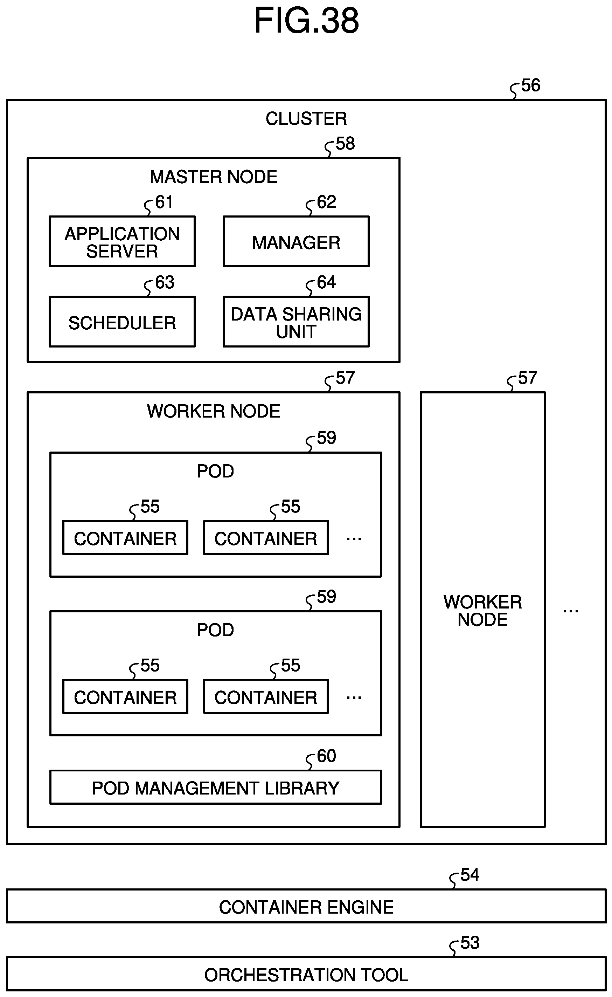

A specific configuration example of the cluster 56 constructed by the container engine 54 and the orchestration tool 53 will be described with reference to FIG. 38.

FIG. 38 is a view illustrating the configuration example of the cluster 56 according to the embodiment of the present disclosure.

Note that the cluster 56 may be constructed across a plurality of devices in such a manner that functions are realized by utilization of resources of not only the hardware 50 included in one camera 3 but also other hardware included in other devices.

The orchestration tool 53 manages an execution environment of the container 55 in a unit of worker node 57. In addition, the orchestration tool 53 constructs a master node 58 that manages the entire worker node 57.

In the worker node 57, a plurality of pods 59 is deployed. Each of the pods 59 is configured to include one or a plurality of containers 55, and realizes a predetermined function. The pod 59 is a unit of management for managing the container 55 by the orchestration tool 53.

An operation of the pod 59 in the worker node 57 is controlled by a pod management library 60.

The pod management library 60 includes container runtime for causing the pod 59 to use a logically allocated resource of the hardware 50, an agent that receives control from the master node 58, a network proxy that performs communication between the pods 59 and communication with the master node 58, and the like.

That is, each of the pods 59 can realize a predetermined function using each of the resources by the pod management library 60.

The master node 58 includes an application server 61, a manager 62, a scheduler 63, and a data sharing unit 64. The application server 61 deploys the pod 59. The manager 62 manages a deployment state of the container 55 by the application server 61. The scheduler 63 determines a worker node 57 in which the container 55 is arranged. The data sharing unit 64 performs data sharing.

By using the configurations illustrated in FIG. 37 and FIG. 38, the information processing system 100 can deploy the AI application and the AI model described above in the image sensor 303 of the camera 3 by using the container technology.

Note that as described above, the AI model may be stored in the memory unit 45 in the image sensor 303 via the communication I/F 46 in FIG. 35 and used for the AI image processing in the image sensor 303. Alternatively, the configurations illustrated in FIG. 37 and FIG. 38 may be deployed in the memory unit 45 and the in-sensor control unit 43 in the image sensor 303, and the above-described AI application and AI model may be executed by utilization of the container technology in the image sensor 303.

Furthermore, as described later, the container technology may be used in a case where the AI application and/or AI model is deployed in the FOG server 4 or the cloud-side information processing device 100C.

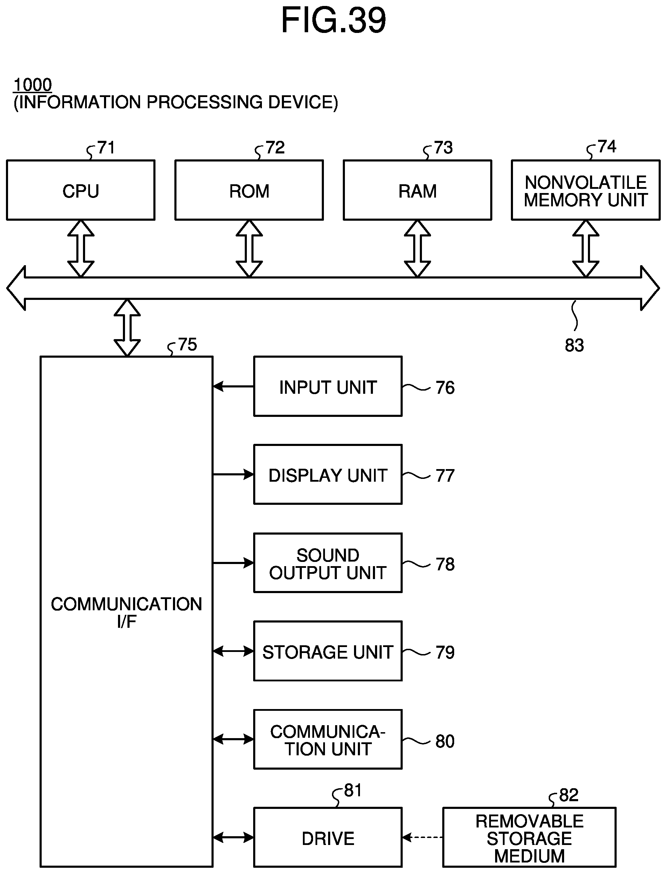

At that time, the information of the AI application or the AI model is deployed and executed as the container or the like in the memory such as a nonvolatile memory unit 74, a storage unit 79, or a RAM 73 in FIG. 39 (described later).

<6.1.5. Hardware configuration of an information processing device>

A hardware configuration of an information processing device 1000 that functions as the cloud server 1, the user terminal 2, the FOG server 4, the management server 5, and the like included in the information processing system 100 will be described with reference to FIG. 39.

FIG. 39 is a view illustrating an example of the hardware configuration of the information processing device 1000 according to the embodiment of the present disclosure.

The information processing device 1000 includes a CPU 71. The CPU 71 functions as an arithmetic processing unit that performs the various kinds of processing described above, and executes various kinds of processing according to a program stored in the ROM 72 or the nonvolatile memory unit 74 such as an electrically erasable programmable read-only memory (EEP-ROM), or a program loaded from the storage unit 79 to the RAM 73. The RAM 73 also appropriately stores data and the like necessary for the CPU 71 to execute the various kinds of processing.

Note that the CPU 71 included in the information processing device 1000 as the cloud server 1 functions as a license authorization unit, an account service providing unit, a device monitoring unit, a marketplace function providing unit, and a camera service providing unit in order to realize the above-described functions.

The CPU 71, the ROM 72, the RAM 73, and the nonvolatile memory unit 74 are connected to each other via a bus 83. An input/output interface (I/F) 75 is also connected to the bus 83.

An input unit 76 including an operator and an operation device is connected to the input/output interface 75. For example, various operators and operation devices such as a keyboard, a mouse, a key, a dial, a touch panel, a touch pad, and a remote controller are assumed as the input unit 76. Operation by the user is detected by the input unit 76, and a signal corresponding to the input operation is interpreted by the CPU 71.

In addition, a display unit 77 including an LCD, an organic EL panel, or the like, and a sound output unit 78 including a speaker or the like are integrally or separately connected to the input/output interface 75.

The display unit 77 is a display unit that performs various displays, and includes, for example, a display device provided in a housing of a computer device, a separate display device connected to the computer device, or the like.

The display unit 77 displays images for various kinds of image processing, moving images to be processed, and the like on a display screen on the basis of an instruction from the CPU 71. In addition, the display unit 77 displays various operation menus, icons, messages, and the like, that is, performs a display as a graphical user interface (GUI) on the basis of an instruction from the CPU 71.

In some cases, the storage unit 79 including a hard disk, a solid-state memory, or the like, and a communication unit 80 including a modem or the like are connected to the input/output interface 75.

The communication unit 80 performs communication processing via a transmission path such as the Internet, wired/wireless communication with various devices, communication by bus communication, and the like.

Furthermore, a drive 81 is connected to the input/output interface 75 as necessary, and a removable storage medium 82 such as a magnetic disk, an optical disk, a magneto-optical disk, or a semiconductor memory is appropriately mounted.

The drive 81 can read a data file such as a program used for each kind of processing from the removable storage medium 82. The read data file is stored in the storage unit 79, and an image and a sound included in the data file are output by the display unit 77 and the sound output unit 78. Furthermore, a computer program and the like read from the removable storage medium 82 are installed in the storage unit 79 as necessary.

In this computer device, for example, software for the processing of the present embodiment can be installed via network communication by the communication unit 80 or the removable storage medium 82. Alternatively, the software may be stored in advance in the ROM 72, the storage unit 79, or the like.

Furthermore, the captured image captured by the camera 3 or the processing result by the AI image processing may be received and stored in the storage unit 79, or in the removable storage medium 82 via the drive 81.

When the CPU 71 performs processing operations on the basis of various programs, information processing and communication processing necessary for the cloud server 1 that is the above-described information processing device including the arithmetic processing unit are executed.

Note that the cloud server 1 may include a single computer device as illustrated in FIG. 34, or may be configured by being systematized by a plurality of computer devices. The plurality of computer devices may be systematized by a local area network (LAN) or the like, or may be arranged in a remote place by a virtual private network (VPN) or the like using the Internet or the like. The plurality of computer devices may include computer devices as a server group (cloud) that can be used by a cloud computing service.

<6.2. Update processing>

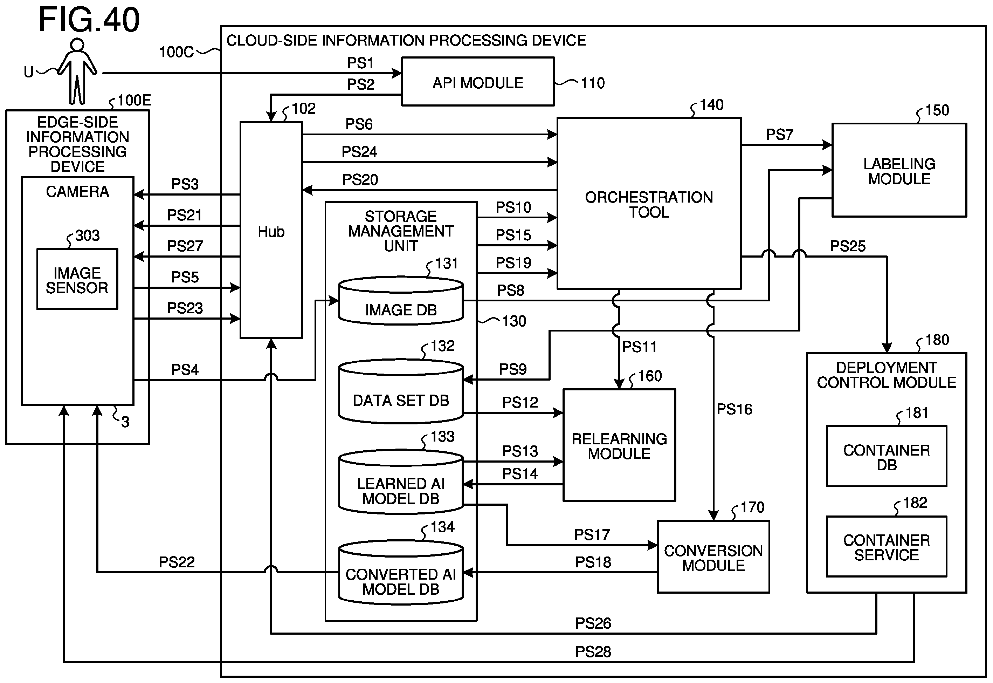

After the SW component and the AI model of the AI application are developed, relearning of the AI model and updating of the AI model deployed in each camera 3 or the like (hereinafter, referred to as an "edge-side AI model")/AI application are performed with operation by a service provider or user (user) as a trigger. A flow of relearning and update processing will be specifically described with reference to FIG. 40.

FIG. 40 is a view for describing an example of a flow of the relearning processing/update processing according to the embodiment of the present disclosure. Note that FIG. 40 focuses on one camera 3 among the plurality of cameras 3. Furthermore, although the edge-side AI model to be updated in the following description is deployed in the image sensor 303 included in the camera 3 as an example, the edge-side AI model may be certainly deployed outside the image sensor 303 in the camera 3.

First, in a processing step PS1, the service provider (or user) U instructs to relearn the AI model. This instruction is performed by utilization of an application programming interface (API) function of an API module 110 included in the cloud-side information processing device 100. Furthermore, in the instruction, an image amount (such as the number of pieces) used for learning is designated. Hereinafter, the image amount used for learning is also referred to as "predetermined number of pieces".

In response to the instruction, the API module 110 transmits a relearning request and image amount information to a Hub 120 (similar to the Hub 101C of 33) in a processing step PS2.

In a processing step PS3, the Hub 120 transmits update notification and the image amount information to the camera 3 as the edge-side information processing device 100E.

The camera 3 transmits captured image data acquired by performing photographing to an image database (DB) 131 of a storage management unit 130 in a processing step PS4. The photographing processing and the transmission processing are performed until a predetermined number of pieces necessary for relearning is achieved.

Note that in a case where the camera 3 acquires an inference result by performing the inference processing on the captured image data, the inference result may be stored in the image DB 131 as metadata of the captured image data in a processing step PS4.

Since the inference result in the camera 3 is stored in the image DB 131 as the metadata, the cloud-side information processing device 100C can carefully select data necessary for relearning of the AI model to be executed. Specifically, the cloud-side information processing device 100C can perform relearning by using image data in which the inference result by the camera 3 and a result of inference executed by the cloud-side information processing device 100C by utilization of abundant computer resources are different from each other. As a result, the cloud-side information processing device 100C can reduce time required for relearning.

After finishing photographing and transmission of the predetermined number of pieces, the camera 3 notifies the Hub 120 that the transmission of the predetermined number of pieces of captured image data has been completed in a processing step PS5.

When receiving the notification, the Hub 120 notifies the orchestration tool 140 that preparation of the data for relearning is completed in a processing step PS6.

In a processing step PS7, the orchestration tool 140 transmits an execution instruction of labeling processing to a labeling module 150.

In a processing step PS8, the labeling module 150 acquires image data to be a target of the labeling processing from the image DB 131, and performs the labeling processing.

The labeling processing here may be processing of performing the class identification described above, or may be processing of estimating sex and age of a subject of the image and giving a label. Alternatively, the labeling processing may be processing of estimating a pose of the subject and giving a label, or may be processing of estimating an action of the subject and giving a label.

The labeling processing may be performed manually or automatically. Furthermore, the labeling processing may be completed by the cloud-side information processing device 100C, or may be realized by utilization of a service provided by another server device (not illustrated).

The labeling module 150 that completes the labeling processing stores result information of the labeling in a data set DB 132 in a processing step PS9. Here, the information stored in the data set DB 132 may be a set of label information and image data, or may be image identification (ID) information for specifying image data instead of the image data itself. The data set DB 132 corresponds to, for example, the above-described data set DB 12_3 (see FIG. 6).

The storage management unit 130 in FIG. 40 which unit detects that the result information of the labeling is stored gives notification to the orchestration tool 140 in a processing step PS10.

When receiving the notification, the orchestration tool 140 confirms that the labeling processing for the predetermined number of pieces of image data is completed, and transmits a relearning instruction to a relearning module 160 in a processing step PS11.

The relearning module 160 that receives the relearning instruction acquires the data set used for learning from the data set DB 132 in a processing step PS12, and acquires an AI model to be updated from a learned AI model DB 133 in a processing step PS13. The learned AI model DB 133 corresponds to, for example, the above-described pre-compression model DB 12_1 (see FIG. 6).

The relearning module 160 in FIG. 40 relearns the AI model by using the acquired data set and AI model. The updated AI model acquired in such a manner is stored again in the learned AI model DB 133 in a processing step PS14.

The storage management unit 130 that detects that the updated AI model is stored gives notification to the orchestration tool 140 in a processing step PS15.

The orchestration tool 140 that receives the notification transmits a conversion instruction of the AI model to a conversion module 170 in a processing step PS16.

The conversion module 170 that receives the conversion instruction acquires the updated AI model from the learned AI model DB 133 in a processing step PS17, and performs conversion processing of the AI model.

In the conversion processing, processing of performing conversion in accordance with specification information or the like of the camera 3 that is a device of the deployment destination is performed. In this processing, downsizing is performed in such a manner as not to degrade the performance of the AI model as much as possible, and file format conversion or the like is performed in such a manner that operation can be performed on the camera 3. This conversion processing corresponds to the above-described weight reduction processing. Furthermore, the conversion processing may include the above-described equivalence evaluation processing. That is, this conversion processing may correspond to the model generation processing described with reference to FIG. 28 and the like.

In other words, the conversion module 170 has a function of each unit of the control unit 13 illustrated in FIG. 6, and performs downsizing in consideration of the equivalence with the updated AI model and generates the converted AI model.

The converted AI model on which the conversion processing is performed by the conversion module 170 in FIG. 40 is the above-described edge-side AI model. This converted AI model is stored in a converted AI model DB 134 in a processing step PS18.

At this time, for example, the conversion module 170 (or the orchestration tool 140) may store a converted AI model that satisfies a predetermined equivalence evaluation, such as a converted AI model having equivalence equal to or greater than a predetermined threshold into the converted AI model DB 134. That is, the cloud-side information processing device 100C may request the predetermined equivalence evaluation to be satisfied as a condition of the edge-side AI model deployed in the edge-side information processing device 100E.

The storage management unit 130 that detects that the converted AI model is stored in the converted AI model DB 134 gives notification to the orchestration tool 140 in a processing step PS19.

The orchestration tool 140 that receives the notification transmits notification for executing an update of the AI model to the Hub 120 in a processing step PS20. This notification includes information for specifying a location where the AI model used for the update is stored.

The Hub 120 that receives the notification transmits an update instruction of the AI model to the camera 3 in a processing step PS21. The update instruction also includes information for specifying a location where the AI model is stored.

In a processing step PS22, the camera 3 performs processing of acquiring the target converted AI model from the converted AI model DB 134 and performing deployment. As a result, the AI model used in the image sensor 303 of the camera 3 is updated.

The camera 3 that has completed the update of the AI model by deploying the AI model transmits update completion notification to the Hub 120 in a processing step PS23.

The Hub 120 that receives the notification notifies the orchestration tool 140 that AI model update processing of the camera 3 is completed in a processing step PS24.

Note that although an example in which the AI model is deployed and used in the image sensor 303 (such as the memory unit 45 illustrated in FIG. 35) of the camera 3 has been described here, the AI model may be deployed outside the image sensor 303. For example, even in a case where the AI model is deployed and used outside the image sensor (such as the memory unit 34 in FIG. 35) in the camera 3 or inside the FOG server 4 (the storage unit 79 in FIG. 39), the AI model can be similarly updated.

In this case, the storage management unit 130 or the like of the cloud-side information processing device 100C stores the device (location) in which the AI model is deployed when the AI model is deployed. The Hub 120 reads the device (location) in which the AI model is deployed from the storage management unit 130, and transmits the update instruction of the AI model to the device in which the AI model is deployed.

Specifically, the device that receives the update instruction performs processing of acquiring the target converted AI model from the converted AI model DB 134 and performing deployment in a processing step PS22. As a result, the AI model of the device that receives the update instruction is updated.

Note that in a case where the information processing system 100 updates the AI model, the processing is completed here.

In a case where the information processing system 100 updates the AI application using the AI model in addition to the AI model, processing described later is further executed.

As illustrated in FIG. 40, specifically, the orchestration tool 140 transmits a download instruction of an updated AI application such as firmware to a deployment control module 180 in a processing step PS25.

In a processing step PS26, the deployment control module 180 transmits a deployment instruction of the AI application to the Hub 120. This instruction includes information for specifying a location where the updated AI application is stored.

In a processing step PS27, the Hub 120 transmits the deployment instruction to the camera 3.

In a processing step PS28, the camera 3 downloads the updated AI application from a container DB 181 of the deployment control module 180 and performs deployment.

Note that in the above description, an example in which the update of the AI model operating on the image sensor 303 of the camera 3 and the update of the AI application operating outside the image sensor 303 in the camera 3 are sequentially performed has been described.

Furthermore, although the AI application has been described here for simplicity of description, the AI application is defined by a plurality of SW components such as SW components B1, B2, B3,..., and Bn as described above.

Thus, when the AI application is deployed, the storage management unit 130 or the like of the cloud-side information processing device 100C stores where each of the SW components is deployed.

When processing the processing step PS27, the Hub 120 can read the device (location) of deployment of each of the SW components from the storage management unit 130 and transmit a deployment instruction to the device of deployment.

In a processing step PS28, the device that receives the deployment instruction downloads the updated SW component from the container DB of the deployment control module and performs deployment.

Note that the AI application mentioned here is the SW components other than the AI model.

Furthermore, in a case where both the AI model and the AI application operate in one device, the information processing system 100 may collectively update both the AI model and the AI application as one container. In that case, the update of the AI model and the update of the AI application may be performed simultaneously instead of sequentially. This can be realized by execution of the processing of the processing steps PS25, PS26, PS27, and PS28.

For example, it is assumed that the containers of both the AI model and the AI application can be deployed in the image sensor 303 of the camera 3. In this case, the information processing system 100 can update the AI model and the AI application by executing the processing of the processing steps PS25, PS26, PS27, and PS28 as described above.

By performing the above-described processing, relearning of the AI model is performed by utilization of the captured image data captured in the use environment of the user. Thus, the information processing system 100 can generate the edge-side AI model that can output a highly accurate recognition result in the use environment of the user.

Furthermore, even in a case where the use environment of the user changes, for example, in a case where a layout in the store is changed or in a case where an installation location of the camera 3 is changed, the information processing system 100 can appropriately relearn the AI model each time. Thus, the information processing system 100 can maintain the service without deteriorating the recognition accuracy of the AI model.

Note that each piece of processing described above may be executed not only when the AI model is relearned but also when the system is operated for the first time under the use environment of the user.

<6.3. Screen example of marketplace>

An example of a screen presented to the user with respect to the marketplace will be described with reference to the drawings.

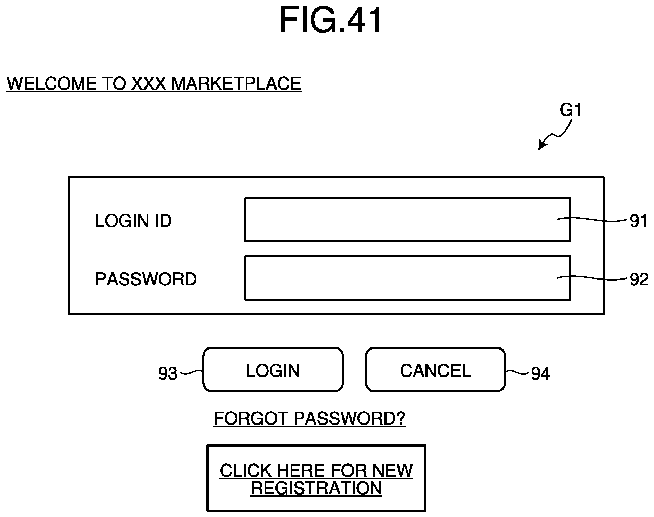

FIG. 41 is a view illustrating an example of a login screen G1 of the marketplace according to the embodiment of the present disclosure. The login screen G1 is presented to the user when the user uses various functions of the marketplace.

The login screen G1 is provided with an ID input field 91 to which a user ID is input, and a password input field 92 to which a password is input.

Below the password input field 92, a login button 93 to perform login, and a cancel button 94 to cancel the login are arranged.

Furthermore, an operator for a transition to a page for a user who forgets a password, an operator for a transition to a page for new user registration, and the like are appropriately arranged below the page.

When the user presses the login button 93 after inputting an appropriate user ID and password, processing of transitioning to a user-specific page is executed in each of the cloud server 1 and the user terminal 2 (see FIG. 29).

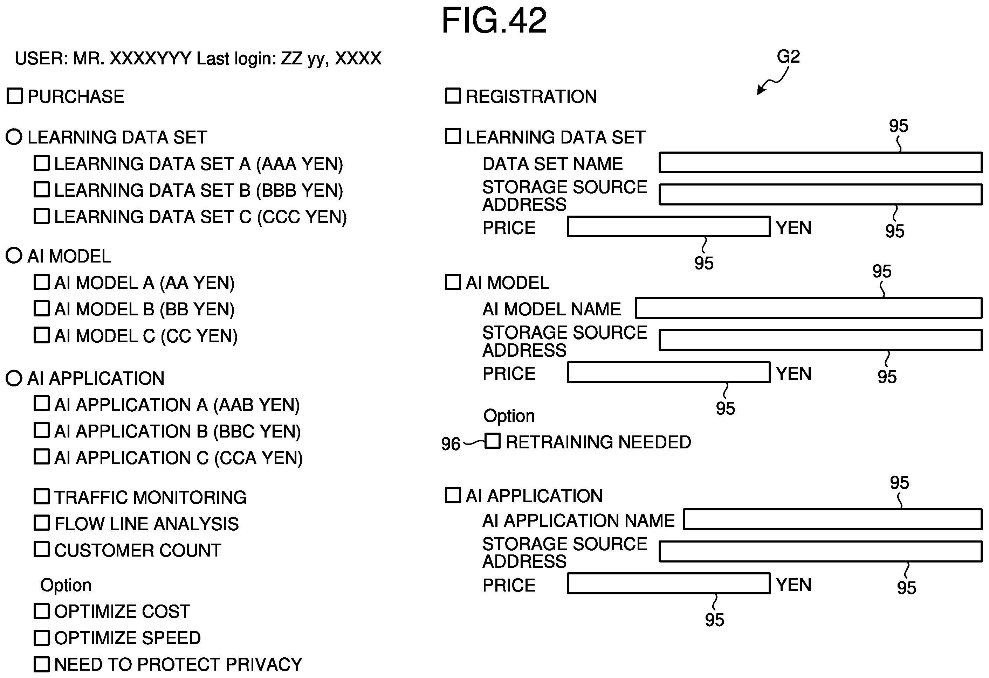

FIG. 42 is a view illustrating an example of a marketplace developer screen G2 according to the embodiment of the present disclosure. The developer screen G2 is presented to, for example, the AI application developer who uses the application developer terminal 2A or the AI model developer who uses the AI model developer terminal 2C.

Each developer can purchase a learning data set, an AI model, and an AI application through the marketplace for development. In addition, each developer can register an AI application or an AI model developed by himself/herself in the marketplace.

On the developer screen G2 illustrated in FIG. 42, a purchasable learning data set, AI model, AI application, and the like (hereinafter, collectively referred to as "data") are displayed on a left side.

Note that although not illustrated, at the time of purchase of the learning data set, an image of the learning data set is displayed on a display. When only a desired portion of the image is surrounded by a frame by utilization of an input device such as a mouse and a name is input, learning can be prepared.

For example, in a case where it is desired to perform AI learning with an image of a cat, by surrounding only a portion of the cat on the image with a frame and inputting "cat" as a text input, it is possible to prepare an image, to which a cat annotation is added, for the AI learning.

Furthermore, in order to easily find desired data, purposes such as "traffic monitoring", a "flow line analysis", and a "customer count" may be selectable. That is, display processing of displaying data suitable for the selected purpose is executed in each of the cloud server 1 and the user terminal 2 (see FIG. 29).

Note that a purchase price of each piece of data may be displayed on the developer screen G2.

Furthermore, on a right side of the developer screen G2, input fields 95 to register a learning data set collected or created by the developer, and an AI model and an AI application developed by the developer are provided.

Furthermore, on the right side of the developer screen G2, input fields 95 to input a name and a data storage location are provided for each piece of data. In addition, a check box 96 to set necessity/unnecessity of retraining is provided for the AI model.

Note that on the right side of the developer screen G2, a price setting field (described as an input field 95 in the drawing) in which a price necessary for purchasing data to be registered can be set, and the like may be provided.

Furthermore, in an upper portion of the developer screen G2, a user name, a final login date, and the like are displayed as part of the user information. Note that in addition to the above, an amount of currency and the number of points that can be used when the user purchases the data, and the like may be displayed.

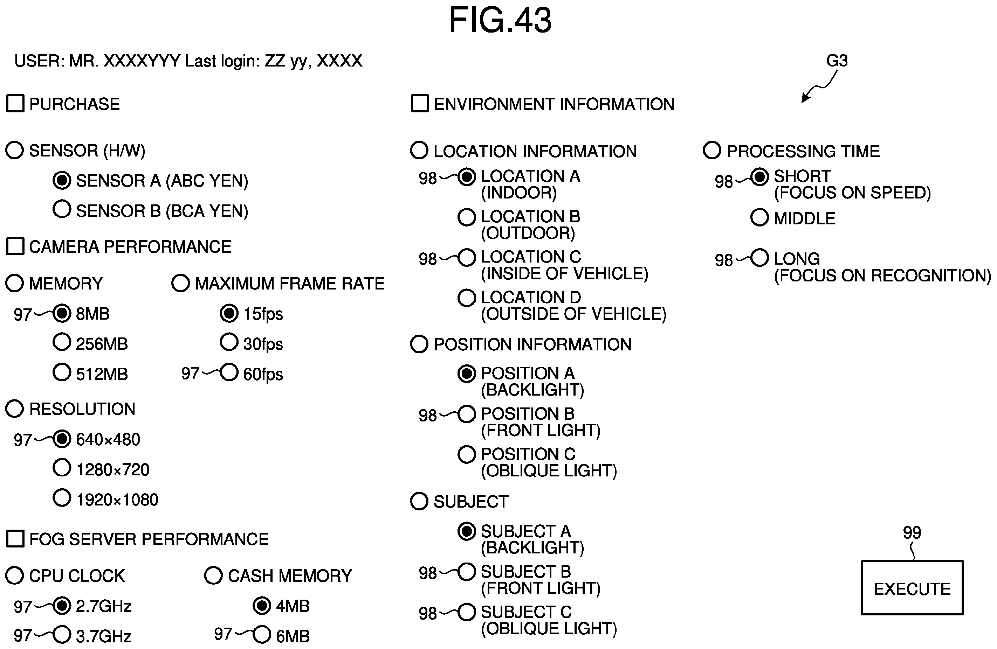

FIG. 43 is a view illustrating an example of a marketplace user screen G3 according to the embodiment of the present disclosure. For example, the user screen G3 is presented to a user who performs various kinds of analysis and the like by deploying the AI application and the AI model in the camera 3 as the edge-side information processing device 100E managed by himself/herself (the above-described application utilization user).

For example, via the marketplace, the user can purchase the camera 3 arranged in a space to be monitored. Thus, on a left side of the user screen G3, a radio button 97 in which a type and performance of the image sensor 303 mounted on the camera 3, performance of the camera 3, or the like can be selected is arranged.

Furthermore, the user can purchase the information processing device as the FOG server 4 via the marketplace. Thus, a radio button 97 to select performance of the FOG server 4 is arranged on the left side of the user screen G3.

In addition, the user who already has the FOG server 4 can register the performance of the FOG server 4 by inputting performance information of the FOG server 4 here.

The user realizes a desired function by installing the camera 3 purchased in an arbitrary place such as a store managed by himself/herself (alternatively, the camera 3 purchased not through the marketplace may be used). In the marketplace, the user can register information of the installation location of each camera 3 in order to maximize the function of the camera 3.

On a right side of the user screen G3, a radio button 98 in which environment information with respect to an installation environment of the camera 3 can be selected is arranged. When the user appropriately selects the environment information with respect to the installation environment of the camera 3, the above-described optimal imaging setting is set for the target camera 3.

Note that in a case where the camera 3 is purchased and an installation location of the camera 3 to be purchased is determined, the user can purchase the camera 3, in which optimal imaging setting corresponding to the installation scheduled location is set in advance, by selecting each item on the left side and each item on the right side of the user screen G3.

An execution button 99 is provided on the user screen G3. When the user presses the execution button 99, the screen transitions from the user screen G3 to a confirmation screen for confirming the purchase or a confirmation screen for confirming setting of the environment information. As a result, the user can purchase a desired camera 3 or FOG server 4, and set environmental information of the camera 3.

In the marketplace, for the time when the installation location of the camera 3 is changed, the user can change the environment information of each registered camera 3. The user can reset the optimal imaging setting for the camera 3 by re-inputting the environment information with respect to the installation location of the camera 3 on a change screen (not illustrated).

<<7. Other embodiments>>

The processing according to the above-described embodiment (or modification example) may be performed in various different forms (modification examples) other than the above-described embodiment. For example, among the pieces of processing described in the above embodiment, a whole or part of the processing described to be automatically performed can be manually performed, or a whole or part of the processing described to be manually performed can be automatically performed by a known method. In addition, the processing procedures, specific names, and information including various kinds of data or parameters described in the above document or in the drawings can be arbitrarily changed unless otherwise specified. For example, various kinds of information illustrated in each of the drawings are not limited to the illustrated information.

In addition, each component of each of the illustrated devices is a functional concept, and does not need to be physically configured in the illustrated manner. That is, a specific form of distribution/integration of each device is not limited to what is illustrated in the drawings, and a whole or part thereof can be functionally or physically distributed/integrated in an arbitrary unit according to various loads and usage conditions.

<<8. Conclusion>>

Although an embodiment of the present disclosure has been described above, the technical scope of the present disclosure is not limited to the above-described embodiment as it is, and various modifications can be made within the spirit and scope of the present disclosure. In addition, components of different embodiments and modification examples may be arbitrarily combined.

Also, an effect in each of the embodiments described in the present specification is merely an example and is not a limitation, and there may be a different effect.

Note that the present technology can also have the following configurations.

(1) An information processing device comprising:

a control unit that evaluates equivalence between a first learning model before weight reduction by a weight reduction method and a second learning model after the weight reduction by the weight reduction method, and that determines the second learning model on a basis of a result of the evaluation.

(2) The information processing device according to (1), wherein the control unit evaluates the equivalence by using an eXplainable AI (XAI) technology.

(3) The information processing device according to (1) or (2), wherein the control unit determines the second learning model on a basis of an evaluation value acquired by evaluation of the equivalence.

(4) The information processing device according to any one of (1) to (3), wherein the control unit evaluates the equivalence by using a feature amount used in processing using the first learning model and the second learning model.

(5) The information processing device according to any one of (1) to (4), wherein the control unit evaluates the equivalence according to a first degree of influence given by data in a data set to learning of the first learning model and a second degree of influence given by the data in the data set to learning of the second learning model.

(6) The information processing device according to any one of (1) to (5), wherein

the control unit evaluates the equivalence between the first learning model and each of a first candidate learning model and a second candidate learning model having different parameters of the weight reduction method, and determines the second learning model from the first candidate learning model and the second candidate learning model on a basis of a result of the evaluation.

(7) The information processing device according to any one of (1) to (6), wherein

the control unit evaluates the equivalence between the first learning model and each of a first candidate learning model reduced in weight by a first weight reduction method and a second candidate learning model reduced in weight by a second weight reduction method, and
determines the second learning model from the first candidate learning model and the second candidate learning model on a basis of a result of the evaluation.

(8) The information processing device according to any one of (1) to (7), wherein

the control unit
acquires a first evaluation result acquired by evaluation of the equivalence between a first pre-weight reduction model and a first candidate learning model acquired by weight reduction of the first pre-weight reduction model by a weight reduction method, and
a second evaluation result acquired by evaluation of the equivalence between a second pre-weight reduction model and a second candidate learning model acquired by weight reduction of the second pre-weight reduction model by a weight reduction method, and
determines the second learning model from the first candidate learning model and the second candidate learning model on a basis of the first evaluation result and the second evaluation result.

(9) The information processing device according to any one of (1) to (5), wherein the control unit adjusts a parameter of the weight reduction method on a basis of the evaluation result of the equivalence, and determines the second learning model.
(10) The information processing device according to any one of (1) to (5), wherein the control unit uses the evaluation of the equivalence as a parameter of an evaluation function of the weight reduction method.
(11) The information processing device according to any one of (1) to (10), wherein the control unit presents the evaluation result of the equivalence to a user.
(12) The information processing device according to any one of (1) to (11), wherein the control unit receives at least one of selling on a marketplace and deployment on another device with respect to the second learning model in which the evaluation of the equivalence is equal to or greater than a predetermined value.
(13) An information processing method comprising:

evaluating equivalence between a first learning model before weight reduction by a weight reduction method and a second learning model after the weight reduction by the weight reduction method; and
determining the second learning model on a basis of a result of the evaluation.

(14) A non-transitory computer-readable storage medium storing a program for causing a computer to realize:

evaluating equivalence between a first learning model before weight reduction by a weight reduction method and a second learning model after the weight reduction by the weight reduction method; and
determining the second learning model on a basis of a result of the evaluation.

(15) A terminal device comprising:

a control unit that executes processing using a second learning model, wherein
the second learning model is
a learning model determined on a basis of a result of evaluation of equivalence between a first learning model before weight reduction by a weight reduction method and the second learning model after the weight reduction by the weight reduction method.

Reference Signs List

10 INFORMATION PROCESSING DEVICE
11 COMMUNICATION UNIT
12 STORAGE UNIT
12_1 PRE-COMPRESSION MODEL DB
12_2 POST-COMPRESSION MODEL DB
12_3 DATA SET DB
13 CONTROL UNIT
13_1 COMPRESSION PROCESSING UNIT
13_2 XAI PROCESSING UNIT
13_3 EVALUATION PROCESSING UNIT
13_4 MODEL DETERMINATION UNIT
13_5 OUTPUT DETERMINATION UNIT
13_6 INPUT/OUTPUT CONTROL UNIT
14 INPUT/OUTPUT UNIT

**Claims**

1.  An information processing device comprising:

    a control unit that evaluates equivalence between a first learning model before weight reduction by a weight reduction method and a second learning model after the weight reduction by the weight reduction method, and that determines the second learning model on a basis of a result of the evaluation.

2.  The information processing device according to claim 1, wherein the control unit evaluates the equivalence by using an eXplainable AI (XAI) technology.

3.  The information processing device according to claim 1, wherein the control unit determines the second learning model on a basis of an evaluation value acquired by evaluation of the equivalence.

4.  The information processing device according to claim 1, wherein the control unit evaluates the equivalence by using a feature amount used in processing using the first learning model and the second learning model.

5.  The information processing device according to claim 1, wherein the control unit evaluates the equivalence according to a first degree of influence given by data in a data set to learning of the first learning model and a second degree of influence given by the data in the data set to learning of the second learning model.

6.  The information processing device according to claim 1, wherein

    the control unit evaluates the equivalence between the first learning model and each of a first candidate learning model and a second candidate learning model having different parameters of the weight reduction method, and determines the second learning model from the first candidate learning model and the second candidate learning model on a basis of a result of the evaluation.

7.  The information processing device according to claim 1, wherein

    the control unit evaluates the equivalence between the first learning model and each of a first candidate learning model reduced in weight by a first weight reduction method and a second candidate learning model reduced in weight by a second weight reduction method, and
    determines the second learning model from the first candidate learning model and the second candidate learning model on a basis of a result of the evaluation.

8.  The information processing device according to claim 1, wherein

the control unit

acquires a first evaluation result acquired by evaluation of the equivalence between a first pre-weight reduction model and a first candidate learning model acquired by weight reduction of the first pre-weight reduction model by a weight reduction method, and

a second evaluation result acquired by evaluation of the equivalence between a second pre-weight reduction model and a second candidate learning model acquired by weight reduction of the second pre-weight reduction model by a weight reduction method, and

determines the second learning model from the first candidate learning model and the second candidate learning model on a basis of the first evaluation result and the second evaluation result.

9. The information processing device according to claim 1, wherein the control unit adjusts a parameter of the weight reduction method on a basis of the evaluation result of the equivalence, and determines the second learning model.

10. The information processing device according to claim 1, wherein the control unit uses the evaluation of the equivalence as a parameter of an evaluation function of the weight reduction method.

11. The information processing device according to claim 1, wherein the control unit presents the evaluation result of the equivalence to a user.

12. The information processing device according to claim 1, wherein the control unit receives at least one of selling on a marketplace and deployment on another device with respect to the second learning model in which the evaluation of the equivalence is equal to or greater than a predetermined value.

13. An information processing method comprising:

evaluating equivalence between a first learning model before weight reduction by a weight reduction method and a second learning model after the weight reduction by the weight reduction method; and

determining the second learning model on a basis of a result of the evaluation.

14. A non-transitory computer-readable storage medium storing a program for causing a computer to realize:

evaluating equivalence between a first learning model before weight reduction by a weight reduction method and a second learning model after the weight reduction by the weight reduction method; and

determining the second learning model on a basis of a result of the evaluation.

15. A terminal device comprising:

a control unit that executes processing using a second learning model, wherein

the second learning model is

a learning model determined on a basis of a result of evaluation of equivalence between a first learning model before weight reduction by a weight reduction method and the second learning model after the weight reduction by the weight reduction method.

# FIG.1

$M0_1$

S1
REDUCE
WEIGHT OF
MODEL

$M1_1$

S2
EVALUATE
EQUIVALENCE

S3
DETERMINE
POST-COMPRESSION MODEL

$M1_1$

# FIG.2

$M0_2$  COMPRES-
SION
PROCESS-
ING

$M1_2$  DEPLOYMENT

RECOGNITION
ACCURACY 90%

RECOGNITION
ACCURACY 85%

CLASS 1: RECOGNITION
ACCURACY 90%

RECOGNITION
ACCURACY 85%

CLASS 2: RECOGNITION
ACCURACY 100%

RECOGNITION
ACCURACY 75%

CLASS 3: RECOGNITION
ACCURACY 80%

RECOGNITION
ACCURACY 95%

# FIG.3

M0$_2$

EAR

N0$_1$

DOG: 99%

N0$_2$

MOUTH

# FIG.4

M1$_2$

NOSE

N1$_1$

DOG: 99%

N1$_2$

PAW

# FIG.5

Input Image

M0₃

XAI PROC-ESSING

M1₃

XAI PROC-ESSING

# FIG.6

INFORMATION PROCESSING DEVICE

$\varsigma$10

CONTROL UNIT $\varsigma$13

STORAGE UNIT $\varsigma$12

COMMUNICATION UNIT $\varsigma$11

INPUT/OUTPUT UNIT $\varsigma$14

COMPRESSION PROCESSING UNIT $\varsigma$13_1

XAI PROCESSING UNIT $\varsigma$13_2

EVALUATION PROCESSING UNIT $\varsigma$13_3

MODEL DETERMINATION UNIT $\varsigma$13_4

OUTPUT DETERMINATION UNIT $\varsigma$13_5

INPUT/OUTPUT CONTROL UNIT $\varsigma$13_6

PRE-COMPRESSION MODEL DB $\varsigma$12_1

POST-COMPRESSION MODEL DB $\varsigma$12_2

DATA SET DB $\varsigma$12_3

# FIG.7

# FIG.8

EBPG=80%

EBPG=70%

# FIG.9

$HM0_1$

$HM1_1$

$BM0_1$

$BM1_1$

IoU=70%

# FIG.10

# FIG.11

IoU=70%

# FIG.12

# FIG.13

SIMILARITY

# FIG.14

# FIG.15

SC0

| |
|---|
| $n0_4$: object(train) |
| $n0_5$: color(orange) |
| $n0_6$: texture(line) |
| $n0_7$: part(screen) |

SC1

| |
|---|
| $n1_4$: object(train) |
| $n1_5$: color(red) |
| $n1_6$: texture(line) |
| $n1_7$: part(screen) |

# FIG.16

$M0_3$

RECOGNITION ACCURACY 90%

FIRST WEIGHT REDUCTION PROCESSING

RECOGNITION ACCURACY 80%

$M13_1$

EQUIVALENCE EVALUATION

EQUIVA-LENCE 90%

SECOND WEIGHT REDUCTION PROCESSING

RECOGNITION ACCURACY 82%

$M13_2$

EQUIVALENCE EVALUATION

EQUIVA-LENCE 70%

# FIG.17

WEIGHT REDUCTION
PROCESSING BY FIRST
WEIGHT REDUCTION METHOD

M14₁

RECOGNITION
ACCURACY 80%

EQUIVALENCE EVALUATION

EQUIVA-
LENCE
90%

M0₄

RECOGNITION
ACCURACY 90%

WEIGHT REDUCTION
PROCESSING BY SECOND
WEIGHT REDUCTION METHOD

M14₂

RECOGNITION
ACCURACY 82%

EQUIVALENCE EVALUATION

EQUIVA-
LENCE
70%

# FIG.18

$M0_{51}$

FIRST WEIGHT REDUCTION PROCESSING

$M1_{51}$

EQUIVALENCE EVALUATION

EQUIVA-LENCE 90%

RECOGNITION ACCURACY 80%

RECOGNITION ACCURACY 75%

$M0_{52}$

SECOND WEIGHT REDUCTION PROCESSING

$M1_{52}$

EQUIVALENCE EVALUATION

EQUIVA-LENCE 70%

RECOGNITION ACCURACY 90%

RECOGNITION ACCURACY 80%

# FIG.19

START

S101
SET WEIGHT REDUCTION
PARAMETER TO INITIAL VALUE

S102
EXECUTE WEIGHT REDUCTION
PROCESSING

S103
EXECUTE XAI PROCESSING

S104
EVALUATE EQUIVALENCE

S105
EQUIVALENCE >
THRESHOLD?

NO

S106
CHANGE WEIGHT
REDUCTION PARAMETER

YES  S107
DETERMINE POST-COMPRESSION
MODEL

END

# FIG.20

ADJUST WEIGHT
REDUCTION
PARAMETER OF $L0_2$

ADJUST WEIGHT
REDUCTION
PARAMETER OF $L0_3$

# FIG.21

INFERENCE RESULT
(soft target)

M0$_8$

LABEL SCORE

DOG        0.8

VEHICLE    0.4

TREE       0.0

HM0$_8$

IM8

CORRECT DATA
(hard target)

LABEL SCORE

DOG        1.0

VEHICLE    0.0

TREE       0.0

M1$_8$

INFERENCE RESULT
(soft target)

LABEL SCORE

DOG        0.7

VEHICLE    0.2

TREE       0.0

HM1$_8$

EP 4 586 154 A1

# FIG.22

STRUCTURE SEARCH

$M1_9$

$HM1_9$

EVALUATION

HM2

M2

# FIG.23

STRUCTURE SEARCH

$M1_9$

EVALUATION

$HM1_9$

# FIG.24

HM1₁₀

HM2

# FIG.25

M1

XAI
PROCESSING

# FIG.26

BEFORE WEIGHT REDUCTION  M0

AFTER WEIGHT REDUCTION  M1

Pruning

EVALUATE EQUIVALENCE

EQUIVA-LENCE 70%

INPUT IMAGE

RECOGNITION ACCURACY 90%

CHANGE WEIGHT REDUCTION METHOD

A2

RECOGNITION ACCURACY 80%

CHANGE METHOD OF EQUIVALENCE EVALUATION

A3

CHANGE INPUT IMAGE

A1

INFERENCE RESULT: CORRECT

INFERENCE RESULT: INCORRECT

EQUIVA-LENCE 70%

EP 4 586 154 A1

# FIG.27

EQUIVALENCE

COMPRESSION RATIO

# FIG.28

```
          START
            │
            ▼           ⌐S201
  ACQUIRE PRE-COMPRESSION MODEL
            │
            ▼           ⌐S202
  ACQUIRE POST-COMPRESSION MODEL
            │
            ▼           ⌐S203
     EXECUTE XAI PROCESSING
            │
            ▼           ⌐S204
     EVALUATE EQUIVALENCE
            │
            ▼           ⌐S205
     DETERMINE FINAL MODEL
            │
            ▼
           END
```

# FIG.29

100
(INFORMATION PROCESSING SYSTEM)

# FIG.30

CLOUD-SIDE INFORMATION PROCESSING DEVICE ~100C

CLOUD SERVER ~1

MANAGEMENT SERVER ~5

AI MODEL DEVELOPER TERMINAL ~2C

EDGE-SIDE INFORMATION PROCESSING DEVICE ~100E

~3

~3

~3

...

APPLICATION DEVELOPER TERMINAL ~2A

APPLICATION USER TERMINAL ~2B

# FIG.31

CLOUD-SIDE INFORMATION
PROCESSING DEVICE 100C

AI MODEL DEVELOPER
TERMINAL 2C

S210

DATA SET DOWNLOAD
REQUEST

S10

RECEIVE REQUEST

S20

TRANSMIT DATA SET

S220

RECEIVE DATA SET

S230

AI MODEL REGISTRATION
REQUEST

S30

RECEIVE REQUEST

S40

REGISTER AI MODEL

APPLICATION DEVELOPER
TERMINAL 2A

S310

AI MODEL DOWNLOAD
REQUEST

S50

RECEIVE REQUEST

S60

TRANSMIT AI MODEL

S320

RECEIVE AI MODEL

S330

APPLICATION
REGISTRATION REQUEST

S70

RECEIVE REQUEST

S80

REGISTER APPLICATION

# FIG.32

CAMERA 3 | CLOUD-SIDE INFORMATION PROCESSING DEVICE 100C | APPLICATION USER TERMINAL 2B

S410
SELECT PURPOSE

S90
SELECT AI APPLICATION

S100
DEPLOYMENT PREPARATION PROCESSING

S110
DEPLOY AI APPLICATION AND AI MODEL

S510
DEPLOYMENT PROCESSING

S520
ACQUIRE IMAGE

S530
AI IMAGE PROCESSING

S540
TRANSMIT INFORMATION

S120
ANALYSIS PROCESSING

S130
PRESENT ANALYSIS RESULT

S420
DISPLAY ANALYSIS RESULT

# FIG.33

100C

CLOUD-SIDE INFORMATION PROCESSING DEVICE

CLOUD APPLICATION

101C

Hub

102C
RELEARNING FUNCTION

103C
DEVICE MANAGEMENT FUNCTION

104C
MARKETPLACE FUNCTION

100E

EDGE-SIDE INFORMATION PROCESSING DEVICE

3

301
EDGE RUNTIME

302
AI APPLICATION/AI MODEL

303
IMAGE SENSOR

# FIG.34

100C

## CLOUD-SIDE INFORMATION PROCESSING DEVICE

F1

### LICENSE AUTHORIZATION FUNCTION

F2

### ACCOUNT SERVICE FUNCTION

F3

### DEVICE MONITORING FUNCTION

F4

### MARKETPLACE FUNCTION

F5

### CAMERA SERVICE FUNCTION

# FIG.35

303

| 31 IMAGING OPTICAL SYSTEM | 41 IMAGING UNIT | 42 IMAGE SIGNAL PROCESSING UNIT | 43 IN-SENSOR CONTROL UNIT |

47

| 32 OPTICAL SYSTEM DRIVING UNIT | 44 AI IMAGE PROCESSING UNIT | 45 MEMORY UNIT | 46 COMMUNICA-TION I/F |

36

| 33 CONTROL UNIT | 34 MEMORY UNIT | 35 COMMUNICA-TION UNIT |

# FIG.36

IMAGING UNIT ~ 41

IMAGE SIGNAL PROCESSING UNIT ~ 42

IN-SENSOR CONTROL UNIT ~ 43

AI IMAGE PROCESSING UNIT ~ 44

MEMORY UNIT ~ 45

COMMUNICATION I/F ~ 46

D1

D2

# FIG.37

CLUSTER ~ 56

55
CONTAINER

55
CONTAINER

...

54
CONTAINER ENGINE

53
ORCHESTRATION TOOL

52
GENERAL-PURPOSE MIDDLEWARE

51
OS

50
HARDWARE

# FIG.38

```
                                                    ⌐56
┌─────────────────────────────────────────────────────────┐
│                      CLUSTER                              │
│                                    ⌐58                    │
│  ┌──────────────────────────────────────────┐            │
│  │              MASTER NODE                  │            │
│  │        ⌐61                ⌐62             │            │
│  │  ┌─────────────┐   ┌─────────────┐        │            │
│  │  │ APPLICATION │   │   MANAGER   │        │            │
│  │  │   SERVER    │   │             │        │            │
│  │  └─────────────┘   └─────────────┘        │            │
│  │        ⌐63                ⌐64             │            │
│  │  ┌─────────────┐   ┌─────────────┐        │            │
│  │  │  SCHEDULER  │   │ DATA SHARING│        │            │
│  │  │             │   │    UNIT     │        │            │
│  │  └─────────────┘   └─────────────┘        │            │
│  └──────────────────────────────────────────┘            │
│                                ⌐57           ⌐57          │
│  ┌──────────────────────────────┐   ┌──────────────┐     │
│  │         WORKER NODE          │   │              │     │
│  │                    ⌐59       │   │              │     │
│  │  ┌─────────────────────────┐ │   │              │     │
│  │  │           POD           │ │   │              │     │
│  │  │    ⌐55        ⌐55       │ │   │              │     │
│  │  │ ┌─────────┐ ┌─────────┐ │ │   │              │     │
│  │  │ │CONTAINER│ │CONTAINER│…│ │   │              │     │
│  │  │ └─────────┘ └─────────┘ │ │   │   WORKER     │ …   │
│  │  └─────────────────────────┘ │   │    NODE      │     │
│  │                    ⌐59       │   │              │     │
│  │  ┌─────────────────────────┐ │   │              │     │
│  │  │           POD           │ │   │              │     │
│  │  │    ⌐55        ⌐55       │ │   │              │     │
│  │  │ ┌─────────┐ ┌─────────┐ │ │   │              │     │
│  │  │ │CONTAINER│ │CONTAINER│…│ │   │              │     │
│  │  │ └─────────┘ └─────────┘ │ │   │              │     │
│  │  └─────────────────────────┘ │   │              │     │
│  │                    ⌐60       │   │              │     │
│  │  ┌─────────────────────────┐ │   │              │     │
│  │  │ POD MANAGEMENT LIBRARY  │ │   │              │     │
│  │  └─────────────────────────┘ │   │              │     │
│  └──────────────────────────────┘   └──────────────┘     │
└─────────────────────────────────────────────────────────┘
                                            ⌐54
┌─────────────────────────────────────────────────────────┐
│                  CONTAINER ENGINE                        │
└─────────────────────────────────────────────────────────┘
                                            ⌐53
┌─────────────────────────────────────────────────────────┐
│                 ORCHESTRATION TOOL                       │
└─────────────────────────────────────────────────────────┘
```

# FIG.39

<u>1000</u>
(INFORMATION PROCESSING DEVICE)

| 71 | 72 | 73 | 74 |
|---|---|---|---|
| CPU | ROM | RAM | NONVOLATILE MEMORY UNIT |

83

COMMUNICATION I/F  75

INPUT UNIT  76

DISPLAY UNIT  77

SOUND OUTPUT UNIT  78

STORAGE UNIT  79

COMMUNICA-TION UNIT  80

DRIVE  81

REMOVABLE STORAGE MEDIUM  82

FIG.40

# FIG.41

WELCOME TO XXX MARKETPLACE

G1

| | |
|---|---|
| LOGIN ID | ⎯⎯ 91 |
| PASSWORD | ⎯⎯ 92 |

93 ⎯ LOGIN    CANCEL ⎯ 94

FORGOT PASSWORD?

CLICK HERE FOR NEW
REGISTRATION

## FIG.42

USER: MR. XXXXYYY Last login: ZZ yy, XXXX

☐ PURCHASE

○ LEARNING DATA SET
    ☐ LEARNING DATA SET A (AAA YEN)
    ☐ LEARNING DATA SET B (BBB YEN)
    ☐ LEARNING DATA SET C (CCC YEN)

○ AI MODEL
    ☐ AI MODEL A (AA YEN)
    ☐ AI MODEL B (BB YEN)
    ☐ AI MODEL C (CC YEN)

○ AI APPLICATION
    ☐ AI APPLICATION A (AAB YEN)
    ☐ AI APPLICATION B (BBC YEN)
    ☐ AI APPLICATION C (CCA YEN)

    ☐ TRAFFIC MONITORING
    ☐ FLOW LINE ANALYSIS
    ☐ CUSTOMER COUNT

  Option
☐ OPTIMIZE COST
☐ OPTIMIZE SPEED
☐ NEED TO PROTECT PRIVACY

G2

☐ REGISTRATION

☐ LEARNING DATA SET
    DATA SET NAME   95
    STORAGE SOURCE ADDRESS
    PRICE    YEN   95
    95

☐ AI MODEL
    AI MODEL NAME   95
    STORAGE SOURCE ADDRESS
    PRICE   YEN   95
    95

Option
96 ☐ RETRAINING NEEDED

☐ AI APPLICATION
    AI APPLICATION NAME   95
    STORAGE SOURCE ADDRESS
    PRICE   YEN   95
    95

# FIG.43

☐ PURCHASE

○ SENSOR (H/W)

    ◉ SENSOR A (ABC YEN)

    ○ SENSOR B (BCA YEN)

☐ CAMERA PERFORMANCE

○ MEMORY      ○ MAXIMUM FRAME RATE

97〜◉ 8MB      ◉ 15fps

   ○ 256MB     ○ 30fps

   ○ 512MB   97〜○ 60fps

○ RESOLUTION

97〜◉ 640×480

   ○ 1280×720

   ○ 1920×1080

☐ FOG SERVER PERFORMANCE

○ CPU CLOCK     ○ CASH MEMORY

97〜◉ 2.7GHz    ◉ 4MB

97〜○ 3.7GHz   97〜○ 6MB

☐ ENVIRONMENT INFORMATION

○ LOCATION INFORMATION

98〜◉ LOCATION A (INDOOR)

   ○ LOCATION B (OUTDOOR)

98〜○ LOCATION C (INSIDE OF VEHICLE)

   ○ LOCATION D (OUTSIDE OF VEHICLE)

○ POSITION INFORMATION

   ◉ POSITION A (BACKLIGHT)

98〜○ POSITION B (FRONT LIGHT)

   ○ POSITION C (OBLIQUE LIGHT)

○ SUBJECT

   ◉ SUBJECT A (BACKLIGHT)

98〜○ SUBJECT B (FRONT LIGHT)

98〜○ SUBJECT C (OBLIQUE LIGHT)

G3

○ PROCESSING TIME

98〜◉ SHORT (FOCUS ON SPEED)

   ○ MIDDLE

98〜○ LONG (FOCUS ON RECOGNITION)

99

[ EXECUTE ]

## INTERNATIONAL SEARCH REPORT

| International application No. |
|---|
| **PCT/JP2023/031153** |

| A. | CLASSIFICATION OF SUBJECT MATTER |
|---|---|

*G06N 20/00*(2019.01)i
FI: G06N20/00

According to International Patent Classification (IPC) or to both national classification and IPC

| B. | FIELDS SEARCHED |
|---|---|

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022/044465 A1 (PANASONIC INTELLECTUAL PROPERTY CORP. OF AMERICA) 03 March 2022 (2022-03-03) paragraphs [0046]-[0088] | 1, 3, 6-7, 9-15 |
| Y | paragraphs [0046]-[0088] | 2, 4-5 |
| A | all pages, all drawings | 8 |
| Y | BAU, David et al. Network Dissection: Quantifying Interpretability of Deep Visual Representations. ArXiv [online]. 19 April 2017, [retrieved on 19 October 2023] Retrieved from the Internet: <URL: https://arxiv.org/pdf/1704.05796.pdf> <DOI: https://doi.org/10.48550/arXiv.1704.05796> particularly, 2. Network Dissection | 2, 4-5 |
| A | all pages, all drawings | 8 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 October 2023** | **31 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**EP 4 586 154 A1**

| INTERNATIONAL SEARCH REPORT | International application No. |
|---|---|
| | **PCT/JP2023/031153** |

| C. | DOCUMENTS CONSIDERED TO BE RELEVANT | |
|---|---|---|
| Category* | Citation of document, with indication, where appropriate, of the relevant passages | Relevant to claim No. |
| Y | KOH, Pang Wei et al. Understanding Black-box Predictions via Influence Functions. ArXiv [online]. 29 December 2020, [retrieved on 19 October 2023] Retrieved from the Internet: <URL: https://arxiv.org/pdf/1703.04730.pdf> <DOI: https://doi.org/10.48550/arXiv.1703.04730> particularly, 3. Efficiently calculating influence | 2, 4-5 |
| A | all pages, all drawings | 8 |

Form PCT/ISA/210 (second sheet) (January 2015)

**INTERNATIONAL SEARCH REPORT**
Information on patent family members

International application No.

**PCT/JP2023/031153**

| Patent document cited in search report | Publication date (day/month/year) | Patent family member(s) | Publication date (day/month/year) |
|---|---|---|---|
| WO 2022/044465 A1 | 03 March 2022 | US 2023/0196142 A1 paragraphs [0063]-[0105] | |

## REFERENCES CITED IN THE DESCRIPTION

**Patent documents cited in the description**

- JP 2022014569 A